(19) Europäisches Patentamt
European Patent Office
Office européen des brevets

(11) EP 4 342 915 A1

(12) EUROPEAN PATENT APPLICATION
published in accordance with Art. 153(4) EPC

(43) Date of publication:
**27.03.2024 Bulletin 2024/13**

(21) Application number: **22804786.6**

(22) Date of filing: **20.05.2022**

(51) International Patent Classification (IPC):
***C08F 8/46*** (2006.01) ***C08F 10/00*** (2006.01)
***C09D 5/00*** (2006.01) ***C09D 5/02*** (2006.01)
***C08F 4/6592*** (2006.01) ***C08L 23/00*** (2006.01)
***C09D 123/00*** (2006.01) ***C09D 123/02*** (2006.01)
***C09D 123/26*** (2006.01) ***C09J 123/00*** (2006.01)
***C09J 123/02*** (2006.01) ***C09J 123/26*** (2006.01)
***D06M 15/227*** (2006.01) ***D06M 15/263*** (2006.01)

(52) Cooperative Patent Classification (CPC):
**C08F 4/6592; C08F 8/46; C08F 10/00; C08L 23/00; C09D 5/00; C09D 5/02; C09D 123/00; C09D 123/02; C09D 123/26; C09J 123/00; C09J 123/02; C09J 123/26; D06M 15/227; D06M 15/263**

(86) International application number:
**PCT/JP2022/021003**

(87) International publication number:
**WO 2022/244879 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.05.2021 JP 2021085074**
**20.05.2021 JP 2021085075**

(71) Applicant: **MITSUI CHEMICALS, INC.**
**Tokyo 104-0028 (JP)**

(72) Inventors:
- **TATEMATSU, Ryo**
  **Sodegaura-shi, Chiba 299-0265 (JP)**
- **SUZUKI, Terufumi**
  **Sodegaura-shi, Chiba 299-0265 (JP)**
- **ABE, Shota**
  **Tokyo 105-7122 (JP)**
- **YOSHIDA, Yuto**
  **Sodegaura-shi, Chiba 299-0265 (JP)**
- **KAWABE, Kuniaki**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

# (54) RESIN COMPOSITION, USE THEREOF, AND METHOD FOR PRODUCING SAME

(57) Objects of the present invention are to provide a resin composition excellent in heat sealability at lowered temperatures and excellent in adhesiveness to a polyolefinic resin base material and a coating agent obtained therefrom, and to provide a water dispersion composition that is a resin composition capable of providing a UD sheet excellent in mechanical properties and excellent in terms of inhibiting generation of fluff, a sizing agent for reinforced fibers containing the water dispersion composition, a bundle of the reinforced fibers, and a UD sheet containing this bundle of reinforced fibers.

The resin composition of the present invention contains at least one resin (S) selected from the group consisting of an ethylene·α-olefin copolymer (A) including a structural unit derived from an α-olefin having 3 or more carbon atoms and satisfying the following requirements (a-1) to (a-3), and an acid-modified product (B) of the ethylene·α-olefin copolymer (A): (a-1) a kinematic viscosity at 100°C is 10 to 5,000 $mm^2/s$, (a-2) a content rate of a structural unit derived from an α-olefin having 3 or more carbon atoms is 60 to 85 mol%, and (a-3) a molecular weight distribution (Mw/Mn) is 2.5 or less.

EP 4 342 915 A1

## Description

Technical Field

The present invention relates to a resin composition and use thereof and a production method.

The present invention specifically relates to a resin composition having excellent adhesiveness to a polyolefinic resin base material and a coating agent obtained therefrom, as well as to a water dispersion composition, a sizing agent for reinforced fibers containing the same, and use thereof.

Background Art

Polyolefinic resins such as a polypropylene and a polyethylene are widely used because they are inexpensive and have many excellent characteristics such as formability, chemical resistance, water resistance, electrical properties, and safety. However, the polyolefinic resins are hydrophobic materials with low polarity, thereby making it difficult to allow metallic materials such as ED steel sheets, Mg alloys, SUS, and aluminum, or polar resins such as acrylic resins, polyesteric resins, polycarbonate-based resins, and ABS resins to be adhered. Therefore, it is difficult in the present situation to stack the aforementioned metallic materials or polar resins on surfaces of polyolefinic resins, or to decorate them with inks and paints, for example.

As resins having adhesiveness to such polyolefinic resins, there have been known acid-modified polyolefin resins such as unsaturated carboxylic acid modification materials (Patent Literature 1), chlorinated polyolefin resins, acrylic adhesives, styrene-ethylene-propylene-styrene block copolymerized rubber (Patent Literature 2), styrenebutadiene-styrene block copolymerized rubber (Patent Literature 3), or a modified block copolymer in which maleic anhydride was graft polymerized to a hydrogenated product of styrene-conjugated diene-styrenic block copolymer (Patent Literature 4).

In the status quo, however, it has been difficult for polyolefin resins with low polarity to achieve sufficient adhesiveness to metallic materials and polar resins by using these materials, particularly in heat sealing at lowered temperatures of approximately 100°C.

Patent Literature 5 proposes a composition in which a low crystalline olefin polymer is compounded with hydrocarbon-based synthetic oil as a coating agent that improves adhesiveness to polyolefin resins in heat sealing at lowered temperatures. However, heat sealability·strength was not always said to be sufficient for applications requiring high strength.

Moreover, fiber-reinforced thermoplastic resin formed products, in which reinforced fibers have been composited with a thermoplastic resin, have been used in a wide range of fields because of their excellent mechanical properties and dimensional stability. In addition, a carbon fiber, which is a kind of reinforced fiber, has recently been attracting attention because of its light weight, high strength, and high rigidity.

On the other hand, polyolefin resins that are hydrocarbon-based resins are generally inexpensive and have excellent characteristics such as excellent processability and chemical resistance, hardly generating toxic gases when burned, and excellent recyclability. Therefore, the polyolefinic resins have gained attraction as matrix resins for fiber-reinforced resins. Among them, polypropylene resins that are inexpensive and have low specific gravity and relatively high heat resistance, as well as excellent characteristics such as formability and chemical resistance, have been attracting attention.

For example, Patent Literature 6 discloses a fiber-reinforced resin composition suitable for a tape winding forming method by using a laser fusion bonding method. This formed material is a fiber-reinforced resin composition containing reinforced fiber bundles treated with a fiber treatment agent containing a specific propylenic resin, and has excellent mechanical properties and handleability.

Moreover, Patent Literature 7 describes a resin composition for masterbatch containing an ethylene- $\alpha$-olefin copolymer that satisfies a specific requirement. However, this resin composition is used for masterbatch applications, and there is no description relating to a fiber-reinforced resin composition in Patent Literature 7.

Citation List

Patent Literature

[Patent Literature 1] JP3939464B
[Patent Literature 2] JP H3(1991)-160083A
[Patent Literature 3] JP H8(1996)-60121A

[Patent Literature 4] WO01/068785
[Patent Literature 5] JP5844891B
[Patent Literature 6] WO2017/183672
[Patent Literature 7] WO2019/172355

## Summary of Invention

### Technical Problem

An object of the present invention is to provide a novel resin composition and use thereof and a production method.

In more detail, the first object of the present invention is to provide a resin composition having excellent heat sealability at lowered temperatures and excellent adhesiveness to a polyolefinic resin base material, and a coating agent obtained therefrom.

Moreover, in tapes composed of conventional fiber-reinforced resin compositions, the reinforced fibers may protrude from their cut end surfaces when undergone cut processing or torn, resulting in generating fluff. The fiber-reinforced resin composition previously described in Patent Literature 6 is superior to other conventional fiber-reinforced resin compositions in terms of inhibiting generation of fluff, however, the present inventors have focused on the need to attain excellent mechanical properties and further inhibit generation of fluff.

It is to be noted that Patent Literature 7 does not describe a fiber-reinforced resin composition or a sizing agent for reinforced fibers, and did not study on fluff at all, which is a characteristic problem of fiber-reinforced resin compositions.

Therefore, the present inventors have made an attempt to achieve excellent mechanical properties and to further inhibit generation of fluff, among formed products obtained from the fiber-reinforced resin composition, particularly in a thin film article in which reinforced fibers are unidirectionally oriented (hereinafter referred to as "UD sheet"). In other words, the second object of the present invention is to provide a water dispersion composition capable of providing a UD sheet excellent in mechanical properties and excellent in terms of inhibiting generation of fluff, a sizing agent for reinforced fibers containing the composition, a reinforced fiber bundle, and a UD sheet containing this reinforced fiber bundle.

### Solution to Problem

Namely, the present invention relates to, for example, [1] to [37] below:

[1] A resin composition comprising at least one selected from the group consisting of an ethylene·$\alpha$-olefin copolymer (A) comprising a structural unit derived from an $\alpha$-olefin having 3 or more carbon atoms and satisfying the following requirements (a-1) to (a-3), and an acid-modified product (B) of the ethylene·$\alpha$-olefin copolymer (A):

(a-1) a kinematic viscosity at 100°C is 10 to 5,000 $mm^2/s$,
(a-2) a content rate of a structural unit derived from an $\alpha$-olefin having 3 or more carbon atoms is 60 to 85 mol%, and
(a-3) a molecular weight distribution (Mw/Mn) in molecular weight in terms of polystyrene as measured by gel permeation chromatography (GPC) is 2.5 or less.

[2] The resin composition according to [1], comprising 0.01 to 80% by mass of at least one resin (S) selected from the group consisting of the ethylene·$\alpha$-olefin copolymer (A) and the acid-modified product (B) and

20 to 99.99% by mass of a thermoplastic resin (C) having a weight-average molecular weight (Mw) in terms of polystyrene as measured by gel permeation chromatography (GPC) of $1 \times 10^4$ or higher,
wherein the ethylene·$\alpha$-olefin copolymer (A) further satisfies (a-4) below:
(a-4) a weight-average molecular weight (Mw) in terms of polystyrene as measured by gel permeation chromatography (GPC) is 1,000 to 30,000.

[3] The resin composition according to [1] or [2], wherein the thermoplastic resin (C) has a heat of fusion in a range of 0 to 50 J/g as measured according to JIS K 7122.
[4] The resin composition according to any one of [1] to [3], wherein the thermoplastic resin (C) is one or more selected from the group consisting of (c-1) and (c-2) below:

(c-1) a non-modified polymer comprising a constituent unit derived from an $\alpha$-olefin having 2 to 20 carbon atoms,

and
(c-2) a modified polymer comprising a constituent unit derived from an α-olefin having 2 to 20 carbon atoms, which is partly or totally graft modified with a polar group-containing monomer.

[5] The resin composition according to [4], wherein (c-2) above is (c-2') below:
(c-2') a modified polymer comprising a constituent unit derived from an α-olefin having 2 to 20 carbon atoms, which is partly or totally graft modified with a polar group-containing monomer, and comprising 0.1 to 15 parts by mass of a constituent unit derived from the polar group-containing monomer based on 100 parts by mass of the modified polymer.
[6] The resin composition according to [4] or [5], wherein (c-1) above is (c-1') below and (c-2) above is (c-2'') below:

(c-1') a propylenic polymer comprising 50 to 100 mol% of a constituent unit derived from propylene and 0 to 50 mol% of a constituent unit derived from an α-olefin having 2 to 20 carbon atoms (excluding propylene) based on 100 mol% in total of constituent units derived from propylene and the α-olefin having 2 to 20 carbon atoms, and
(c-2'') a modified polymer which is partly or totally graft modified of a propylenic polymer comprising 50 to 100 mol% of a constituent unit derived from propylene and 0 to 50 mol% of a constituent unit derived from an α-olefin having 2 to 20 carbon atoms excluding propylene, based on 100 mol% in total of constituent units derived from propylene and the α-olefin having 2 to 20 carbon atoms with a polar group-containing monomer, and comprising 0.1 to 15 parts by mass of a constituent unit derived from the polar group-containing monomer based on 100 parts by mass of the modified polymer.

[7] The resin composition according to any one of [4] to [6], wherein the polar group-containing monomer is one or more selected from an unsaturated carboxylic acid and an unsaturated carboxylic anhydride.
[8] The resin composition according to any one of [1] to [7], wherein the ethylene·α-olefin copolymer (A) has a kinematic viscosity at 100°C of 10 $mm^2/s$ or more and less than 600 $mm^2/s$.
[9] The resin composition according to any one of [1] to [7], wherein the ethylene·α-olefin copolymer (A) has a kinematic viscosity at 100°C of 600 to 3,500 $mm^2/s$.
[10] A coating agent comprising the resin composition according to any one of [1] to [9].
[11] The coating agent according to [10], which is a primer.
[12] The coating agent according to [10], which is a paint (a coating material).
[13] A hot melt adhesive comprising the resin composition according to any one of [1] to [9].
[14] The resin composition according to [1], which is a water dispersion composition comprising 0.01 to 50% by mass of at least one resin (S) selected from the group consisting of the ethylene·α-olefin copolymer (A) and the acid-modified product (B) .
[15] The resin composition according to [14], wherein the ethylene·α-olefin copolymer (A) further satisfies one or more of the following requirements (a-5) to (a-8):

(a-5) a weight-average molecular weight (Mw) in terms of polystyrene as measured by gel permeation chromatography (GPC) is 1,000 to 50,000,
(a-6) a B value represented by the following formula [1] is 1.1 or more,
[Math. 1]

$$B = \frac{P_{OE}}{2P_O \cdot P_E} \quad \cdots [1]$$

wherein $P_E$ represents a molar fraction of ethylene units included, $P_O$ represents a molar fraction of α-olefin units included, and $P_{OE}$ represents a molar fraction of ethylene·α-olefin chains of a total dyad chain,
(a-7) the amount of unsaturated bond measured by $^1$H-NMR is less than 0.5 per 1000 carbon atoms,
(a-8) no melting point is observed.

[16] The resin composition according to [14] or [15], wherein the acid-modified product (B) satisfies one or more of the following requirements (b-1) to (b-4):

(b-1) an acid number is 1 to 300 mg KOH/g,
(b-2) an apparent viscosity at 150°C is 1 to 1,000 cPs,

(b-3) a weight-average molecular weight (Mw) in terms of polystyrene as measured by gel permeation chromatography (GPC) is 1,000 to 50,000,
(b-4) a molecular weight distribution (Mw/Mn) in molecular weight in terms of polystyrene as measured by gel permeation chromatography (GPC) is 2.5 or less.

[17] The resin composition according to any one of [14] to [16], wherein the acid-modified product (B) is a copolymer modified the ethylene·α-olefin copolymer (A) with at least one compound selected from the group consisting of maleic acid and maleic anhydride.
[18] The resin composition according to any one of [14] to [17], further comprising a propylenic resin (D) and a propylenic resin (E) comprising at least a carboxylate salt bonded to the polymeric chain,

wherein the propylenic resin (D) comprises 70 to 100% by mass of a component (D-1) having a weight-average molecular weight (Mw) of 150,000 or higher and 0 to 30% by mass of a component (D-2) having a weight-average molecular weight (Mw) of lower than 150,000, based on 100% by mass in total of the components (D-1) and (D-2),
the weight-average molecular weight (Mw) of the propylenic resin (D) is higher than the weight-average molecular weight (Mw) of the propylenic resin (E),
the content of the propylenic resin (E) is 3 to 50 parts by mass based on 100 parts by mass of the propylenic resin (D), and
a ratio of the total content of the ethylene·α-olefin copolymer (A) and the acid-modified product (B) based on the total content of the ethylene·α-olefin copolymer (A), the acid-modified product (B), the propylenic resin (D), and the propylenic resin (E), is 50% by mass or more and less than 100% by mass.

[19] The resin composition according to any one of [14] to [18], wherein an α-olefin of the ethylene·α-olefin copolymer (A) is propylene.
[20] A sizing agent for reinforced fibers, comprising the resin composition according to any of [14] to [19], which is used for a membrane article.
[21] A sizing agent for reinforced fibers, comprising the resin composition according to any of [14] to [19], which is used for a thin film article in which reinforced fibers are unidirectionally oriented.
[22] The sizing agent for reinforced fibers according to [20] or [21], wherein the reinforced fibers are carbon fibers.
[23] A paint comprising the resin composition according to any of [14] to [19].
[24] A primer comprising the resin composition according to any of [14] to [19].
[25] An adhesive comprising the resin composition according to any of [14] to [19].
[26] A reinforced fiber bundle comprising:

a resin (S) in the resin composition according to [1]; and
reinforced fibers bundled together by the resin (S) in the resin composition adhered thereto,
wherein the reinforced fiber bundle is used for a thin film article in which the reinforced fibers are unidirectionally oriented.

[27] The reinforced fiber bundle according to [26], wherein the acid-modified product (B) is a copolymer modified the ethylene·α-olefin copolymer (A) with at least one compound selected from the group consisting of maleic acid and maleic anhydride.
[28] The reinforced fiber bundle according to [26] or [27], further comprising a propylenic resin (D) and a propylenic resin (E) comprising at least a carboxylic acid salt bonded to the polymeric chain,

wherein the propylenic resin (D) comprises 70 to 100% by mass of a component (D-1) having a weight-average molecular weight (Mw) of 150,000 or higher and 0 to 30% by mass of a component (D-2) having a weight-average molecular weight (Mw) of lower than 150,000, based on 100% by mass in total of the components (D-1) and (D-2),
the weight-average molecular weight (Mw) of the propylenic resin (D) is higher than the weight-average molecular weight (Mw) of the propylenic resin (E),
the content of the propylenic resin (E) is 3 to 50 parts by mass based on 100 parts by mass of the propylenic resin (D), and
a ratio of the total content of the ethylene·α-olefin copolymer (A) and the acid-modified product (B) based on the total content of the ethylene·α-olefin copolymer (A), the acid-modified product (B), the propylenic resin (D), and the propylenic resin (E), is 50% by mass or more and less than 100% by mass.

[29] The reinforced fiber bundle according to any one of [26] to [28], wherein the amount of one or more resins adhered, selected from the group consisting of the ethylene·α-olefin copolymer (A) and the acid-modified product (B) in 100% by mass of the reinforced fiber bundle, is 0.3 to 5.0% by mass.
[30] The reinforced fiber bundle according to any one of [26] to [29], wherein an α-olefin of the ethylene·α-olefin copolymer (A) is propylene.
[31] The reinforced fiber bundle according to any one of [26] to [30], wherein the reinforced fiber is a carbon fiber.
[32] A thin film article, comprising 1 to 80 parts by mass of the reinforced fiber bundle according to any of [26] to [31], and 20 to 99 parts by mass of a matrix resin (M) that is thermoplastic, based on 100 parts by mass in total of the reinforced fiber bundle and the matrix resin (M), wherein the reinforced fibers are unidirectionally oriented.
[33] The thin film article according to [32], wherein the matrix resin (M) is a propylenic resin (G).
[34] The thin film article according to [32] or [33], wherein the reinforced fiber is a carbon fiber.
[35] A method for producing the resin composition according to any of [1] to [9] and [14] to [19],
comprising a step of producing an ethylene·α-olefin copolymer (A) comprising a structural unit derived from an α-olefin having 3 or more carbon atoms and satisfying requirements (a-1) to (a-3) below, by a method (α) below:

(a-1) a kinematic viscosity at 100°C is 10 to 5,000 $mm^2/s$, (a-2) a content rate of a structural unit derived from an α-olefin having 3 or more carbon atoms is 60 to 85 mol%,
(a-3) a molecular weight distribution (Mw/Mn) in molecular weight in terms of polystyrene as measured by gel permeation chromatography (GPC) is 2.5 or less, and
a method (α): a method including a step of subjecting an α-olefin to liquid phase polymerization in the presence of a catalyst system comprising a bridged metallocene compound (P) represented by formula [II] below and at least one compound (Q) selected from the group consisting of an organometallic compound (Q-1), an organoaluminum oxy compound (Q-2), and a compound (Q-3) that reacts with the bridged metallocene compound (P) to form an ion pair.

[Chem. 1]

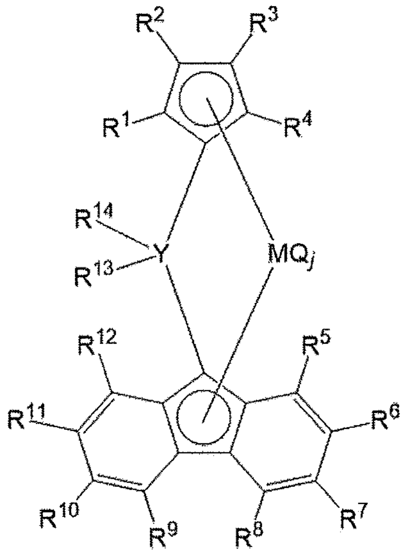

・・・[II]

wherein in formula [II], $R^1$, $R^2$, $R^3$, $R^4$, $R^5$, $R^8$, $R^9$ and $R^{12}$ are each independently a hydrogen atom, a hydrocarbon group or a silicon-containing hydrocarbon group, a plurality of adjacent groups are optionally linked together to form a ring structure, $R^6$ and $R^{11}$ are identical to each other and are each a hydrogen atom, a hydrocarbon group or a silicon-containing hydrocarbon group, $R^7$ and $R^{10}$ are identical to each other and are each a hydrogen atom, a hydrocarbon group or a silicon-containing hydrocarbon group, $R^6$ and $R^7$ are optionally bonded with a hydrocarbon having 2 to 3 carbon atoms to form a ring structure, and $R^{10}$ and $R^{11}$ are optionally bonded with a hydrocarbon having 2 to 3 carbon atoms to form a ring structure, $R^6$, $R^7$, $R^{10}$ and $R^{11}$ are not simultaneously hydrogen atoms, Y is a carbon atom or a silicon atom, $R^{13}$ and $R^{14}$ are each independently a hydrogen atom, a hydrocarbon group or a silicon-containing hydrocarbon group and are optionally linked together to form a ring structure, M is Ti, Zr or Hf, Q is independently a halogen atom, a hydrocarbon group, an anionic ligand, or a neutral ligand capable of coordinating to a lone electron pair, and j is an integer of 1 to 4.

[36] The method for producing the resin composition according to [35], wherein either or both of substituents $R^{13}$ and $R^{14}$ of the bridged metallocene compound (P) represented by the formula [II] are aryl groups.
[37] The method for producing the resin composition according to [35], wherein both substituents $R^{13}$ and $R^{14}$ of the bridged metallocene compound (P) represented by formula [II] above are aryl groups, and either one of substituents $R^2$ and $R^3$ is a saturated hydrocarbon group having 4 carbon atoms.

Advantageous Effects of Invention

According to the present invention, a novel resin composition useful for coating agents, adhesives, and sizing agents for reinforced fibers, for example, can be provided.
According to the present invention, a resin composition excellent in heat sealability at lowered temperatures and excellent in adhesiveness to a polyolefinic resin base material, and a coating agent obtained therefrom, can be provided.
Moreover, according to the present invention, there is also provided a water dispersion composition capable of providing a UD sheet excellent in mechanical properties and excellent in terms of inhibiting generation of fluff, a sizing agent for reinforced fibers, a reinforced fiber bundle, and a UD sheet containing this reinforced fiber bundle and a matrix resin. More specifically, the UD sheet is excellent in mechanical properties and significantly inhibits generation of fluff of the fiber bundle itself, and therefore, even when, for example, the UD sheet undergoes cutting processing as a formed material, or when the product formed is further cut as desired, or in a case in which the product formed is lacerated as well, generation of fluff is less likely and the appearance of the UD sheet can be favorably maintained.

Description of Embodiments

The present invention will be specifically described below.
The resin composition according to the present invention contains at least one resin (S) selected from the group consisting of an ethylene·α-olefin copolymer (A) (hereinafter also simply referred to as "copolymer (A) ") including a structural unit derived from an α-olefin having 3 or more carbon atoms and satisfying the following requirements (a-1) to (a-3), and an acid-modified product (B) of the ethylene·α-olefin copolymer (A) (hereinafter also simply referred to as "acid-modified product (B)").

(a-1) A kinematic viscosity at 100°C is 10 to 5,000 $mm^2/s$.
(a-2) The content rate of a structural unit derived from an α-olefin having 3 or more carbon atoms is 60 to 85 mol%.
(a-3) A molecular weight distribution (Mw/Mn) in molecular weight in terms of polystyrene as measured by gel permeation chromatography (GPC) is 2.5 or less.

In a first preferred aspect of the present invention, the resin composition according to the present invention is a composition containing the resin (S) and the thermoplastic resin (C) described below (resin composition 1).
Moreover, in a second preferred aspect of the present invention, the resin composition according to the present invention is a water dispersion composition containing the resin (S) (resin composition 2).
It is to be noted that the term "resin composition "used in the present invention refers to a composition containing a resin in general, and includes, for example, a composition composed of resin components and a composition containing, for example, an additive, solvent, and dispersant, in addition to the resin components.

<<Aspect 1»

The resin composition of the first preferred aspect of the present invention (hereinafter also referred to as "resin composition 1") contains at least one resin (S) selected from the group consisting of the copolymer (A) and the acid-modified product (B) described below, and the thermoplastic resin (C) described below. Such a resin composition of the first aspect is particularly suitable for applications such as coating agents.

[Resin (S)]

The resin (S) according to the present invention is a resin containing one or more of the following copolymer (A) and acid-modified product (B).

[Copolymer (A)]

The copolymer (A) is an ethylene·α-olefin copolymer including a structural unit derived from an α-olefin having

3 or more carbon atoms. The copolymer (A) satisfies the requirements (a-1) to (a-3) described below, and the copolymer (A) satisfies the requirements (a-1) to (a-4) described below in a resin composition 1.

Examples of α-olefins having 3 or more carbon atoms can include linear α-olefins such as propylene, 1-butene, 1-pentene, 1-hexene, 1-octene, 1-nonene, 1-decene, 1-undecene, 1-dodecene, 1-tricene, 1-tridecene, 1-tetradecene, 1-pentadecene, 1-hexadecene, 1-heptadecene, 1-octadecene, 1-nonadecene, and 1-eicosene, and α-olefins having branches, such as 3-methyl-1-pentene, 4-methyl-1-pentene, 8-methyl-1-nonene, 7-methyl-1-decene, 6-methyl-1-undecene, and 6,8-dimethyl-1-decene. These α-olefins can be used singly or in combinations of two or more thereof.

The α-olefin having 3 or more carbon atoms is preferably an α-olefin having 3 to 20 carbon atoms, more preferably an α-olefin having 3 to 8 carbon atoms, and particularly preferably propylene.

Requirement (a-1)

The copolymer (A) has a kinematic viscosity of 10 to 5,000 $mm^2/s$ at 100°C.

The kinematic viscosity is preferably 10 to 3,500 $mm^2/s$ and more preferably 20 to 2,500 $mm^2/s$.

In the present invention, the kinematic viscosity at 100°C is measured based on ASTM D 445.

In a case in which the kinematic viscosity of the copolymer (A) at 100°C is less than 10 $mm^2/s$, the content of low molecular weight component with high flowability and high volatility as with a softener such as process oil generally used, may increase, resulting in that the amount of bleed out or volatilization from a resin composition may increase, which is not preferable. In the case of the kinematic viscosity of the copolymer (A) at 100°C being higher than 5,000 $mm^2/s$, its flowability worsens, resulting in that processability upon mixing of the copolymer (A) with the thermoplastic resin (C) may be lowered, which is not preferred. In other words, within the aforementioned range of the kinematic viscosity of the copolymer (A) at 100°C, a resin composition excellent in bleed-out resistance and processability can be obtained, which is preferred. Moreover, a coating agent obtained from a resin composition in which the kinematic viscosity of the copolymer (A) at 100°C is within the aforementioned range, is excellent in adhesiveness upon application and has stable adhesive strength over a long period of time, which is preferred.

When the kinematic viscosity of the copolymer (A) at 100°C is within the aforementioned range, in particular within the range of 10 $mm^2/s$ or more and less than 600 $mm^2/s$, the copolymer (A) has high flowability and favorable handleability at room temperature as well. Therefore, the copolymer (A) can be easily added to the thermoplastic resin (C) in production of the resin composition described below, thereby enabling reduction of equipment costs and shortening of process time. When the kinematic viscosity of the copolymer (A) at 100°C is within a range of 600 to 3,500 $mm^2/s$, on the other hand, the coating agent obtained from the resin composition is particularly excellent in coating film strength and excellent in adhesiveness upon its application.

Requirement (a-2)

The copolymer (A) has a content rate of a structural unit derived from an α-olefin having 3 or more carbon atoms in a range of 60 to 85 mol%.

The content rate refers to a molar ratio of structural unit derived from an α-olefin having 3 or more carbon atoms to the total constituent unit contained in the copolymer (A).

The content rate of structural unit derived from an α-olefin having 3 or more carbon atoms in the copolymer (A) is preferably 63 to 83 mol% and more preferably 65 to 80 mol%.

Because the content rate of structural unit derived from an α-olefin having 3 or more carbon atoms in the copolymer (A) is as high as 60 mol%, the resin composition of the present invention is excellent in compatibility between the thermoplastic resin (C) such as a polyolefin and the copolymer (A) and causes no problems such as bleeding. In addition, the coating agent obtained from the resin composition having a content rate of structural unit derived from an α-olefin having 3 or more carbon atoms in the copolymer (A), which is as high as 60 mol%, renders excellent compatibility with a polyolefinic resin base material, a strong interaction effect at an adhesive interface, and excellent adhesiveness. Further, the content rate of structural unit derived from an α-olefin having 3 or more carbon atoms in the copolymer (A) of 85 mol% or less, results in low crystallinity and therefore the copolymer is compatible with thermoplastic resins (C) such as polyolefins.

A content rate of structural unit other than the structural unit derived from an α-olefin having 3 or more carbon atoms in the copolymer (A) is in a range of 15 to 40 mol%, preferably 17 to 37 mol%, and more preferably 20 to 35 mol%.

An aspect of the copolymer (A) can include a copolymer of ethylene and an α-olefin having 3 or more carbon atoms.

Requirement (a-3)

The copolymer (A) has a molecular weight distribution (Mw/Mn) in molecular weight in terms of polystyrene as

measured by gel permeation chromatography (GPC) of 2.5 or less.

The copolymer (A) preferably has a molecular weight distribution (Mw/Mn) of 2.3 or less and more preferably 2.1 or less.

When the molecular weight distribution (Mw/Mn) of the copolymer (A) becomes wider (larger Mw/Mn), it will contain more low molecular weight components or high molecular weight components, which may cause bleed out or lowering of mechanical properties, which is not preferable.

Requirement (a-4)

The weight-average molecular weight (Mw) in terms of polystyrene as measured by gel permeation chromatography (GPC) is 1,000 to 30,000.

The copolymer (A) preferably has a weight-average molecular weight (Mw) described above of 1,500 to 25,000 and more preferably 1,700 to 20,000.

The weight-average molecular weight smaller than that of the lower limit value results in higher mobility of the copolymer (A) in a resin composition, thereby facilitating bleed-out to occur. When the weight-average molecular weight of the copolymer (A) is higher than that of the upper limit value, a sufficient flowability improvement effect cannot be obtained, which may result in a case in which the processability is not improved or a case in which compatibility with the thermoplastic resin (C) worsens, causing lowering of mechanical properties and bleed out. In other words, within the aforementioned range of the weight-average molecular weight of the copolymer (A), a resin composition excellent in bleed-out resistance and processability, can be yielded, which is preferred. The coating agent obtained from a resin composition in which the weight-average molecular weight of the copolymer (A) is within the aforementioned range, is also excellent in adhesiveness upon its applications and has a stable adhesive strength over a long period of time, which is preferred.

The weight-average molecular weight and molecular weight distribution of the copolymer (A) can be measured by gel permeation chromatography (GPC) in which molecular weights have been calibrated by using a standard of known molecular weight (monodisperse polystyrene).

• Production method of copolymer (A)

A method for producing the copolymer (A) is not particularly limited, but includes a method using a vanadium-based catalyst composed of a vanadium compound and an organoaluminum compound, such as those described in JP H2(1990)-1163B and JP H2(1990)-7998B. Further, as a method for producing a copolymer with high polymerization activity, for example, a method using a catalytic system composed of a metallocene compounds such as zirconocene and an organoaluminum oxy compound (aluminoxane) as described in JP S61(1986)-221207A, JP H7(1995)-121969B, and JP2796376B may be employed, and this method is more preferred because the chlorine content of the resulting copolymer and the 2,1-insertion of $\alpha$-olefin can be reduced.

In the method using the vanadium-based catalyst, a larger amount of chlorine compound is used as an auxiliary catalyst than in the method using the metallocene-based catalyst, and therefore, there is a high possibility that a small amount of chlorine will remain in the resulting copolymer (A). On the other hand, the method using the metallocene-based catalyst is preferable in that the deterioration of the resin composition due to chlorine can be prevented since no chlorine remains substantially. The chlorine content is preferably 100 ppm or less, more preferably 50 ppm or less, still more preferably 20 ppm or less, and particularly preferably 5 ppm or less. The chlorine content can be quantified by various known methods. For example, there is a method in which a copolymer is placed in a sample boat and undergoes thermal decomposition in an $Ar/O_2$ stream at a set temperature of 900°C in a combustion furnace, by using ICS-1600 manufactured by Thermo Fisher Scientific Inc., and gas generated at this time is absorbed by an absorption solution to quantify the gas by ion chromatography, for example.

In particular, by using the following method, a copolymer (A) having a favorable performance balance in terms of, for example, molecular weight control, molecular weight distribution, and amorphous property, can be obtained.

The copolymer (A) of the present invention can be produced by copolymerizing ethylene with an $\alpha$-olefin having 3 to 20 carbon atoms in the presence of an olefin polymerization catalyst containing a bridged metallocene compound (P) represented by formula [I] below and at least one compound (Q) selected from the group consisting of the an organometallic compound (Q-1), an organoaluminum oxy compound (Q-2), and a compound (Q-3) that reacts with the bridged metallocene compound (P) to form an ion pair.

[Chem. 2]

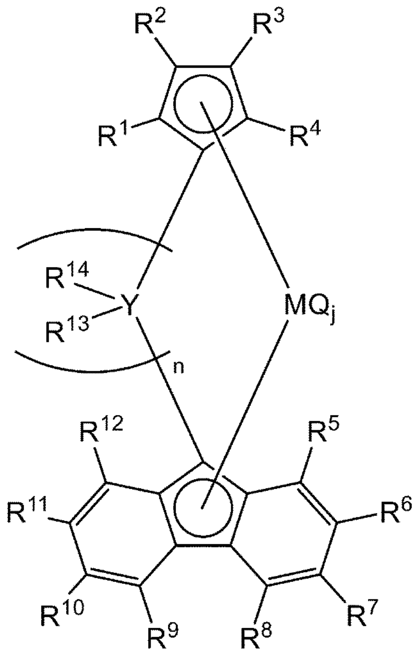

・・・[I]

[Bridged metallocene compound (P)]

The bridged metallocene compound (P) is represented by the formula [I]. Y, M, $R^1$ to $R^{14}$, Q, n and j in the formula [I] are described below.

(Y, M, $R^1$ to $R^{14}$, Q, n and j)

Y is a Group XIV atom, and includes, for example, a carbon atom, a silicon atom, a germanium atom or a tin atom, and is preferably a carbon atom or a silicon atom, more preferably a carbon atom.

M is a titanium atom, a zirconium atom or a hafnium atom, preferably a zirconium atom.

$R^1$ to $R^{12}$ are atoms or substituents selected from the group consisting of a hydrogen atom, a hydrocarbon group having 1 to 20 carbon atoms, a silicon-containing group, a nitrogen-containing group, an oxygen-containing group, a halogen atom, and a halogen-containing group, and are the same as or different from each other. Adjacent substituents in $R^1$ to $R^{12}$ are optionally bonded to each other to form a ring, or are not optionally bonded to each other.

Examples of the hydrocarbon group having 1 to 20 carbon atoms include, for example, alkyl groups having 1 to 20 carbon atoms, cyclic saturated hydrocarbon groups having 3 to 20 carbon atoms, linear unsaturated hydrocarbon groups having 2 to 20 carbon atoms, cyclic unsaturated hydrocarbon groups having 3 to 20 carbon atoms, alkylene groups having 1 to 20 carbon atoms, and arylene groups having 6 to 20 carbon atoms.

Examples of the alkyl groups having 1 to 20 carbon atoms include, for example, linear saturated hydrocarbon groups such as a methyl group, an ethyl group, a n-propyl group, an allyl group, a n-butyl group, a n-pentyl group, a n-hexyl group, a n-heptyl group, a n-octyl group, a n-nonyl group and a n-decanyl group, and branched saturated hydrocarbon groups such as an isopropyl group, an isobutyl group, a s-butyl group, a t-butyl group, a t-amyl group, a neopentyl group, a 3-methylpentyl group, a 1,1-diethylpropyl group, a 1,1-dimethylbutyl group, a 1-methyl-1-propylbutyl group, a 1,1-propylbutyl group, a 1,1-dimethyl-2-methylpropyl group, a 1-methyl-1-isopropyl-2-methylpropyl group and a cyclopropylmethyl group. The alkyl group preferably has 1 to 6 carbon atoms.

Examples of the cyclic saturated hydrocarbon groups having 3 to 20 carbon atoms include, for example, cyclic saturated hydrocarbon groups such as a cyclopropyl group, a cyclobutyl group, a cyclopentyl group, a cyclohexyl group, a cycloheptyl group, a cyclooctyl group, a norbornenyl group, a 1-adamantyl group and a 2-adamantyl group, and cyclic saturated hydrocarbon groups in which any hydrogen atom is replaced with a hydrocarbon group having 1 to 17 carbon atoms, such as a 3-methylcyclopentyl group, a 3-methylcyclohexyl group, a 4-methylcyclohexyl group, a 4-cyclohexylcyclohexyl group and a 4-phenylcyclohexyl group. The cyclic saturated hydrocarbon group preferably has 5 to 11 carbon atoms.

Examples of the linear unsaturated hydrocarbon groups having 2 to 20 carbon atoms include, for example, alkenyl groups such as an ethenyl group (vinyl group), a 1-propenyl group, a 2-propenyl group (allyl group) and a 1-methylethenyl group (isopropenyl group), and alkynyl groups such as an ethynyl group, a 1-propynyl group and a 2-propynyl group (propargyl group). The linear unsaturated hydrocarbon group preferably has 2 to 4 carbon atoms.

Examples of the cyclic unsaturated hydrocarbon groups having 3 to 20 carbon atoms include, for example, cyclic unsaturated hydrocarbon groups such as a cyclopentadienyl group, a norbornyl group, a phenyl group, a naphthyl group, an indenyl group, an azulenyl group, a phenanthryl group and an anthracenyl group, cyclic unsaturated hydrocarbon groups in which any hydrogen atom is replaced with a hydrocarbon group having 1 to 15 carbon atoms, such as a 3-methylphenyl group (m-tolyl group), a 4-methylphenyl group (p-tolyl group), a 4-ethylphenyl group, a 4-t-butylphenyl group, a 4-cyclohexylphenyl group, a biphenylyl group, a 3,4-dimethylphenyl group, a 3,5-dimethylphenyl group and a 2,4,6-trimethylphenyl group (mesityl group), and linear hydrocarbon groups or branched saturated hydrocarbon groups in which any hydrogen atom is replaced with a cyclic saturated hydrocarbon group or cyclic unsaturated hydrocarbon group having 3 to 19 carbon atoms, such as a benzyl group and a cumyl group. The cyclic unsaturated hydrocarbon group preferably has 6 to 10 carbon atoms.

Examples of the alkylene groups having 1 to 20 carbon atoms include, for example, a methylene group, an ethylene group, a dimethylmethylene group (isopropylidene group), an ethylmethylene group, a methylethylene group and a n-propylene group. The alkylene group preferably has 1 to 6 carbon atoms.

Examples of the arylene groups having 6 to 20 carbon atoms include, for example, an o-phenylene group, a m-phenylene group, a p-phenylene group and a 4,4'-biphenylylene group. The arylene group preferably has 6 to 12 carbon atoms.

Examples of the silicon-containing group include, for example, a hydrocarbon group having 1 to 20 carbon atoms in which any carbon atom is replaced with a silicon atom, for example, alkylsilyl groups such as a trimethylsilyl group, a triethylsilyl group, a t-butyldimethylsilyl group and a triisopropylsilyl group, arylsilyl groups such as a dimethylphenylsilyl group, a methyldiphenylsilyl group and a t-butyldiphenylsilyl group, and a pentamethyldisilanyl group and a trimethylsilylmethyl group. The alkylsilyl group preferably has 1 to 10 carbon atoms, and the arylsilyl group preferably has 6 to 18 carbon atoms.

Examples of the nitrogen-containing group include, for example, an amino group, and the above hydrocarbon group having 1 to 20 carbon atoms or silicon-containing group, in which a =CH- structural unit is replaced with a nitrogen atom, a $-CH_2-$ structural unit is replaced with a nitrogen atom to which such a hydrocarbon group having 1 to 20 carbon atoms is bonded, or a $-CH_3$ structural unit is replaced with a nitrogen atom or a nitrile group to which such a hydrocarbon group having 1 to 20 carbon atoms is bonded, such as a dimethylamino group, a diethylamino group, an N-morpholinyl group, a dimethylaminomethyl group, a cyano group, a pyrrolidinyl group, a piperidinyl group and a pyridinyl group, and an N-morpholinyl group and a nitro group. The nitrogen-containing group is a dimethylamino group, preferably an N-morpholinyl group.

Examples of the oxygen-containing group include, for example, a hydroxyl group, the above hydrocarbon group having 1 to 20 carbon atoms, silicon-containing group or nitrogen-containing group, in which a $-CH_2-$ structural unit is replaced with an oxygen atom or a carbonyl group or a $-CH_3$ structural unit is replaced with an oxygen atom to which such a hydrocarbon group having 1 to 20 carbon atoms is bonded, such as a methoxy group, an ethoxy group, a t-butoxy group, a phenoxy group, a trimethylsiloxy group, a methoxyethoxy group, a hydroxymethyl group, a methoxymethyl group, an ethoxymethyl group, a t-butoxymethyl group, a 1-hydroxyethyl group, a 1-methoxyethyl group, a 1-ethoxyethyl group, a 2-hydroxyethyl group, a 2-methoxyethyl group, a 2-ethoxyethyl group, a n-2-oxabutylene group, a n-2-oxapentylene group, a n-3-oxapentylene group, an aldehyde group, an acetyl group, a propionyl group, a benzoyl group, a trimethylsilylcarbonyl group, a carbamoyl group, a methylaminocarbonyl group, a carboxy group, a methoxycarbonyl group, a carboxymethyl group, an ethocarboxymethyl group, a carbamoylmethyl group, a furanyl group and a pyranyl group. The oxygen-containing group is preferably a methoxy group.

Examples of the halogen atom include, for example, Group XVII elements such as fluorine, chlorine, bromine, and iodine.

Examples of the halogen-containing group include, for example, the above hydrocarbon group having 1 to 20 carbon atoms, silicon-containing group, nitrogen-containing group or oxygen-containing group, in which any hydrogen atom is substituted with a halogen atom, such as a trifluoromethyl group, a tribromomethyl group, a pentafluoroethyl group and a pentafluorophenyl group.

Q is selected as a combination of the same or different members of a halogen atom, a hydrocarbon group having 1 to 20 carbon atoms, an anion ligand, and a neutral ligand capable of coordinating to a lone electron pair.

The details of the halogen atom and the hydrocarbon group having 1 to 20 carbon atoms are as described above. When Q is the halogen atom, Q is preferably a chlorine atom. When Q is a hydrocarbon group having 1 to 20 carbon atoms, the hydrocarbon group preferably has 1 to 7 carbon atoms.

Examples of the anion ligand can include alkoxy groups such as a methoxy group, a t-butoxy group and a phenoxy group, carboxylate groups such as acetate and benzoate, and sulfonate groups such as methylate and tosylate.

Examples of the neutral ligand capable of coordinating to a lone electron pair can include, for example, phosphororganic compounds such as trimethylphosphine, triethylphosphine, triphenylphosphine and diphenylmethylphosphine, and ether compounds such as tetrahydrofuran, diethyl ether, dioxane and 1,2-dimethoxyethane.

j is an integer of 1 to 4, and is preferably 2.

n is an integer of 1 to 4, preferably 1 or 2, further preferably 1.

$R^{13}$ and $R^{14}$ are atoms or substituents selected from the group consisting of a hydrogen atom, a hydrocarbon group having 1 to 20 carbon atoms, an aryl group, a substituted aryl group, a silicon-containing group, a nitrogen-containing group, an oxygen-containing group, a halogen atom and a halogen-containing group, and are the same as or different from each other. $R^{13}$ and $R^{14}$ may be bonded to each other to form a ring, or may not be bonded to each other.

The details of the hydrocarbon group having 1 to 20 carbon atoms, the silicon-containing group, the nitrogen-containing group, the oxygen-containing group, the halogen atom and the halogen-containing group are as described above.

Examples of the aryl group are partially overlapped with examples of the cyclic unsaturated hydrocarbon groups having 3 to 20 carbon atoms, and include, for example, aromatic compound-derived substituents such as a phenyl group, a 1-naphthyl group, a 2-naphthyl group, an anthracenyl group, a phenanthrenyl group, a tetracenyl group, a chrysenyl group, a pyrenyl group, an indenyl group, an azulenyl group, a pyrrolyl group, a pyridyl group, a furanyl group and a thiophenyl group. The aryl group is preferably a phenyl group or a 2-naphthyl group.

Examples of the aromatic compound include, for example, aromatic hydrocarbon and heterocyclic aromatic compounds, such as benzene, naphthalene, anthracene, phenanthrene, tetracene, chrysene, pyrene, indene, azulene, pyrrole, pyridine, furan and thiophene.

Examples of the substituted aryl group partially overlaps with the examples of the aforementioned cyclic unsaturated hydrocarbon groups having 3 to 20 carbon atoms, and examples of the substituted aryl groups include a group in which one or more hydrogen atoms of the aforementioned aryl group is substituted with at least one substituent selected from the group consisting of the hydrocarbon group having 1 to 20 carbon atoms, an aryl group, a silicon-containing group, a nitrogen-containing group, an oxygen-containing group, a halogen atom and a halogen-containing group, and specifically include, for example, a 3-methylphenyl group (m-tolyl group), a 4-methylphenyl group (p-tolyl group), a 3-ethylphenyl group, a 4-ethylphenyl group, a 3,4-dimethylphenyl group, a 3,5-dimethylphenyl group, a biphenylyl group, a 4-(trimethylsilyl)phenyl group, a 4-aminophenyl group, a 4-(dimethylamino)phenyl group, a 4-(diethylamino)phenyl group, a 4-morpholinylphenyl group, a 4-methoxyphenyl group, a 4-ethoxyphenyl group, a 4-phenoxyphenyl group, a 3,4-dimethoxyphenyl group, a 3,5-dimethoxyphenyl group, a 3-methyl-4-methoxyphenyl group, a 3,5-dimethyl-4-methoxyphenyl group, a 3-(trifluoromethyl)phenyl group, a 4-(trifluoromethyl)phenyl group, a 3-chlorophenyl group, a 4-chlorophenyl group, a 3-fluorophenyl group, a 4-fluorophenyl group, a 5-methylnaphthyl group, and a 2-(6-methyl)pyridyl group.

Among them, a bridged metallocene compound (P) in which either or both of $R^{13}$ and $R^{14}$ are independently aryl groups is preferred, and a bridged metallocene compound (P) in which both are independently aryl groups is more preferred.

In particular, the bridged metallocene compound (P) in which both $R^{13}$ and $R^{14}$ are independently aryl groups has high polymerization activity for copolymerization of ethylene and an $\alpha$-olefin, and this bridged metallocene compound (P) used selectively terminates polymerization by introduction of hydrogen at the molecular end, resulting in reduction of unsaturated bonds in the resulting copolymer (A). Therefore, a copolymer (A) with a high degree of saturation and excellent heat resistance can be obtained simply by carrying out a simpler hydrogen addition operation or without hydrogen addition, which is also excellent in terms of cost. Moreover, the copolymer (A) obtained from the compound (P) has a controlled molecular weight distribution due to its high random copolymerizability. Therefore, the resin composition of the present invention containing the copolymer (A) is considered to have an excellent balance between processability and bleed-out resistance at a high level.

In the bridged metallocene compound (P) represented by the formula [I], n is preferably 1. The bridged metallocene compound (hereinafter, also referred to as "bridged metallocene compound (P-1)".) is represented by the following general formula [II].

[Chem. 3]

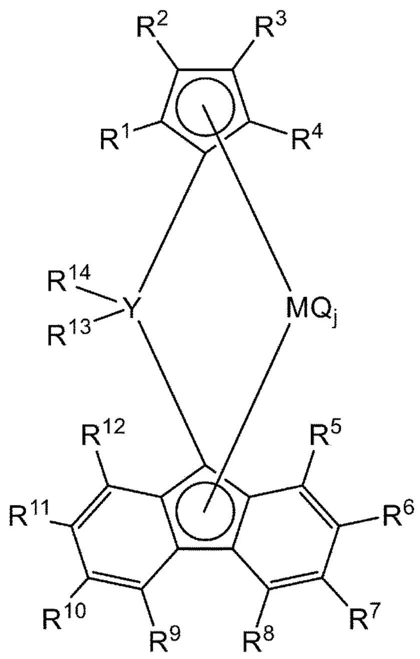

・・・[II]

In the formula [II], the definitions of Y, M, $R^1$ to $R^{14}$, Q and j are as described above.

Compared to the compounds in which n in formula [I] above is an integer of 2 to 4, the production process of the bridged metallocene compound (P-1) is simplified and the production cost is lowered, as well as this bridged metallocene compound (P-1) used has an advantage of the production cost of the copolymer (A) being lowered.

In the bridged metallocene compound (P) represented by the general formula [I] above and the bridged metallocene compound (P-1) represented by formula [II] above, M is further preferably a zirconium atom. In a case in which ethylene and one or more monomers selected from α-olefins having 3 to 20 carbon atoms in the presence of an olefin polymerization catalyst containing the aforementioned bridged metallocene compound in which M is a zirconium atom, advantages of the polymerization activity being higher than when M is a titanium atom or hafnium atom, and the production cost of the copolymer (A) being lowered, can be obtained.

Examples of the bridged metallocene compound (P) include

[dimethylmethylene($\eta^5$-cyclopentadienyl)($\eta^5$-fluorenyl)]zirconium dichloride, [dimethylmethylene($\eta^5$-cyclopentadienyl)($\eta^5$-2,7-di-t-butylfluorenyl)]zirconium dichloride, [dimethylmethylene($\eta^5$-cyclopentadienyl)($\eta^5$-3,6-dit-butylfluorenyl)]zirconium dichloride, [dimethylmethylene($\eta^5$-cyclopentadienyl)($\eta^5$-octamethyloctahydrodibenzofluorenyl)]zirconium dichloride, [dimethylmethylene($\eta^5$-cyclopentadienyl)($\eta^5$-tetramethyloctahydrodibenzofluorenyl)]zirconium dichloride,

[cyclohexylidene($\eta^5$-cyclopentadienyl)($\eta^5$-fluorenyl)]zirconium dichloride, [cyclohexylidene($\eta^5$-cyclopentadienyl)($\eta^5$-2,7-di-t-butylfluorenyl)]zirconium dichloride, [cyclohexylidene ($\eta^5$-cyclopentadienyl)($\eta^5$-3,6-di-t-butylfluorenyl)]zirconium dichloride, [cyclohexylidene($\eta^5$-cyclopentadienyl)($\eta^5$-octamethyloctahydrodibenzofluorenyl)]zirconium dichloride, [cyclohexylidene($\eta^5$-cyclopentadienyl)($\eta^5$-tetramethyloctahydrodibenzofluorenyl)]zirconium dichloride,

[diphenylmethylene($\eta^5$-cyclopentadienyl)($\eta^5$-fluorenyl)]zirconium dichloride, [diphenylmethylene($\eta^5$-cyclopentadienyl)($\eta^5$-2,7-di-t-butylfluorenyl)]zirconium dichloride, [diphenylmethylene($\eta^5$-2-methyl-4-t-butylcyclopentadienyl)($\eta^5$-2,7-di-t-butylfluorenyl)]zirconium dichloride, [diphenylmethylene ($\eta^5$-cyclopentadienyl)($\eta^5$-3,6-dit-butylfluorenyl)]zirconium dichloride, [diphenylmethylene($\eta^5$-cyclopentadienyl)($\eta^5$-octamethyloctahydrodibenzofluorenyl)]zirconium dichloride, [diphenylmethylene{$\eta^5$-(2-methyl-4-i-propylcyclopentadienyl)}($\eta^5$-octamethyloctahydrodibenzofluorenyl)]zirconium dichloride, [diphenylmethylene($\eta^5$-cyclopentadienyl)($\eta^5$-tetramethyloctahydrodibenzofluorenyl)]zirconium dichloride,

[methylphenylmethylene($\eta^5$-cyclopentadienyl)($\eta^5$-fluorenyl)]zirconium dichloride, [methylphenylmethylene($\eta^5$-cyclopentadienyl)($\eta^5$-2,7-di-t-butylfluorenyl)]zirconium dichloride, [methylphenylmethylene($\eta^5$-cyclopentadienyl)($\eta^5$-3,6-di-t-butylfluorenyl)]zirconium dichloride, [methylphenylmethylene($\eta^5$-cyclopentadienyl)($\eta^5$-octamethyloctahydrodibenzofluorenyl)]zirconium dichloride, [methylphenylmethylene($\eta^5$-cyclopentadienyl)($\eta^5$-tetramethyloctahy-

drodibenzofluorenyl)]zirconium dichloride,

[methyl(3-methylphenyl)methylene($\eta^5$-cyclopentadienyl)($\eta^5$-fluorenyl)]zirconium dichloride, [methyl(3-methylphenyl)methylene($\eta^5$-cyclopentadienyl)($\eta^5$-2,7-di-t-butylfluorenyl)]zirconium dichloride, [methyl(3-methylphenyl)methylene($\eta^5$-cyclopentadienyl)($\eta^s$-3,6-di-t-butylfluorenyl)]zirconium dichloride, [methyl(3-methylphenyl)methylene($\eta^5$-cyclopentadienyl)($\eta^5$-octamethyloctahydrodibenzofluorenyl)]zirconium dichloride, [methyl(3-methylphenyl)methylene($\eta^5$-cyclopentadienyl)($\eta^5$-tetramethyloctahydrodibenzofluorenyl)]zirconium dichloride,

[methyl(4-methylphenyl)methylene($\eta^5$-cyclopentadienyl)($\eta^5$-fluorenyl)]zirconium dichloride, [methyl(4-methylphenyl)methylene($\eta^5$-cyclopentadienyl)($\eta^5$-2,7-di-t-butylfluorenyl)]zirconium dichloride, [methyl(4-methylphenyl)methylene($\eta^5$-cyclopentadienyl)($\eta^5$-3,6-di-t-butylfluorenyl)]zirconium dichloride, [methyl(4-methylphenyl)methylene ($\eta^5$-cyclopentadienyl)($\eta^5$-octamethyloctahydrodibenzofluorenyl)]zirconium dichloride, [methyl(4-methylphenyl)methylene($\eta^5$-cyclopentadienyl)($\eta^5$-tetramethyloctahydrodibenzofluorenyl)]zirconium dichloride,

[diphenylsilylene($\eta^5$-cyclopentadienyl)($\eta^5$-fluorenyl)]zirconium dichloride, [diphenylsilylene($\eta^5$-cyclopentadienyl)($\eta^5$-2,7-di-t-butylfluorenyl)]zirconium dichloride, [diphenylsilylene($\eta^5$-cyclopentadienyl)($\eta^5$-3,6-dit-butylfluorenyl)]zirconium dichloride, [diphenylsilylene($\eta^5$-cyclopentadienyl)($\eta^5$-octamethyloctahydrodibenzofluorenyl)]zirconium dichloride, [diphenylsilylene($\eta^5$-cyclopentadienyl)($\eta^5$-tetramethyloctahydrodibenzofluorenyl)]zirconium dichloride,

[bis(3-methylphenyl)silylene($\eta^5$-cyclopentadienyl)($\eta^5$-fluorenyl)]zirconium dichloride, [bis(3-methylphenyl)silylene($\eta^5$-cyclopentadienyl)($\eta^5$-2,7-di-t-butylfluorenyl)]zirconium dichloride, [bis(3-methylphenyl)silylene($\eta^5$-cyclopentadienyl)($\eta^5$-3,6-di-t-butylfluorenyl)]zirconium dichloride, [bis(3-methylphenyl)silylene($\eta^5$-cyclopentadienyl)($\eta^5$-octamethyloctahydrodibenzofluorenyl)]zirconium dichloride, [bis(3-methylphenyl)silylene($\eta^5$-cyclopentadienyl)($\eta^5$-tetramethyloctahydrodibenzofluorenyl)]zirconium dichloride,

[dicyclohexylsilylene($\eta^5$-cyclopentadienyl)($\eta^5$-fluorenyl)]zirconium dichloride, [dicyclohexylsilylene($\eta^5$-cyclopentadienyl)($\eta^5$-2,7-di-t-butylfluorenyl)]zirconium dichloride, [dicyclohexylsilylene($\eta^5$-cyclopentadienyl)($\eta^5$-3,6-di-t-butylfluorenyl)]zirconium dichloride, [dicyclohexylsilylene($\eta^5$-cyclopentadienyl)($\eta^5$-octamethyloctahydrodibenzofluorenyl)]zirconium dichloride, [dicyclohexylsilylene($\eta^5$-cyclopentadienyl)($\eta^5$-tetramethyloctahydrodibenzofluorenyl)]zirconium dichloride,

[ethylene($\eta^5$-cyclopentadienyl)($\eta^5$-fluorenyl)]zirconium dichloride, [ethylene($\eta^5$-cyclopentadienyl)($\eta^5$-2,7-di-t-butylfluorenyl)]zirconium dichloride, [ethylene($\eta^5$-cyclopentadienyl)($\eta^s$-3,6-di-t-butylfluorenyl)]zirconium dichloride, [ethylene($\eta^5$-cyclopentadienyl)($\eta^5$-octamethyloctahydrodibenzofluorenyl)]zirconium dichloride, [ethylene($\eta^5$-cyclopentadienyl)($\eta^5$-tetramethyloctahydrodibenzofluorenyl)]zirconium dichloride,

ethylene[$\eta^5$-(3-tert-butyl-5-methylcyclopentadienyl)]($\eta^5$-fluorenyl)zirconium dichloride, ethylene[$\eta^5$-(3-tert-butyl-5-methylcyclopentadienyl)][$\eta^5$-(3,6-di-tert-butylfluorenyl)]zirconium dichloride, ethylene[$\eta^5$-(3-tert-butyl-5-methylcyclopentadienyl)][$\eta^5$-(2,7-di-tert-butylfluorenyl)]zirconium dichloride, ethylene[$\eta^5$-(3-tert-butyl-5-methylcyclopentadienyl)] (octamethyloctahydrodibenzofluorenyl) zirconium dichloride, ethylene[$\eta^5$-(3-tert-butyl-5-methylcyclopentadienyl)](benzofluorenyl)zirconium dichloride, ethylene[$\eta^5$-(3-tert-butyl-5-methylcyclopentadienyl)] (dibenzofluorenyl) zirconium dichloride, ethylene[$\eta^5$-(3-tert-butyl-5-methylcyclopentadienyl)] (octahydrodibenzofluorenyl)zirconium dichloride, ethylene[$\eta^s$-(3-tert-butyl-5-methylcyclopentadienyl)][$\eta^5$-(2,7-diphenyl-3,6-di-tert-butylfluorenyl)]zirconium dichloride, ethylene[$\eta^5$-(3-tert-butyl-5-methylcyclopentadienyl)][$\eta^5$-(2,7-dimethyl-3,6-di-tert-butylfluorenyl)]zirconium dichloride,

ethylene[$\eta^5$-(3-tert-butylcyclopentadienyl)]($\eta^5$-fluorenyl)zirconium dichloride, ethylene[$\eta^5$-(3-tert-butylcyclopentadienyl)][$\eta^5$-(3, 6-di-tert-butylfluorenyl)]zirconium dichloride, ethylene[$\eta^5$-(3-tert-butylcyclopentadienyl)][$\eta^5$-(2,7-di-tert-butylfluorenyl)]zirconium dichloride, ethylene[$\eta^5$-(3-tert-butylcyclopentadienyl)](octamethyloctahydrodibenzofluorenyl)z irconium dichloride, ethylene[$\eta^5$-(3-tert-butylcyclopentadienyl)](benzofluorenyl)zirconium dichloride, ethylene[$\eta^5$-(3-tert-butylcyclopentadienyl)](dibenzofluorenyl)zirconium dichloride, ethylene[$\eta^5$-(3-tert-butylcyclopentadienyl)] (octahydrodibenzofluorenyl)zirconium dichloride, ethylene[$\eta^5$-(3-tert-butylcyclopentadienyl)][$\eta^5$-(2,7-diphenyl-3,6-di-tert-butylfluorenyl)]zirconium dichloride, ethylene[$\eta^5$-(3-tert-butylcyclopentadienyl)][$\eta^5$-(2,7-dimethyl-3,6-di-tert-butylfluorenyl)]zirconium dichloride,

ethylene[$\eta^5$-(3-n-butylcyclopentadienyl)]($\eta^5$-fluorenyl)zirconium dichloride, ethylene[$\eta^5$-(3-n-butylcyclopentadienyl)][$\eta^5$-(3,6-di-tert-butylfluorenyl)]zirconium dichloride, ethylene[$\eta^5$-(3-n-butylcyclopentadienyl)][$\eta^5$-(2,7-di-tert-butylfluorenyl)]zirconium dichloride, ethylene[$\eta^5$-(3-n-butylcyclopentadienyl)](octamethyloctahydrodibenzofluorenyl)z irconium dichloride, ethylene[$\eta^5$-(3-n-butylcyclopentadienyl)](benzofluorenyl)zirconium dichloride, ethylene[$\eta^5$-(3-n-butylcyclopentadienyl)](dibenzofluorenyl)zirconium dichloride, ethylene[$\eta^5$-(3-n-butylcyclopentadienyl)] (octahydrodibenzofluorenyl)zirconium dichloride, ethylene[$\eta^5$-(3-n-butylcyclopentadienyl)][$\eta^5$-(2,7-diphenyl-3,6-di-tert-butylfluorenyl)]zirconium dichloride, ethylene [$\eta^5$-(3-n-butylcyclopentadienyl)][$\eta^5$-(2,7-dimethyl-3,6-di-tert-butylfluorenyl)]zirconium dichloride,

diphenylmethylene[$\eta^5$-(3-tert-butyl-5-methylcyclopentadienyl)]($\eta^5$-fluorenyl)zirconium dichloride, diphenylmethylene[$\eta^5$-(3-tert-butyl-5-methylcyclopentadienyl)][$\eta^5$-(3,6-di-tert-butylfluorenyl)]zirconium dichloride, diphenylmethylene[$\eta^5$-(3-tert-butyl-5-methylcyclopentadienyl)][$\eta^3$-(2,7-di-tert-butylfluorenyl)]zirconium dichloride, diphenylmethyl-

ene[$\eta^5$-(3-tert-butyl-5-methylcyclopentadienyl)] (octamethyloctahydrodibenzofluorenyl) zirconium dichloride, diphenylmethylene[$\eta^5$-(3-tert-butyl-5-methylcyclopentadienyl)] (benzofluorenyl)zirconium dichloride, diphenylmethylene[$\eta^5$-(3-tert-butyl-5-methylcyclopentadienyl)] (dibenzofluorenyl) zirconium dichloride, diphenylmethylene[$\eta^5$-(3-tert-butyl-5-methylcyclopentadienyl)] (octahydrodibenzofluorenyl)zirconium dichloride, diphenylmethylene[$\eta^5$-(3-tert-butyl-5-methylcyclopentadienyl)][$\eta^5$-(2,7-diphenyl-3,6-di-tert-butylfluorenyl)]zirconium dichloride, diphenylmethylene[$\eta^5$-(3-tert-butyl-5-methylcyclopentadienyl)][$\eta^5$-(2,7-dimethyl-3,6-di-tert-butylfluorenyl)]zirconium dichloride,

diphenylmethylene[$\eta^5$-(3-tert-butylcyclopentadienyl)]($\eta^5$-fluorenyl) zirconium dichloride, diphenylmethylene[$\eta^5$-(3-tert-butylcyclopentadienyl)][$\eta^5$-(3, 6-di-tert-butylfluorenyl)] zirconium dichloride, diphenylmethylene[$\eta^5$-(3-tert-butylcyclopentadienyl)][$\eta^5$-(2,7-di-tert-butylfluorenyl)] zirconium dichloride, diphenylmethylene[$\eta^5$-(3-tert-butylcyclopentadienyl)] (octamethyloctahydrodibenzofluorenyl)z irconium dichloride, diphenylmethylene[$\eta^5$-(3-tert-butylcyclopentadienyl)] (benzofluorenyl)zirconium dichloride, diphenylmethylene[$\eta^5$-(3-tert-butylcyclopentadienyl)] (dibenzofluorenyl) zirconium dichloride, diphenylmethylene[$\eta^5$-(3-tert-butylcyclopentadienyl)] (octahydrodibenzofluorenyl)zirconium dichloride, diphenylmethylene[$\eta^5$-(3-tert-butylcyclopentadienyl)][$\eta^5$-(2,7-diphenyl-3,6-di-tert-butylfluorenyl)]zirconium dichloride, diphenylmethylene[$\eta^5$-(3-tert-butylcyclopentadienyl)][$\eta^5$-(2,7-dimethyl-3,6-di-tert-butylfluorenyl)]zirconium dichloride,

diphenylmethylene[$\eta^5$-(3-n-butylcyclopentadienyl)]($\eta^5$-fluorenyl)zirconium dichloride, diphenylmethylene[$\eta^5$-(3-n-butylcyclopentadienyl)][$\eta^5$-(3,6-di-tert-butylfluorenyl)]zirconium dichloride, diphenylmethylene[$\eta^5$-(3-n-butylcyclopentadienyl)][$\eta^5$-(2,7-di-tert-butylfluorenyl)]zirconium dichloride, diphenylmethylene[$\eta^5$-(3-n-butylcyclopentadienyl)] (octamethyloctahydrodibenzofluorenyl)z irconium dichloride, diphenylmethylene[$\eta^5$-(3-n-butylcyclopentadienyl)] (benzofluorenyl)zirconium dichloride, diphenylmethylene[$\eta^5$-(3-n-butylcyclopentadienyl)] (dibenzofluorenyl) zirconium dichloride, diphenylmethylene[$\eta^5$-(3-n-butylcyclopentadienyl)] (octahydrodibenzofluorenyl)zirconium dichloride, diphenylmethylene[$\eta^5$-(3-n-butylcyclopentadienyl)][$\eta^5$-(2,7-diphenyl-3,6-di-tert-butylfluorenyl)]zirconium dichloride, diphenylmethylene[$\eta^5$-(3-n-butylcyclopentadienyl)][$\eta^5$-(2,7-dimethyl-3,6-di-tert-butylfluorenyl)]zirconium dichloride,

di(p-tolyl)methylene[$\eta^5$-(3-tert-butyl-5-methylcyclopentadienyl)]($\eta^5$-fluorenyl) zirconium dichloride, di(p-tolyl)methylene[$\eta^5$-(3-tert-butyl-5-methylcyclopentadienyl)][$\eta^5$-(3,6-di-tert-butylfluorenyl)]zirconium dichloride, di(p-tolyl)methylene[$\eta^5$-(3-tert-butyl-5-methylcyclopentadienyl)][$\eta^5$-(2,7-di-tert-butylfluorenyl)]zirconium dichloride, di(p-tolyl)methylene[$\eta^5$-(3-tert-butyl-5-methylcyclopentadienyl)] (octamethyloctahydrodibenzofluorenyl) zirconium dichloride, di(p-tolyl)methylene[$\eta^5$-(3-tert-butyl-5-methylcyclopentadienyl)] (benzofluorenyl)zirconium dichloride, di(p-tolyl)methylene[$\eta^5$-(3-tert-butyl-5-methylcyclopentadienyl)](dibenzofluorenyl)zirconium dichloride, di(p-tolyl)methylene[$\eta^5$-(3-tert-butyl-5-methylcyclopentadienyl)] (octahydrodibenzofluorenyl)zirconium dichloride, di(p-tolyl)methylene[$\eta^5$-(3-tert-butyl-5-methylcyclopentadienyl)][$\eta^5$-(2,7-diphenyl-3,6-di-tert-butylfluorenyl)]zirconium dichloride, di(p-tolyl)methylene[$\eta^5$-(3-tert-butyl-5-methylcyclopentadienyl)][$\eta^5$-(2,7-dimethyl-3,6-di-tert-butylfluorenyl)]zirconium dichloride,

di(p-tolyl)methylene[$\eta^5$-(3-tert-butylcyclopentadienyl)]($\eta^5$-fluorenyl)zirconium dichloride, di(p-tolyl)methylene[$\eta^5$-(3-tert-butylcyclopentadienyl)][$\eta^5$-(3,6-di-tert-butylfluorenyl)]zirconium dichloride, di(p-tolyl)methylene[$\eta^5$-(3-tert-butylcyclopentadienyl)][$\eta^5$-(2,7-di-tert-butylfluorenyl)]zirconium dichloride, di(p-tolyl)methylene[$\eta^5$-(3-tert-butylcyclopentadienyl)] (octamethyloctahydrodibenzofluorenyl)z irconium dichloride, di(p-tolyl)methylene[$\eta^5$-(3-tert-butylcyclopentadienyl)] (benzofluorenyl)zirconium dichloride, di(p-tolyl)methylene[$\eta^5$-(3-tert-butylcyclopentadienyl)](dibenzofluorenyl)zirconium dichloride, di(p-tolyl)methylene[$\eta^5$-(3-tert-butylcyclopentadienyl)] (octahydrodibenzofluorenyl)zirconium dichloride, di(p-tolyl)methylene[$\eta^5$-(3-tert-butylcyclopentadienyl)][$\eta^5$-(2,7-diphenyl-3,6-di-tert-butylfluorenyl)]zirconium dichloride, di(p-tolyl)methylene[$\eta^5$-(3-tert-butylcyclopentadienyl)][$\eta^5$-(2,7-dimethyl-3,6-di-tert-butylfluorenyl)]zirconium dichloride,

di(p-tolyl)methylene[$\eta^5$-(3-n-butylcyclopentadienyl)]($\eta^5$-fluorenyl)zirconium dichloride, di(p-tolyl)methylene[$\eta^5$-(3-n-butylcyclopentadienyl)][$\eta^5$-(3,6-di-tert-butylfluorenyl)]zirconium dichloride, di(p-tolyl)methylene[$\eta^5$-(3-n-butylcyclopentadienyl)][$\eta^5$-(2,7-di-tert-butylfluorenyl)]zirconium dichloride, di(p-tolyl)methylene[$\eta^5$-(3-n-butylcyclopentadienyl)] (octamethyloctahydrodibenzfluorenyl) zi rconium dichloride, di(p-tolyl)methylene[$\eta^5$-(3-n-butylcyclopentadienyl)] (benzofluorenyl)zirconium dichloride, di(p-tolyl)methylene[$\eta^5$-(3-n-butylcyclopentadienyl)] (dibenzofluorenyl) zirconium dichloride, di(p-tolyl)methylene[$\eta^5$-(3-n-butylcyclopentadienyl)] (octahydrodibenzofluorenyl)zirconium dichloride, di(p-tolyl)methylene[$\eta^5$-(3-n-butylcyclopentadienyl)](2,7-diphenyl-3,6-di-tert-butylfluorenyl)zirconium dichloride, and di(p-tolyl)methylene[$\eta^5$-(3-n-butylcyclopentadienyl)][$\eta^5$-(2,7-dimethyl-3,6-di-tert-butylfluorenyl)]zirconium dichloride.

Examples of the bridged metallocene compound (P) further include, for example, the compound in which a zirconium atom is replaced with a hafnium atom or a titanium atom, and the compound in which a chloro ligand is replaced with a methyl group. Herein, $\eta^5$-tetramethyloctahydrodibenzofluorenyl and $\eta^5$-octamethyloctahydrodibenzofluorenyl, as constituent portions of the bridged metallocene compound (P) exemplified, respectively represent a 4,4,7,7-tetramethyl-(5a,5b,11a,12,12a-$\eta^5$)-1,2,3,4,7,8,9,10-octahydrodibenzo[b,H]fluorenyl group and a 1,1,4,4,7,7,10,10-octamethyl-(5a,5b,11a,12,12a-$\eta^5$) -1,2,3,4,7,8,9,10-octahydrodibenzo[b,H]fluorenyl group.

The bridged metallocene compounds (P) may be used singly or in combinations of two or more thereof.

[Compound (Q)]

The compound (Q) according to the present invention is at least one compound selected from the group consisting of an organometallic compound (Q-1), organoaluminum oxy compound (Q-2), and a compound (Q-3) that reacts with the bridged metallocene compound (P) to form an ion pair.

The organometallic compound (Q-1) herein used is specifically any of organometallic compounds (Q-1a), (Q-1b) and (Q-1c) as described below, including Groups I and II elements and Groups XII and XIII elements in the periodic table.

(Q-1a) An organoaluminum compound represented by general formula $R^a{}_mAl(OR^b)_nH_pX_q$:

> wherein $R^a$ and $R^b$ are the same as or different from each other and each represent a hydrocarbon group having 1 to 15, preferably 1 to 4 carbon atoms, X represents a halogen atom,
> m is a number satisfying $0 < m \leq 3$, n is a number satisfying $0 \leq n < 3$, p is a number satisfying $0 \leq p < 3$, q is a number satisfying $0 \leq q < 3$, and $m + n + p + q = 3$ is satisfied.

Examples of such a compound can include tri-n-alkylaluminum such as trimethylaluminum, triethylaluminum, tri-n-butylaluminum, tri-n-hexylaluminum and tri-n-octylaluminum, tri-branched alkylaluminum such as triisopropylaluminum, triisobutylaluminum, tri-sec-butylaluminum, tri-t-butylaluminum, tri-2-methylbutylaluminum, tri-3-methylhexylaluminum and tri-2-ethylhexylaluminum, tricycloalkylaluminum such as tricyclohexylaluminum and tricyclooctylaluminum, triarylaluminum such as triphenylaluminum and tri(4-methylphenyl)aluminum, dialkylaluminum hydrides such as diisopropylaluminum hydride and diisobutylaluminum hydride, alkenylaluminum represented by general formula $(i\text{-}C_4H_9)_xAl_y(C_5H_{10})_z$ (wherein x, y and z are positive numbers and $z \leq 2x$ is satisfied.), such as isoprenylaluminum, alkylaluminum alkoxides such as isobutylaluminum methoxide and isobutylaluminum ethoxide, dialkylaluminum alkoxides such as dimethylaluminum ethoxide, diethylaluminum ethoxide and dibutylaluminumbutoxide, alkylaluminum sesquialkoxides such as ethylaluminum sesquiethoxide and butylaluminum sesquibutoxide, partially alkoxylated alkylaluminum having an average compositional ratio represented by, for example, general formula $R^a{}_{2.5}Al(OR^b)_{0.5}$, alkylaluminum aryloxides such as diethylaluminum phenoxide and diethylaluminum(2,6-di-t-butyl-4-methylphenoxide), dialkylaluminum halides such as dimethylaluminum chloride, diethylaluminum chloride, dibutylaluminum chloride, diethylaluminum bromide and diisobutylaluminum chloride, alkylaluminum sesquihalides such as ethylaluminum sesquichloride, butylaluminum sesquichloride and ethylaluminum sesquibromide, partially halogenated alkylaluminum of, for example, alkylaluminum dihalides such as ethylaluminum dichloride, dialkylaluminum hydrides such as diethylaluminum hydride and dibutylaluminum hydride, alkylaluminum dihydrides such as ethylaluminum dihydride and propylaluminum dihydride and other partially hydrogenated alkylaluminum, and partially alkoxylated and halogenated alkylaluminum such as ethylaluminum ethoxychloride, butylaluminum butoxychloride and ethylaluminum methoxybromide. A compound similar to the compound represented by the general formula $R^a{}_mAl(OR^b)_nH_pX_q$ can also be used, and examples thereof can include an organoaluminum compound in which two or more aluminum compounds are bonded via a nitrogen atom. Specific examples of such a compound can include $(C_2H_5)_2AlN(C_2H_5)Al(C_2H_5)_2$.

(Q-1b) A complex alkylated compound represented by general formula $M^2AlR^a{}_4$, including a Group I metal in the periodic table and aluminum: wherein $M^2$ represents Li, Na or K, and $R^a$ represents a hydrocarbon group having 1 to 15, preferably 1 to 4 carbon atoms.

Examples of such a compound can include $LiAl(C_2H_5)_4$ and $LiAl(C_7H_{15})_4$.

(Q-1c) A dialkyl compound represented by general formula $R^aR^bM^3$, including a Group II or Group XII metal in the periodic table: wherein $R^a$ and $R^b$ are the same as or different from each other and each represent a hydrocarbon group having 1 to 15, preferably 1 to 4 carbon atoms, and $M^3$ is Mg, Zn or Cd.

A conventionally known aluminoxane can be used as is, as the organoaluminum oxy compound (Q-2). Specific examples can include a compound represented by the following general formula [III] and a compound represented by the following general formula [IV].

[Chem. 4]

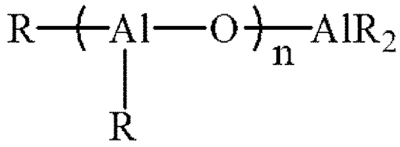

· · · [III]

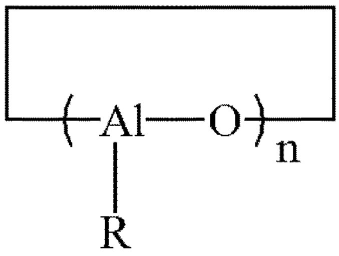

· · · [IV]

In the formulas [III] and [IV], R represents a hydrocarbon group having 1 to 10 carbon atoms, and n represents an integer of 2 or more.

In particular, methylaluminoxane is utilized in which R is a methyl group and n is 3 or more, preferably 10 or more. An organoaluminum compound is allowed to be slightly incorporated in such aluminoxane.

When copolymerization of ethylene and a C3 or higher α-olefin is performed at a high temperature in the present invention, a benzene-insoluble organoaluminum oxy compound exemplified in JP H2(1990)-78687A can also be applied. An organoaluminum oxy compound described in JP H2(1990)-167305A, or aluminoxane having two or more alkyl groups, described in JP H2(1990)-24701A and JP H3(1991)-103407A, can also be suitably utilized. The "benzene-insoluble organoaluminum oxy compound" that may be used in the present invention is a compound that usually contains 10% or less, preferably 5% or less, particularly preferably 2% or less of an Al component to be dissolved in benzene at 60°C, in terms of Al atom, and that is insoluble or hardly soluble in benzene.

Examples of the organoaluminum oxy compound (Q-2) can also include modified methylaluminoxane represented by the following general formula [V].

[Chem. 5]

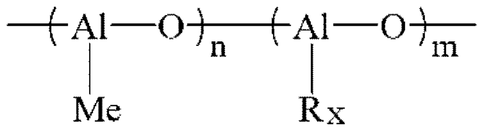

· · · [V]

In the formula [V], R represents a hydrocarbon group having 1 to 10 carbon atoms, and m and n each independently represent an integer of 2 or more.

Methylaluminoxane as one example of the organoaluminum oxy compound (Q-2) is easily available and has high polymerization activity, and thus is commonly used as an activator in polyolefin polymerization. However, methylaluminoxane has been used in solutions of aromatic hydrocarbons such as toluene or benzene, which are environmentally undesirable, because it is difficult to dissolve in saturated hydrocarbons. Therefore, a flexible body of methylaluminoxane represented by formula 4 has been recently developed and used as aluminoxane dissolved in a saturated hydrocarbon. Such modified methylaluminoxane represented by the formula [V] is prepared by using trimethylaluminum and alkylaluminum other than trimethylaluminum as described in, for example, US4960878B and US5041584B, and, for example, is prepared by using trimethylaluminum and triisobutylaluminum. Aluminoxane in which Rx is an isobutyl group is commercially available, in the form of a solution in a saturated hydrocarbon, under any of trade names MMAO and TMAO (see Tosoh Finechem Corporation, Tosoh Research & Technology Review, Vol 47, 55 (2003)).

Examples of the organoaluminum oxy compound (Q-2) can further include an organoaluminum oxy compound represented by the following general formula [VI], containing boron.

[Chem. 6]

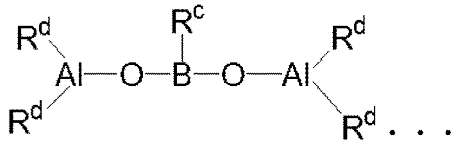

· · · [VI]

In the formula [VI], $R^c$ represents a hydrocarbon group having 1 to 10 carbon atoms. $R^d$ are the same as or different from each other, and each represent a hydrogen atom, a halogen atom or a hydrocarbon group having 1 to 10 carbon atoms.

Examples of the compound (Q-3) (hereinafter, sometimes abbreviated as "ionized ionic compound" or simply "ionic compound".) that reacts with the bridged metallocene compound (P) to form an ion pair can include Lewis acids, ionic compounds, borane compounds and carborane compounds described in, for example, JP H1(1989)-501950A, JP H1(1989)-502036A, JP H3(1991)-179005A, JP H3(1991)-179006A, JP H3(1991)-207703A, JP H3(1991)-207704A and US5321106B. Examples can further include heteropoly compounds and isopoly compounds.

The ionized ionic compound preferably used in the present invention is a boron compound represented by the following general formula [VII].

[Chem. 7]

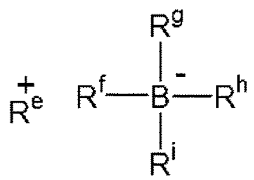

· · · [VII]

Examples of $R^{e+}$ in the formula [VII] include $H^+$, carbenium cation, oxonium cation, ammonium cation, phosphonium cation, cycloheptyltrienyl cation, and ferrocenium cation having a transition metal. $R^f$ to $R^i$ are the same as or different from each other, and are each a substituent selected from a hydrocarbon group having 1 to 20 carbon atoms, a silicon-containing group, a nitrogen-containing group, an oxygen-containing group, a halogen atom and a halogen-containing group, preferably a substituted aryl group.

Specific examples of the carbenium cation include, for example, tri-substituted carbenium cations such as triphenylcarbenium cation, tris(4-methylphenyl)carbenium cation and tris(3,5-dimethylphenyl)carbenium cation.

Specific examples of the ammonium cation include, for example, trialkyl-substituted ammonium cations such as trimethylammonium cation, triethylammonium cation, tri(n-propyl)ammonium cation, triisopropylammonium cation, tri(n-butyl)ammonium cation and triisobutylammonium cation, N,N-dialkylanilinium cations such as N,N-dimethylanilinium cation, N,N-diethylanilinium cation and N,N-2,4,6-pentamethylanilinium cation, and dialkylammonium cations such as diisopropylammonium cation and dicyclohexylammonium cation.

Specific examples of the phosphonium cation include, for example, triarylphosphonium cations such as triphenylphosphonium cation, tris(4-methylphenyl)phosphonium cation and tris(3,5-dimethylphenyl)phosphonium cation.

$R^{e+}$, among the above specific examples, is preferably, for example, the carbenium cation or the ammonium cation, particularly preferably triphenylcarbenium cation, N,N-dimethylanilinium cation or N,N-diethylanilinium cation.

Examples of the carbenium cation-containing compound as the ionized ionic compound preferably used in the present invention can include, for example, triphenylcarbenium tetraphenylborate, triphenylcarbenium tetrakis(pentafluorophenyl)borate, triphenylcarbenium tetrakis{3,5-di-(trifluoromethyl)phenyl}borate, tris(4-methylphenyl)carbenium tetrakis(pentafluorophenyl)borate and tris(3,5-dimethylphenyl)carbenium tetrakis(pentafluorophenyl)borate.

Examples of the trialkyl-substituted ammonium cation-containing compound as the ionized ionic compound preferably used in the present invention can include, for example, triethylammonium tetraphenylborate, tripropylammonium tetraphenylborate, tri(n-butyl)ammonium tetraphenylborate, trimethylammonium tetrakis(4-methylphenyl)borate, trimethylammonium tetrakis(2-methylphenyl)borate, tri(n-butyl)ammonium tetrakis(pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis{4-(trifluoromethyl)phenyl}borate, tri(n-butyl)ammonium tetrakis{3,5-di(trifluoromethyl)phenyl}borate, tri(n-butyl)ammonium tetrakis(2-methylphenyl)borate, dioctadecylmethylammonium tetraphenylborate, dioctadecylmethylammonium tetrakis(4-methylphenyl)borate, dioctadecylmethylammonium tetrakis(4-methylphenyl)borate, dioctadecylmethylammonium tetrakis(pentafluorophenyl)borate, dioctadecylmethylammonium tetrakis(2,4-dimethylphenyl)borate, dioctadecylmethylammonium tetrakis(3,5-dimethylphenyl)borate, dioctadecylmethylammonium tetrakis{4-(trifluoromethyl)phenyl}borate, dioctadecylmethylammonium tetrakis{3,5-di(trifluoromethyl)phenyl}borate and dioctadecylmethylammonium.

Examples of the N,N-dialkylanilinium cation-containing compound as the ionized ionic compound preferably used in the present invention can include, for example, N,N-dimethylanilinium tetraphenylborate, N,N-dimethylanilinium tetrakis(pentafluorophenyl)borate, N,N-dimethylanilinium tetrakis{3,5-di(trifluoromethyl)phenyl}borate, N,N-diethylanilinium tetraphenylborate, N,N-diethylanilinium tetrakis(pentafluorophenyl)borate, N,N-diethylanilinium tetrakis{3,5-di(trifluoromethyl)phenyl}borate, N,N-2,4,6-pentamethylanilinium tetraphenylborate and N,N-2,4,6-pentamethylanilinium tetrakis(pentafluorophenyl)borate.

Examples of the dialkylammonium cation-containing compound as the ionized ionic compound preferably used in the present invention can include, for example, di-n-propylammonium tetrakis(pentafluorophenyl)borate and dicyclohexylammonium tetraphenylborate.

Other ionic compounds exemplified in JP2004-51676A can also be used without any limitation.

The above ionic compounds (Q-3) can be used singly or in a mixture of two or more thereof.

Examples of the configuration of the catalyst system include the following [1] to [4].

[1] The catalyst system includes the bridged metallocene compound (P) and the compound (Q-2).

[2] The catalyst system includes the bridged metallocene compound (P), the compound (Q-1) and the compound (Q-2).

[3] The catalyst system includes the bridged metallocene compound (P), the compound (Q-1) and the compound (Q-3).

[4] The catalyst system includes the bridged metallocene compound (P), the compound (Q-2) and the compound (Q-3).

The bridged metallocene compound (P), and the compounds (Q-1) to (Q-3) may be introduced into the reaction system in any order.

[Carrier (R)]

A carrier (R) may be, if necessary, used as a constituent component of the olefin polymerization catalyst in the present invention.

The carrier (R) optionally used in the present invention is an inorganic or organic compound and is a granular or fine particulate solid. In particular, the inorganic compound is preferably porous oxide, inorganic chloride, clay, clay mineral or an ion-exchangeable layered compound.

The porous oxide used can be specifically, for example, $SiO_2$, $Al_2O_3$, MgO, ZrO, $TiO_2$, $B_2O_3$, CaO, ZnO, BaO or $ThO_2$, or a composite or a mixture including such an oxide, for example, natural or synthetic zeolite, $SiO_2$-MgO, $SiO_2$-$Al_2O_3$, $SiO_2$-$TiO_2$, $SiO_2$-$V_2O_5$, $SiO_2$-$Cr_2O_3$ or $SiO_2$-$TiO_2$-MgO. In particular, one mainly containing $SiO_2$ and/or $Al_2O_3$ is preferable. Such porous oxide differs in properties depending on the type and the production method, and the carrier preferably used in the present invention has a particle size in a range from 0.5 to 300 um, preferably 1.0 to 200 $\mu$m, a specific surface area in a range from 50 to 1000 $m^2/g$, preferably 100 to 700 $m^2/g$, and a pore volume in a range from 0.3 to 3.0 $cm^3/g$. Such a carrier is, if necessary, calcinated at 100 to 1000°C, preferably 150 to 700°C, and then used.

The inorganic chloride used is, for example, $MgCl_2$, $MgBr_2$, $MnCl_2$ or $MnBr_2$. The inorganic chloride may be used as is, or may be pulverized by a ball mill or a vibrating mill, and then used. Alternatively, the inorganic chloride, which is dissolved in a solvent such as an alcohol and then precipitated in the form of fine particles by a precipitating agent, may also be used.

Clay is usually constituted with clay mineral as a main component. The ion-exchangeable layered compound is a compound having a crystal structure in which surfaces configured are mutually stacked in parallel by a weak force with, for example, an ionic bond, and includes an exchangeable ion. Most clay mineral corresponds to such an ion-exchangeable layered compound. Such clay, clay mineral, and ion-exchangeable layered compound herein used are not limited to natural products, and can also be artificially synthesized products. Examples of the clay, clay mineral or ion-exchangeable layered compound can include clay, clay mineral, and ionic crystalline compounds having a layered crystal structure, such as a hexagonal closest packing type, an antimony type, a $CdCl_2$ type and a $CdI_2$ type. Examples of such clay and clay mineral include, for example, kaolin, bentonite, kibushi clay, gairome clay, allophane, hisingerite, pyrophyllite, micas, montmorillonites, vermiculite, chlorite rocks, palygorskite, kaolinite, nacrite, dickite and halloysite, and examples of such an ion-exchangeable layered compound include, for example, crystalline acidic salts of polyvalent metals, such as $\alpha$-$Zr(HAsO_4)_2 \cdot H_2O$, $\alpha$-$Zr(HPO_4)_2$, $\alpha$-$Zr(KPO_4)_2 \cdot 3H_2O$, $\alpha$-$Ti(HPO_4)_2$, $\alpha$-$Ti(HAsO_4)_2 \cdot H_2O$, $\alpha$-

$Sn(HPO_4)_2 \cdot H_2O$, $\gamma$-$Zr(HPO_4)_2$, $\gamma$-$Ti(HPO_4)_2$ and $\gamma$-$Ti(NH_4PO_4)_2 \cdot H_2O$. The clay and the clay mineral for use in the present invention are also preferably subjected to a chemical treatment. The chemical treatment herein used can be any treatment such as a surface treatment for removal of impurities attached to a surface, or a treatment having an effect on the crystal structure of the clay. Specific examples of the chemical treatment include an acid treatment, an alkali treatment, a salt treatment and an organic substance treatment.

The ion-exchangeable layered compound may be a layered compound where a space between layers is enlarged by exchanging an exchangeable ion in the space between layers with another large and bulky ion by means of ion exchangeability. Such a bulky ion serves as a shore supporting a layered structure, and is usually referred to as pillar. Such introduction of another substance (guest compound) into the space between layers in the layered compound is referred to as intercalation. Examples of the guest compound include, for example, cationic inorganic compounds such as $TiCl_4$ and $ZrCl_4$, metal alkoxides (R represents, for example, a hydrocarbon group) such as $Ti(OR)_4$, $Zr(OR)_4$, $PO(OR)_3$ and $B(OR)_3$, and metal hydroxide ions such as $[Al_{13}O_4(OH)_{24}]^{7+}$, $[Zr_4(OH)_{14}]^{2+}$ and $[Fe_3O(OCOCH_3)_6]^{+}$. These compounds may be used singly or in combinations of two or more thereof. In intercalation of such a compound, for example, a polymerized product obtained by hydrolytic polycondensation of a metal alkoxide (R represents, for example, a hydrocarbon group) such as $Si(OR)_4$, $Al(OR)_3$ or $Ge(OR)_4$, or a colloidal inorganic compound such as $SiO_2$ can also co-exist. Examples of the pillar include oxide generated by intercalation of the metal hydroxide ion into the space between layers and then heating and dehydration.

In particular, the clay or the clay mineral is preferable, and montmorillonite, vermiculite, pectolite, tainiolite and synthetic mica are particularly preferable.

Examples of the organic compound as the carrier (R) can include a granular or fine particulate solid having a particle size in a range from 0.5 to 300 um. Specific examples can include a (co)polymer or vinylcyclohexane generated with as a main component a C2-C14 $\alpha$-olefin such as ethylene, propylene, 1-butene or 4-methyl-1-pentene, a (co)polymer generated with styrene as a main component, and modified products thereof.

The usage method and the order of addition of each component of the polymerization catalyst can be selected without limitation. At least two or more components in the catalyst may be contacted with each other in advance.

The bridged metallocene compound (P) (hereinafter, also referred to as "component (P)".) is usually used in an amount of $10^{-9}$ to $10^{-1}$ moles, preferably $10^{-8}$ to $10^{-2}$ moles per liter of a reaction volume.

The organometallic compound (Q-1) (hereinafter also referred to as "component (Q-1)") is used in an amount so that a molar ratio of component (Q-1) to the transition metal atom (M) in the component (P) [(Q-1)/M] is usually 0.01 to 50,000 and preferably 0.05 to 10,000.

The organoaluminum oxy compound (Q-2) (hereinafter, also referred to as "component (Q-2)".) is used in an amount so that the molar ratio [(Q-2)/M] of the aluminum atom in the component (Q-2) to the transition metal atom (M) in the component (P) is usually 10 to 5,000, preferably 20 to 2,000.

The ionic compound (Q-3) (hereinafter, also referred to as "component (Q-3)") is used in an amount so that the molar ratio [(Q-3)/M] of the component (Q-3) to the transition metal atom (M) in the component (P) is usually 1 to 10,000, preferably 1 to 5,000.

The polymerization temperature is usually -50°C to 300°C, preferably 30 to 250°C, more preferably 100°C to 250°C, further preferably 130°C to 200°C. As the temperature in the polymerization temperature region in the above range is higher, a solution viscosity upon polymerization is lower and removal of heat of polymerization is also easier. The polymerization pressure is usually ordinary pressure to 10 MPa-gauge pressure (MPa-G), preferably ordinary pressure to 8 MPa-G.

The polymerization reaction can be carried out in any method of batchwise, semi-continuous, and continuous methods. Such polymerization can also be continuously carried out in two or more polymerization instruments different in reaction conditions.

The molecular weight of the resulting copolymer can be regulated by the changes in hydrogen concentration and polymerization temperature in a polymerization system. The molecular weight can also be regulated by the amount of the component (Q) used. In the case of addition of hydrogen, the amount added is properly about 0.001 to 5,000 NL per kg of the copolymer.

The polymerization solvent for use in a liquid phase polymerization method is usually an inert hydrocarbon solvent, and is preferably a saturated hydrocarbon having a boiling point of 50°C to 200°C under ordinary pressure. Specific examples of the polymerization solvent include aliphatic hydrocarbons such as propane, butane, pentane, hexane, heptane, octane, decane, dodecane and kerosene oil, and alicyclic hydrocarbons such as cyclopentane, cyclohexane and methylcyclopentane, and particularly preferably include hexane, heptane, octane, decane and cyclohexane. The $\alpha$-olefin to be polymerized, by itself, can also be used as the polymerization solvent. While an aromatic hydrocarbon such as benzene, toluene or xylene, or a halogenated hydrocarbon such as ethylene chloride, chlorobenzene or dichloromethane can also be used as the polymerization solvent, use thereof is not preferable in terms of a reduction in load on the environment and in terms of minimization of the influence on human health.

The kinematic viscosity of the olefin polymer at 100°C depends on the molecular weight of the polymer. In other

words, a high molecular weight leads to a high viscosity and a low molecular weight leads to a low viscosity, and thus the kinematic viscosity at 100°C is adjusted by the above molecular weight adjustment. The molecular weight distribution (Mw/Mn) of the resulting polymer can be adjusted by removing a low molecular weight component of a polymer obtained by a conventionally known method such as vacuum distillation. The polymer obtained may be further subjected to hydrogen addition (hereinafter, also referred to as hydrogenation) by a conventionally known method. If the number of double bonds in the polymer obtained by such hydrogenation is reduced, oxidation stability and heat resistance are enhanced.

The obtained copolymers (A) may be used singly or in combinations of two or more copolymers of different molecular weights or of different monomer compositions.

[Modified body]

The resin (S) according to the present invention may be a non-modified product in which the copolymer (A) described above is not modified or it may be a modified body to which any polar group is added by graft modification. As vinyl compounds having a polar group used for the modification, a vinyl compound having an oxygen-containing group such as acid, acid anhydride, ester, alcohol, epoxy, or ether, a vinyl compound having a nitrogen-containing group such as isocyanate or amide, or a vinyl compound having a silicon-containing group such as vinylsilane, for example, can be used. The modified body may also be a modified body partially chlorinated by using a method such as that described in JP2020-97743A.

Among these, a vinyl compound having an oxygen-containing group is preferable, and specifically, an unsaturated epoxy monomer, an unsaturated carboxylic acid, and a derivative thereof are preferable.

Examples of the unsaturated epoxy monomers include, for example, an unsaturated glycidyl ether and an unsaturated glycidyl ester (for example, glycidyl methacrylate). Examples of the unsaturated carboxylic acids include, for example, acrylic acid, maleic acid, fumaric acid, tetrahydrophthalic acid, itaconic acid, citraconic acid, crotonic acid, isocrotonic acid, nadic acid TM (endosis-bicyclo[2,2,1]hept-5-ene-2,3-dicarboxylic acid).

Examples of the derivative of the unsaturated carboxylic acid can include an acid halide compound, an amide compound, an imide compound, an acid anhydride, and an ester compound of the unsaturated carboxylic acid. Specific examples thereof include, for example, malonyl chloride, maleimide, maleic anhydride, citraconic anhydride, monomethyl maleate, dimethyl maleate, and glycidyl maleate.

Among these, the unsaturated dicarboxylic acids and acid anhydrides thereof are more preferred, and maleic acid, nadic acid™ and acid anhydrides thereof, are particularly preferably used. Incidentally, a position in which the vinyl compound or the derivative thereof having a polar group described above is grafted into the copolymer (A) is not particularly limited, and an unsaturated carboxylic acid or a derivative thereof may be bonded to any carbon atom of this copolymer (A).

A modified body is preferably the acid-modified product (B) of the copolymer (A) described above.

In the resin composition 1 of the present invention, when the thermoplastic resin (C) described below has a polar group, use of the modified body imparted with the polar group, preferably the acid-modified product (B), enables favorable compatibility between the resin (S) and the thermoplastic resin (C) to be obtained and inhibition of lowering of mechanical properties and bleed out of the resin composition.

Such modified bodies described above can be prepared by various conventionally known methods, for example, the following methods:

(1) A method including mixing a non-modified copolymer (A) in, for example, an extruder or a batch type reactor, and adding a vinyl compound having a polar group or a derivative thereof to undergo graft copolymerization.
(2) A method including dissolving a non-modified copolymer (A) in a solvent, and adding a vinyl compound having a polar group or a derivative thereof to undergo graft copolymerization.

In any of the above methods, in order to efficiently perform graft copolymerization of the graft monomer of the vinyl compound having the polar group or a derivative thereof, the graft reaction is preferably performed in the presence of a radical initiator.

Examples of the radical initiator include organic peroxides and azo compounds. Examples of the organic peroxides include, for example, benzoyl peroxide, dichlorobenzoyl peroxide, and dicumyl peroxide, and examples of the azo compounds include, for example, azobisisobutyronitrile and dimethylazoisobutyrate.

As such a radical initiator, specifically, dialkyl peroxides such as dicumyl peroxide, di-tert-butyl peroxide, 2,5-dimethyl-2,5-di(tert-butylperoxy)hexyne-3, 2,5-dimethyl-2,5-di(tert-butylperoxy)hexane, and 1,4-bis(tertbutylperoxyisopropyl)benzene are preferably used.

These radical initiators are usually used in an amount of 0.001 to 1 part by mass, preferably 0.003 to 0.5 parts by mass, and more preferably 0.05 to 0.3 parts by mass, based on 100 parts by mass of the copolymer (A).

The reaction temperature in the graft reaction using a radical initiator as described above or the graft reaction performed without using a radical initiator is usually set in the range of 60 to 350°C, and preferably 120 to 300°C.

The graft amount of the vinyl compound having a polar group in the modified copolymer thus obtained is usually 0.01 to 15% by mass, and preferably 0.05 to 10% by mass when the mass of the modified copolymer is taken as 100% by mass.

Content of resin (S)

In the resin composition 1 of the present invention, the content of at least one resin (S) selected from the group consisting of the copolymer (A) and the acid-modified product (B) in the entire resin composition, is 0.01 to 80% by mass, preferably 1 to 60% by mass, and more preferably 3 to 40% by mass.

The content of resin (S) in the entire resin composition 1 being less than the lower limit value described above may cause problems such as poor processability. The content of resin (S) in the entire resin composition exceeding the upper limit value described above, on the other hand, may impair characteristics of thermoplastic resin (C) described below and may not yield a resin composition excellent in, for example, mechanical properties, bleed-out resistance, and chemical resistance. In other words, within the aforementioned range of the content of resin (S), a resin composition 1 excellent in bleed-out resistance and processability can be obtained, which is preferred.

The coating agent obtained from a resin composition in which the content of resin (S) is within the aforementioned range, has particularly favorable coating film strength and particularly favorable adhesiveness as well as stable adhesive strength for a long period of time, which is preferable.

[Thermoplastic resin (C)]

The thermoplastic resin (C) used in the resin composition 1 of the present invention is not particularly limited, and examples thereof include, for example, polyolefins such as a low density polyethylene, a medium density polyethylene, a high density polyethylene, a linear low density polyethylene, a polypropylene, a polybutene, a cyclic olefin polymer, an ethylene-propylene copolymer, and a cyclic olefin copolymer; styrenic polymers and hydrogen addition products thereof, such as a polystyrene, an acrylonitrile-styrene copolymer, an acrylonitrile-butadienestyrene copolymer, a styrene-butadiene copolymer, and a styrene-isoprene copolymer; a polyvinyl chloride, a polyvinylidene chloride; vinyl carboxylic acid polymers and vinyl carboxylic ester polymers, such as a polyacrylic acid, a polymethacrylic acid, a polymethyl acrylate, a polymethyl methacrylate, and a polyethyl methacrylate; an ethylene-methacrylic acid copolymer, an ethylene-methacrylic ester copolymer, an ethylene-vinyl acetate copolymer, an ethylene-vinyl alcohol copolymer; a polycarbonate, a polymethacrylate; polyesters such as a polyethylene terephthalate and a polybutylene terephthalate; polyamides such as nylon 6, nylon 11, nylon 12, nylon 46, nylon 66, nylon MXD6, wholly aromatic polyamides, and semi-aromatic polyamides; polyacetals; and blends of these resins.

Among these thermoplastic resins, the polyolefin is preferred, and examples thereof include, for example, polymers of $\alpha$-olefins and copolymers of two or more $\alpha$-olefins. Examples of the $\alpha$-olefin include an $\alpha$-olefin having 2 to 20 carbon atoms, and include, for example, ethylene, propylene, 1-butene, octene, and 4-methyl-1-pentene. Namely, examples of the thermoplastic resin (C) include a polymer including a constituent unit derived from an $\alpha$-olefin having 2 to 20 carbon atoms.

Furthermore, the thermoplastic resin (C) may further have a constituent unit derived from an unsaturated monomer other than an $\alpha$-olefin (hereinafter referred to as "other unsaturated monomer") in a range of 10 mol% or less, when a content rate of a constituent unit derived from the $\alpha$-olefin is 100 mol%. Examples of other unsaturated monomer herein include, for example, conjugated polyenes such as butadiene and isoprene and non-conjugated polyenes, such as 1,4-hexadiene, 1,7-octadiene, dicyclopentadiene, 5-ethylidene-2-norbornene, 5-vinyl-2-norbornene, 5-methylene-2-norbornene, and 2,5-norbornadiene. When the thermoplastic resin (C) is a copolymer including constituent units derived from two or more $\alpha$-olefins, it may be a random copolymer or a block copolymer.

Furthermore, the above thermoplastic resin (C) may be, for example, a modified olefin polymer obtained by grafting an unsaturated monomer containing, for example, a hydroxyl group, a carboxylic anhydride, and -COOX (X: H, M) wherein H is hydrogen and M is cations derived from an alkali metal, an alkaline earth metal and amines, onto a polymer or a copolymer including a constituent unit derived from the above $\alpha$-olefin, or a halogenated olefin polymer obtained by further halogenating the polymer or the copolymer including a constituent unit derived from the aforementioned $\alpha$-olefin.

Among such thermoplastic resins (C), examples of those preferably used in the present invention include one or more selected from the group consisting of the following (c-1) and (c-2) :

(c-1) A non-modified polymer including a constituent unit derived from an $\alpha$-olefin having 2 to 20 carbon atoms (hereinafter referred to as "polymer (c-1)").

(c-2) A modified polymer comprising a constituent unit derived from an α-olefin having 2 to 20 carbon atoms, which is partly or totally graft modified with a polar group-containing monomer (hereinafter referred to as "polymer (c-2)").

The weight-average molecular weight of thermoplastic resin (C) used in the present invention, as measured by the GPC method in terms of polystyrene, is $1 \times 10^4$ or higher, preferably $1 \times 10^4$ or higher and $1000 \times 10^4$ or lower, more preferably $2 \times 10^4$ or higher and $100 \times 10^4$ or lower, and further preferably $3 \times 10^4$ or higher and $50 \times 10^4$ or lower. The weight-average molecular weight being $1 \times 10^4$ or higher can yield a resin composition excellent in compatibility with the copolymer (A). The weight-average molecular weight being $1 \times 10^4$ or higher enables sufficiently high coating film strength, resulting in favorable adhesive strength, which is preferred. The weight-average molecular weight of $1,000 \times 10^4$ or lower, on the other hand, renders favorable stability of varnish condition and hardly causes solidification and precipitation, which is preferred. In particular, the weight-average molecular weight of thermoplastic resin (C) being a lower value (for example, $50 \times 10^4$ or lower), is likely to particularly render excellent adhesion performance.

In the present invention, a heat of fusion of thermoplastic resin (C) is not particularly limited, but for the coating agent obtained from the resin composition of the present invention, a thermoplastic resin (C) with a certain degree of low crystallinity is preferred. For example, the heat of fusion as measured in accordance with JIS K 7122 is 0 J/g or more and 50 J/g or less, and the lower limit thereof is preferably 3 J/g, more preferably 5 J/g, and the upper limit is preferably 40 J/g or less and more preferably 30 J/g or less. The heat of fusion of 50 J/g or less renders favorable stability of a condition in which the coating agent of the present invention is dissolved, i.e., stability in a varnish condition and hardly causes solidification and precipitation, which is preferred. The lower limit of heat of fusion is, on the other hand, preferably higher in terms of coating film strength and tack resistance.

The heat of fusion herein used can be determined by differential scanning calorimetry (DSC measurement) in accordance with JIS K 7122, and specifically, it is calculated from a peak area of the thermogram obtained in a course of temperature rise at 10°C/min. Upon its measurement in the present invention, for the purpose of canceling a thermal history before measurement, a sample to be measured is raised to a temperature of a melting point + 20°C at a rate of 10°C/min, held at that temperature for 3 minutes, and then lowered to room temperature at a rate of 10°C/min before the measurement of the heat of fusion, and then the heat of fusion is measured.

• Polymer (c-1)

Examples of the polymer (c-1) includes a polymer including a structural unit derived from the above α-olefin having 2 to 20 carbon atoms. Namely, in the present invention, the polymer including a constituent unit derived from an α-olefin having 2 to 20 carbon atoms, can be used as is as the polymer (c-1) without any modification treatment such as graft modification. In this sense, the polymer (c-1) can also be called an "non-modified polymer (c-1)" and is distinguished from the "modified olefinic polymer (c-2)" described below.

In a suitable aspect of the present invention, the polymer (c-1) is a propylenic polymer including 50 to 100 mol% of a constituent unit derived from propylene and 50 to 0 mol% of a constituent unit derived from an α-olefin having 2 to 20 carbon atoms excluding propylene, based on 100 mol% in total of constituent units derived from an α-olefin having 2 to 20 carbon atoms. Here, suitable examples of the "a-olefin having 2 to 20 carbon atoms excluding propylene" include, for example, 1-butene and octene. A propylenic polymer is more preferred that includes, based on 100 mol% in total of constituent units derived from an α-olefin having 2 to 20 carbon atoms, a constituent unit derived from propylene in an amount of preferably 55 to 90 mol%, more preferably 60 to 85 mol%, and further preferably 60 to 80 mol%, and a constituent unit derived from an α-olefin having 2 to 20 carbon atoms excluding propylene in an amount of preferably 45 to 10 mol%, more preferably 40 to 15 mol%, and further preferably 40 to 20%.

In the present invention, such polymers (c-1) may be used singly or in combinations of two or more thereof.

Moreover, methods for producing the thermoplastic resin (C), including a method for producing such polymers (c-1) used in the present invention, as a whole, are not limited and can be obtained by conventionally known methods, for example, according to the method described in Patent Literature 1 and WO2004/87775 pamphlet. Here, taking a propylene·1-butene copolymer suitably used as the polymer (c-1) in the present invention as an example, such a propylene·1-butene copolymer can be obtained, for example, by copolymerizing propylene and 1-butene in the presence of a metallocene-based catalyst composed of a suitable metallocene compound such as rac-dimethylsilylene-bis{1-(2-methyl-4-phenylindenyl)}zirconium dichloride, an organoaluminum oxy compound such as aluminoxane, and an organoaluminum compound such as tributylaluminum used, if necessary.

• Modified polymer (c-2)

Examples the modified polymer (c-2) include a modified polymer obtained by partial or total graft modification of a polymer including a constituent unit derived from an α-olefin having 2 to 20 carbon atoms, with a polar group-containing monomer. It is also a polymer including a constituent unit derived from the polar group-containing monomer

in an amount of preferably 0.1 to 15 parts by mass and more preferably 0.5 to 10 parts by mass, based on 100 parts by mass of the modified polymer. For example, in the present invention, a polymer (c-1a) including a constituent unit derived from an $\alpha$-olefin having 2 to 20 carbon atoms is once graft modified with a polar group-containing monomer and the graft-modified polymer (c-2m) thus obtained itself can be used as the modified polymer (c-2) in the thermoplastic resin (C). Here, examples of the polymer (c-1a) include those similar to the aforementioned polymer (c-1).

The modified polymer (c-2) may also be such that the graft-modified product of (c-1a) as described above, i.e., the graft-modified polymer (c-2m) and the unmodified (c-1a) are mixed and then used in the form of a modified polymer composition. In such a case, the (c-1a) used for graft modification and the (c-1a) used as being unmodified may be the same or different. This case corresponds to an example obtained by partial graft modification of a polymer including a constituent unit derived from an $\alpha$-olefin having 2 to 20 carbon atoms with a polar group-containing monomer.

The weight-average molecular weight of the polymer (c-1a) which can be used in the above is $1 \times 10^4$ or higher in terms of polystyrene, preferably $1 \times 10^4$ or higher and $1,000 \times 10^4$ or lower, more preferably $2 \times 10^4$ or higher and $100 \times 10^4$ or lower, and further preferably $3 \times 10^4$ or higher and $50 \times 10^4$ or lower. The heat of fusion as measured in accordance with JISK7122 is not particularly limited, but is between 0 J/g or more and 50 J/g or less, and the lower limit is preferably 3 J/g, more preferably 5 J/g, and the upper limit is preferably 40 J/g or less, and more preferably 30 J/g or less. The modified polymer (c-2) used in the present invention preferably includes a constituent unit derived from a polar group-containing monomer in an amount of 0.1 to 15 parts by mass based on 100 parts by mass in total of the graft-modified polymer (c-2m) and the unmodified (c-1a) optionally used.

In the present invention, the polymer (c-1a) undergoes graft copolymerization with a polar group-containing monomer in order to obtain a graft-modified polymer (c-2m) that constitutes a modified polymer (c-2). Examples of the polar group-containing monomer can include, for example, a hydroxyl group-containing ethylenically unsaturated compound, an amino-group-containing ethylenically unsaturated compound, an epoxy group-containing ethylenically unsaturated compound, an unsaturated carboxylic acid and an anhydride thereof and a derivative thereof, a vinylester compound, and vinyl chloride, with the unsaturated carboxylic acid and anhydride thereof being preferred though.

Examples of the hydroxyl group-containing ethylenically unsaturated compound can include, for example, hydroxyl group-containing (meth)acrylic esters, such as hydroxyethyl (meth)acrylate, 2-hydroxypropyl (meth)acrylate, 3-hydroxypropyl (meth)acrylate, 2-hydroxy-3-phenoxy-propyl (meth)acrylate, 3-chloro-2-hydroxypropyl (meth)acrylate, glycerin mono(meth)acrylate, pentaerythritol mono(meth)acrylate, trimethylolpropane mono(meth)acrylate, tetramethylolethane mono(meth)acrylate, butanediol mono(meth)acrylate, polyethylene glycol mono(meth)acrylate, and 2-(6-hydrohexanoyloxy)ethyl acrylate; 10-undecen-1-ol, 1-octen-3-ol, 2-methanol norbornene, hydroxystyrene, N-methylolacrylamide, 2-(meth)acryloyloxyethyl acid phosphate, a glycerin monoallyl ether, an allyl alcohol, an allyloxyethanol, 2-butene 1,4-diol, and a glycerin mono alcohol.

Examples of the amino group-containing ethylenically unsaturated compound can include vinyl-based monomers having at least one type of amino group or substituted amino group represented by the following formula.

$$-NR_1R_2-$$

wherein in the formula, $R_1$ is a hydrogen atom, a methyl group or an ethyl group, $R_2$ is a hydrogen atom, an alkyl group having 1 to 12 carbon atoms, preferably an alkyl group having 1 to 8 carbon atoms, and a cycloalkyl group having 8 to 12 carbon atoms, preferably 6 to 9. The above alkyl group and cycloalkyl group may further have substituents.

Examples of such amino group-containing ethylenically unsaturated compounds can include, for example, alkyl ester-based derivatives of acrylic acid or methacrylic acid such as, aminomethyl (meth)acrylate, propylaminoethyl (meth)acrylate, dimethylaminoethyl methacrylate, aminopropyl (meth)acrylate, phenyl aminomethyl methacrylate and cyclohexylaminoethyl methacrylate; vinylamine-based derivatives such as N-vinyldiethylamine and N-acetylvinylamine; acrylamide-based derivatives such as acrylamide, methacrylamide, N-methylacrylamide, N,N-dimethylacrylamide, and N,N-dimethylaminopropylacrylamide, and imides such as p-aminohexylsuccinimide and 2-aminoethylsuccinimide.

As the epoxy group-containing ethylenically unsaturated compound, a monomer having at least one polymerizable unsaturated bond group and at least one epoxy group in one molecule is used.

Examples of such epoxy group-containing ethylenically unsaturated compounds can include, for example, glycidyl esters of unsaturated carboxylic acids, such as glycidyl acrylate and glycidyl methacrylate, or monoglycidyl esters of unsaturated dicarboxylic acids wherein the alkyl group has 1 to 12 carbon atoms in the case of monoglycidyl esters, such as maleic acid, fumaric acid, crotonic acid, tetrahydrophthalic acid, itaconic acid, and citraconic acid, endo-cis-bicyclo[2,2,1]hept-5-ene-2,3-dicarboxylic acid (nadic acid™), and endo-cis-bicyclo[2,2,1]hept-5-ene-2-methyl-2,3-dicarboxylic acid (methyl nadic acid™), an alkyl glycidyl ester of p-styrenecarboxylic acid; an allyl glycidyl ether, 2-methyl allyl glycidyl ether, styrene-p-glycidyl ether, 3,4-epoxy-1-butene, 3,4-epoxy-3-methyl-1-butene, 3,4-epoxy-1-pentene, 3,4-epoxy-3-methyl-1-pentene, 5,6-epoxy-1-hexene, and vinylcyclohexene monoxide.

Examples of the unsaturated carboxylic acid can include, for example, unsaturated carboxylic acids such as acrylic acid, methacrylic acid, maleic acid, fumaric acid, tetrahydrophthalic acid, itaconic acid, citraconic acid, crotonic

acid, isocrotonic acid, norbornene dicarboxylic acid, and bicyclo[2,2,1]hept-2-ene-5,6-dicarboxylic acid, or derivatives thereof (for example, acid anhydrides, acid halides, amides, imides, and esters).

Examples of the derivatives of unsaturated carboxylic acids can include, for example, malonyl chloride, malenylimide, maleic anhydride, itaconic anhydride, citraconic anhydride, tetrahydrophthalic anhydride, bicyclo[2,2,1]hept-2-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2,2,1]hept-2-ene-5,6-dicarboxylate, hydroxyethyl (meth)acrylate, hydroxypropyl (meth)acrylate, glycidyl (meth)acrylate, aminoethyl methacrylate and aminopropyl methacrylate.

Examples of the vinyl ester compound can include, for example, vinyl acetate, vinyl propionate, vinyl n-butyrate, vinyl isobutyrate, vinyl pivalate, vinyl caproate, vinyl versatate, vinyl laurate, vinyl stearate, vinyl benzoate, vinyl salicylate, and vinyl cyclohexanecarboxylate.

These polar group-containing monomers can be used singly or in combinations thereof.

When the graft-modified polymer (c-2m) is used as is as a modified polymer (c-2), the aforementioned polar group-containing monomer preferably undergoes graft copolymerization so that the amount thereof is 0.1 to 15 parts by mass and preferably 0.5 to 10 parts by mass, based on 100 parts by mass of the graft-modified polymer (c-2m).

Content rates of these polar group-containing monomers can be determined by each feed ratio when a polymer and the polar group-containing monomer are reacted in the presence of, for example, a radical initiator, and by known means such as $^1$H NMR measurement. Specific NMR measurement conditions can exemplify the following conditions:

For $^1$H NMR measurements, an ECX400 nuclear magnetic resonance spectrometer manufactured by JEOL Ltd., was used under the conditions of deuterated ortho-dichlorobenzene as a solvent, sample concentration of 20 mg/0.6 mL, measurement temperature of 120°C, observed nucleus of $^1$H (400 MHz), sequence of single pulse, pulse width of 5.12 psec (45° pulse), repetition time of 7.0 seconds, and the cumulative number of 500 or more. A peak of hydrogen of tetramethylsilane is set to 0 ppm as a reference chemical shift, but the same results can be obtained, for example, by setting a peak derived from the residual hydrogen of deuterated ortho-dichlorobenzene to 7.10 ppm as a reference value for the chemical shift. Peaks such as $^1$H, derived from functional group-containing compound groups can be assigned by ordinary methods.

When monomers having acidic functional groups, such as the aforementioned unsaturated carboxylic acid and its anhydride are used as the polar group-containing monomers, for example, an acid number can be used as a guide to the amount of functional group introduced into the modified polymer (c-2). Here, the following methods can be used to measure the acid number.

<Acid number measurement method>

The basic operation is in accordance with JIS K-2501-2003.

Approximately 10 g of modified polymer was accurately weighed and charged into a 200-mL tall beaker. Thereto were added 150mL of a mixed solvent composed of xylene and dimethylformamide mixed at 1:1 (volume ratio) as a titrant solvent. A sample was added with a few drops of a 1 w/v% phenolphthalein ethanol solution (manufactured by Wako Pure Chemical Industries, Ltd.) as an indicator, and heated to a liquid temperature of 80°C to dissolve the sample. After the temperature of the solution has become constant at 80°C, the sample was titrated by using a 2-propanol solution with 0.1 mol/L potassium hydroxide (manufactured by Wako Pure Chemical Industries, Ltd.) to obtain the acid number from volume of titration.

The calculation formula is

$$\text{Acid number (mgKOH/g)} = (\text{EP1}-\text{BL1}) \times \text{FA1} \times \text{C1}/\text{SIZE}$$

Here, in the above formula, EP1 represents titration volume (mL), BL1 a blank value (mL), FA1 a factor of titrant (1.00), C1 a value in terms of concentration (5.611 mg/mL: equivalent to 0.1mol/L potassium hydroxide in 1mL KOH) and SIZE sampled volume (g), respectively. This measurement is repeated three times and an average value is taken as the acid number.

The acid number of the modified polymer (c-2) is desirably 0.1 to 100 mg KOH/g, more preferably 0.5 to 60 mg KOH/g, and further preferably 0.5 to 30 mg KOH/g. When a modified polymer composition obtained by having mixed the graft-modified polymer (c-2m) and the unmodified (c-1a), is used as the modified polymer (c-2), the modified polymer composition as a whole preferably has an acid number as described above.

When maleic anhydride is used as the aforementioned polar group-containing monomer, the graft amount can also be determined based on absorption of a carbonyl group of maleic anhydride detected around 1790 $cm^{-1}$ by using an infrared spectrophotometer.

Examples of methods of graft copolymerization of the above polymer (c-1a) with at least one polar group-containing monomer selected from the above polar group-containing monomers can include various methods. Examples thereof can include, for example, a method for dissolving the polymer (c-1a) in an organic solvent, adding the above polar group-containing monomer and a radical polymerization initiator, heating and stirring them to undergo a graft copolymerization reaction; a method for heating and melting the polymer (c-1a), adding the above polar group-containing monomer and a radical polymerization initiator to the resulting molten product and stirring them to undergo a graft copolymerization reaction; a method for preliminarily mixing the above polymer (c-1a), the above polar group-containing monomer and a radical polymerization initiator, supplying the resulting mixture to an extruder while heating and kneading it to undergo a graft copolymerization reaction; and a method for impregnating solution in which the above polar group-containing monomer and a radical polymerization initiator have been dissolved in an organic solvent, into the polymer (c-1a), then heating the impregnated polymer to a highest temperature at which a random copolymer does not dissolve to undergo a graft copolymerization reaction.

A reaction temperature of 50°C or higher in particular in a range of 80 to 200°C, is suitable, and a reaction time is approximately from 1 minute to 10 hours.

A reaction method can be either a batch manner or continuous manner, but the batch manner is preferred for homogeneous graft copolymerization.

The radical polymerization initiator used can be any initiator as long as it promotes reaction between the aforementioned polymer (c-1a) and the aforementioned polar group-containing monomer, however, an organic peroxide and an organic perester are particularly preferred.

Specific examples thereof include benzoyl peroxide, dichlorobenzoyl peroxide, dicumyl peroxide, di-tert-butyl peroxide, 2,5-dimethyl-2,5-di(peroxybenzoate)hexyne-3,1,4-bis(tert-butylperoxyisopropyl)benzene, lauroyl peroxide, tert-butylperacetate, 2,5-dimethyl-2,5-di(tert-butylperoxy)hexyne-3,2,5-dimethyl-2,5-di(tert-butyl peroxide)hexane, tert-butyl benzoate, tert-butyl perphenylacetate, tert-butyl perisobutyrate, tert-butyl per-sec-octoate, tert-butyl perpivalate, cumyl perpivalate and tert-butyl perdiethyl acetate, as well as other azo compounds such as azobisisobutyronitrile and dimethylazoisobutyronitrile.

Among these, preferred are dialkyl peroxides such as dicumyl peroxide, di-tert-butyl peroxide, 2,5-dimethyl-2,5-di(tert-butylperoxy)hexyne-3,2,5-dimethyl-2,5-di(tert-butylperoxy)hexane, and 1,4-bis(tert-butylperoxyisopropyl)benzene.

The radical polymerization initiator is preferably used in an amount of 0.001 to 10 parts by mass based on 100 parts by mass of the above polymer (c-1a).

When a modified polymer composition in which the above graft-modified polymer (c-2m) and unmodified (c-1a) are mixed, is used as the modified polymer (c-2), the amount of grafted polar group-containing monomer is preferably adjusted so as to be 0.1 to 15 parts by mass and preferably 0.5 to 10 parts by mass, based on 100 parts by mass in total of the graft-modified olefinic polymer (c-2m) and unmodified (c-1a).

The graft reaction can be carried out in an organic solvent or without a solvent as described above, however in the present invention, when, as the modified polymer (c-2), the graft-modified polymer (c-2m) itself is used as the thermoplastic resin (C), a composition in which the modified polymer (c-2) is dissolved in an organic solvent, is used as, for example, an adhesive, and therefore when it reacts in an organic solvent, it can be used as is, or it is possible to prepare, for example, a coating agent by further adding the same or another type of organic solvent. When the graft reaction has been carried out without using an organic solvent, an organic solvent can be added again to dissolve a grafted product to also prepare, for example, a coating agent.

When the graft-modified polymer (c-2m) that is a graft-modified product of (c-1a), and an unmodified (c-1a) are mixed and used as a modified polymer (c-2), they may be preliminarily mixed and used in preparation of a coating agent, or they may be mixed in a solvent upon preparation of a coating agent.

Organic solvents for preparing the coating agent of the present invention by having been added upon reaction or after reaction, are not particularly limited, and examples of the solvents can include, for example, aromatic hydrocarbons such as benzene, toluene and xylene, aliphatic hydrocarbons such as hexane, heptane, octane and decane, alicyclic hydrocarbons such as cyclohexane, cyclohexene, and methylcyclohexane, alcohols such as methanol, ethanol, isopropyl alcohol, butanol, pentanol, hexanol, propanediol, and phenol, ketone-based solvents such as acetone, methylisobutyl ketone, methyl ethyl ketone, pentanone, hexanone, isophorone, and acetophenone, cellosolves such as methyl cellosolve and ethyl cellosolve, esters such as methyl acetate, ethyl acetate, butyl acetate, methyl propionate, and butyl formate, and halogenated hydrocarbons such as trichloroethylene, dichloroethylene, and chlorobenzene. Among these, preferred are aromatic hydrocarbons, aliphatic hydrocarbons and ketones. These may be used singly or in combinations of two or more thereof.

The graft-modified polymer (c-2m) constituting the modified polymer (c-2) is obtained by the method described above, and in the present invention, such graft-modified polymers (c-2m) may be used singly, or in combinations of two or more thereof.

When the modified polymer (c-2) is composed of two or more graft-modified polymers (c-2m), the amount of the grafted polar group-containing monomer is preferably adjusted so as to be 0.1 to 15 parts by mass and preferably

0.5 to 10 parts by mass, based on 100 parts by mass in total of the two or more graft-modified polymers (c-2m) and the unmodified (c-1a) optionally used.

In a suitable aspect of the present invention, the modified polymer (c-2) is a polymer including 50 to 100 mol% of a constituent unit derived from propylene and 50 to 0 mol% of a constituent unit derived from an α-olefin having 2 to 20 carbon atoms excluding propylene, based on 100 mol% in total of constituent units derived from the α-olefin having 2 to 20 carbon atoms. Here, suitable examples of the "a-olefin having 2 to 20 carbon atoms excluding propylene" include, for example, 1-butene and octene. In a more suitable aspect, the constituent unit derived from propylene is preferably 55 to 90 mol%, more preferably 60 to 85 mol%, and further preferably 60 to 80 mol%, and the constituent unit derived from an α-olefin having 2 to 20 carbon atoms excluding propylene is preferably 45 to 10 mol%, more preferably 40 to 15 mol%, and further preferably 40 to 20 mol%, based on 100 mol% in total of the constituent units derived from an α-olefin having 2 to 20 carbon atoms.

Therefore, the present inventive (c-2) modified polymer obtained by partial or total graft modification of a polymer including a constituent unit derived from an α-olefin having 2 to 20 carbon atoms with a polar group-containing monomer includes any of: a modified polymer (c-2') including 0.1 to 15 parts by mass of a constituent unit derived from the polar group-containing monomer based on 100 parts by mass of the modified polymer; a modified polymer that is a polymer including 50 to 100 mol% of a constituent unit derived from propylene and 50 to 0 mol% of a constituent unit derived from an α-olefin having 2 to 20 carbon atoms excluding propylene, based on 100 mol% in total of constituent units derived from the α-olefin having 2 to 20 carbon atoms; and a modified polymer (c-2'') that satisfies both the requirement of the aforementioned graft amount and the requirements of type and amount of constituent unit.

In addition to the polymer (c-1) and the modified polymer (c-2) of the present invention, as the thermoplastic resin (C), a halogenated polymer obtained by partial or total halogenated modification of a polymer including a constituent unit derived from an α-olefin having 2 to 20 carbon atoms (hereinafter referred to as "halogenated polymer (c-3)" can also be suitably used.

Examples of the halogenated polymer (c-3) include a halogenated polymer obtained by partial or total halogenated modification of the polymer including a constituent unit derived from an α-olefin having 2 to 20 carbon atoms. For example, in the present invention, a polymer (c-lb) including a constituent unit derived from an α-olefin having 2 to 20 carbon atoms, once undergoes halogenated modification, and the halogenated modified polymer (c-3m) thus obtained by the modification can be used as the halogenated polymer (c-3) in the thermoplastic resin (C). Here, examples of the polymer (c-lb) include those similar to the aforementioned polymer (c-1) .

The polymer (c-3) is preferably a halogenated modified polymer obtained by partial or total halogenated modification of a polymer including a constituent unit derived from an α-olefin having 2 to 20 carbon atoms, and having a halogen content of 2 to 40 parts by mass based on 100 parts by mass of the halogenated modified polymer.

Further, the polymer (c-3) is preferably a propylenic polymer including 50 to 100 mol% of a constituent unit derived from propylene and 50 to 0 mol% of a constituent unit derived from an α-olefin having 2 to 20 carbon atoms excluding propylene, based on 100 mol% in total of constituent units derived from an α-olefin having 2 to 20 carbon atoms. Here, suitable examples of the "a-olefin having 2 to 20 carbon atoms excluding propylene" include, for example, 1-butene and octene.

Therefore, the polymer (c-3) that is a halogenated modified polymer obtained by partial or total halogenated modification of a polymer including a constituent unit derived from an α-olefin having 2 to 20 carbon atoms includes any of: a halogenated modified polymer (c-3') having a halogen content of 2 to 40 parts by mass based on 100 parts by mass of the halogenated modified polymer; a modified polymer in which the halogenated modified olefinic polymer is a polymer including 50 to 100 mol% of a constituent unit derived from propylene and 50 to 0 mol% of a constituent unit derived from the α-olefin having 2 to 20 carbon atoms excluding propylene, based on 100 mol% in total of constituent units derived from an α-olefin having 2 to 20 carbon atoms; and a halogenated modified polymer (c-3'') that satisfies both the requirement of the aforementioned halogenated modification amount and the requirements of type and amount of constituent unit.

The halogenated olefinic polymer (c-3) may also be such that it is used in the form of a halogenated modified polymer composition by mixing a halogen-modified product of (c-lb) as described above, i.e., halogenated modified polymer (c-3m), and unmodified (c-1b). In such a case, the (c-lb) used for halogenated modification and the (c-lb) used as unmodified may be the same or different. This case corresponds to an example obtained by partial halogenated modification of a polymer including a constituent unit derived from an α-olefin having 2 to 20 carbon atoms with a polar group-containing monomer.

The weight-average molecular weight of the polymer (c-1b) which can be used in the above is 1 x $10^4$ or higher in terms of polystyrene, preferably 1 x $10^4$ or higher and 1000 x $10^4$ or lower, more preferably 2 x $10^4$ or higher and 100 x $10^4$ or lower, and further preferably 3 x $10^4$ or higher and 50 x $10^4$ or lower. The heat of fusion as measured in accordance with to JISK7122, is not particularly limited. The heat of fusion tends to decrease with halogenation, and therefore the (c-lb) used can be selected accordingly.

The halogenated polymer (c-3) also preferably contains 2 to 40 parts by mass of halogen based on 100 parts

by mass in total of the halogenated modified polymer (c-3m) and the unmodified polymer (c-Ib) optionally used.

As the halogenated modified polymer (c-3m) constituting the halogenated polymer (c-3), a chlorinated polyolefin can be suitably used.

The chlorinated polyolefin used as the halogenated modified olefinic polymer (c-3m) is obtained by chlorinating a polyolefin by known methods. Here, the chlorinated polyolefin used as the halogenated modified olefinic polymer (c-3m) may be further modified by polar group-containing monomers such as an unsaturated carboxylic acid and its anhydride (for example, maleic anhydride). For example, commercially available products such as HARDLEN CY-9122P, HARDLEN CY-9124P, HARDLEN HM-21P, HARDLEN M-28P, HARDLEN F-2P, and HARDLEN F-6P (trade names, all of which are manufactured by Toyobo Co., Ltd.) are suitably used.

A chlorine content rate of the chlorinated polyolefin is preferably 10% by mass or more and 40% by mass or less and more preferably 20% by mass or more and 30% by mass or less, based on the sum of the chlorinated modified olefinic polymer used as the halogenated modified polymer (c-3m) and the unmodified polymer (c-Ib) optionally used. The chlorine content rate being the upper limit value or less enables inhibition of deterioration due to exposure to heat, sunlight, ultraviolet rays, and rain, for example, and the chlorine content rate being the lower limit value or more enables sufficient adhesiveness to be obtained, which is preferred.

Such halogenated modified polymers (C-3m) may be used singly or in combinations of two or more thereof.

Such halogenated modified polymers (c-3m) can be obtained, for example, by dissolving a polyolefin in a chlorine-based solvent and blowing a chlorine gas in the presence or absence of a radical catalyst until a chlorine content rate reaches 16 to 35% by mass.

Here, examples of the chlorine-based solvent used as a solvent for the chlorination reaction include, for example, tetrachloroethylene, tetrachloroethane, carbon tetrachloride, and chloroform.

A temperature at which the above dissolution and chlorination reactions are carried out is desirably a temperature or higher at which a polyolefin dissolves in the chlorine-based solvent.

Note, however, even in the case of preparing a coating agent by using the halogenated polymer (c-3) as the thermoplastic resin (c), when halogenated modification is performed in an organic solvent, it can be used as is, or the same or another kind of organic solvent can be further added, and examples of the organic solvent that can be used upon this case include the same organic solvent as that used for the modified polymer (c-2).

Furthermore, two or more of the above polymer (c-1), the above modified polymer (c-2), and the above halogenated polymer (c-3) may be combined for use as the thermoplastic resins (C).

The thermoplastic resin (C) used in the present invention is preferably selected from the above modified polymer (c-2) among the above polymer (c-1), the above modified polymer (c-2) and the above halogenated polymer (c-3). In this case, the above modified olefinic polymer (c-2) may contain the unreacted above polymer (c-1a) that has not been graft modified, if necessary.

It is noted that the thermoplastic resin (C) used in the present invention preferably has a kinematic viscosity measured at 100°C of more than 5000 $mm^2/s$. Here, the kinematic viscosity exceeding 5000 $mm^2/s$ is a concept that includes cases where a kinematic viscosity cannot be measured due to low flowability.

Content of thermoplastic resin (C)

In the resin composition 1 of the present invention, the content of thermoplastic resin (C) in the entire resin composition is 20 to 99.99% by mass, preferably 40 to 99% by mass, and more preferably 60 to 97% by mass.

When the content of thermoplastic resin (C) in the entire resin composition is less than the lower limit value, characteristics of the thermoplastic resin (C) may be impaired and a resin composition excellent in, for example, mechanical properties, bleed-out resistance, and chemical resistance, may not be obtained. The content of thermoplastic resin (C) in the entire resin composition exceeding the upper limit value, on the other hand, may arise problems such as poor processability. In other words, within the aforementioned range of the content of thermoplastic resin (C), a resin composition excellent in bleed-out resistance and processability is obtained, which is preferred.

The coating agent obtained from the resin composition in which the content of thermoplastic resin (C) is within the above range is preferred because coating film strength is particularly favorable, adhesiveness is particularly favorable, and adhesive strength is stable over a long period of time.

Solvent

The coating agent obtained from the resin composition 1 of the present invention may contain, in addition to the above resin (S) such as the above resin copolymer (A) and the above thermoplastic resin (C), a solvent if necessary.

Examples of the solvent can include but are not particularly limited to, for example, aromatic hydrocarbons such as benzene, toluene and xylene; aliphatic hydrocarbons such as hexane, heptane, octane and decane; alicyclic hydrocarbons such as cyclohexane, cyclohexene and methylcyclohexane; alcohols such as methanol, ethanol, isopropyl

alcohol, butanol, pentanol, hexanol, propanediol, and phenol; ketone-based solvents such as acetone, methyl isobutyl ketone (MIBK), methyl ethyl ketone (MEK), pentanone, hexanone, isophorone, and acetophenone; cellosolves such as methyl cellosolve and ethyl cellosolve; esters such as methyl acetate, ethyl acetate, butyl acetate, methyl propionate, and butyl formate; halogenated hydrocarbons such as trichlorethylene, dichloroethylene, and chlorobenzene; and petroleum-based solvents such as exor and isopar. These can be used singly or in combinations thereof. Among them, toluene, a methylcyclohexane/MIBK mixed solvent, a methylcyclohexane/MEK mixed solvent, a cyclohexane/MEK mixed solvent, and an exor/cyclohexanone mixed solvent, are preferably used. Moreover, a solvent dispersed in for example, water may be used.

In a case in which the coating agent obtained from the resin composition of the present invention contains a solvent, the total amount of resin (S) and thermoplastic resin (C) based on 100% by weight in total of the resin (S), the thermoplastic resin (C) and the solvent, is usually approximately 5 to 50% by weight and preferably 8 to 40% by weight.

Other constituent

The resin composition 1 of the present invention may contain other thermoplastic resins in addition to the above resin (S) and thermoplastic resin (C). This "other thermoplastic resin" is not particularly limited as long as it is not applicable to any of the above resin (S) and thermoplastic resin (C), and include, for example, homopolymers of polyethylene, polypropylene, poly(1-butene), and poly(4-methyl-1-pentene), and random or block copolymers of $\alpha$-olefins with each other, such as ethylene, propylene, and 4-methyl-1-pentene, ethylene"propylene copolymers, ethylene·octene copolymers, propylene·octene copolymers, ethylene·propylene·1-butene copolymers, ethylene·propylene·terpolymers, cyclic polyolefins, ethylene·vinyl acetate copolymers, copolymers of ethylene and an unsaturated carboxylic acid, an ethylene·vinyl alcohol, and ionomer resins.

For example, when adding other thermoplastic resin, the amount thereof added is preferably more than 0 and 50 parts by mass or less, more preferably 1 to 30 parts by mass, and further preferably 1 to 10 parts by mass, based on 100 parts by mass of the above thermoplastic resin (C). One preferred embodiment is that other thermoplastic resin is not included.

The resin composition 1 of the present invention may contain stabilizers such as an antioxidant, an ultra violet absorber, a light stabilizer, and additives such as metallic soap, a filler, a flame retardant, an antimicrobial agent, an antifungal agent, and a pigment, if necessary.

Examples of the stabilizer include antioxidants such as a hindered phenol-based compound, a phosphite-based compound, and a thioether-based compound; ultraviolet absorbers such as a benzotriazole-based compound and a benzophenone-based compound; and light stabilizers such as a hindered amine-based compound.

Examples of the metallic soap include stearates such as magnesium stearate, calcium stearate, barium stearate, and zinc stearate.

Examples of the filler include glass fibers, silica fibers, metal fibers (stainless steel, aluminum, titanium, copper, for example), natural fibers (wood flour, wood fibers, bamboo, bamboo fibers, raw cotton, cellulose, nanocellulose, wool, straw, hemp, flax, kenaf, kapok, jute, ramie, sisal, henequen, corn, nut shells, wood pulp, rayon, cotton, for example), carbon black, graphite, activated carbon, graphite, carbon nanotubes, carbon nanofibers, carbon nanohorns, graphene nanoplatelets, nanoporous carbon, carbon fibers, silica, glass beads, silicates (calcium silicate, talc, clay, for example), metal oxides (iron oxide, titanium oxide, magnesium oxide, alumina, for example), metal carbonates (calcium carbonate, barium carbonate, for example), sulfates (calcium sulfate, barium sulfate, for example), and various metal powders (magnesium, silicon, aluminum, titanium, copper, for example), mica, glass flake, pumice powder, pumice balloon, aluminum hydroxide, magnesium hydroxide, basic magnesium carbonate, dolomite, calcium titanate, calcium sulfite, asbestos, montmorillonite, bentonite, molybdenum sulfide, organic fillers (lignin, starch, for example), and products containing the same. In particular, fillers with anisotropicity in structures, such as glass fibers, silica fibers, metal fibers, natural fibers, carbon nanotubes, carbon nanofibers, carbon nanohorns, and carbon fibers, are broken due to shear upon kneading, resulting in reducing their anisotropicity and facilitating their characteristics to be impaired, however, the resin (S) reduces shear upon kneading by its flowability-improving effect and facilitates its anisotropy to be maintained, which is useful.

Examples of the flame retardant include, for example, halogen compounds such as halogenated diphenyl ethers such as decabromodiphenyl ether and octabromodiphenyl ether and halogenated polycarbonates; inorganic compounds such as antimony trioxide, antimony tetroxide, antimony pentoxide, sodium pyroantimonate, and aluminum hydroxide; and phosphorus compounds. Further, a compound such as tetrafluoroethylene can be added as a flame retardant aid to prevent dripping.

Examples of the above antibacterial agent and antifungal agent include organic compounds such as imidazole compounds, thiazole compounds, nitrile compounds, haloalkyl compounds, and pyridine compounds; and inorganic substances and inorganic compounds such as silver, silver compounds, zinc compounds, copper compounds, and titanium compounds.

As the pigment, a pigment conventionally used for coloring synthetic resins can be used. Specific examples thereof include inorganic pigments such as metals such as aluminum, silver and gold; carbonates such as calcium carbonate and barium carbonate; oxides such as ZnO and $TiO_2$; hydroxides such as $Al_2O_3 \cdot nH_2O$ and $Fe_2O_3 \cdot nH_2O$; sulfates such as $CaSO_4$ and $BaSO_4$; nitrates such as $Bi(OH)_2NO_3$; chlorides such as $PbCl_2$; chromates such as $CaCrO_4$ and $BaCrO_4$; chromites such as $CoCrO_4$, manganates, and permanganates; borate salts such as $Cu(BO)_2$; uranates such as $Na_2U_2O_7 \cdot 6H_2O$; nitrites such as $K_3Co(NO_2)_6 \cdot 3H_2O$; silicates such as $SiO_2$; arsenates and arsenites such as $CuAsO_3 \cdot Cu(OH)_2$; acetates such as $Cu(C_2H_3O_2)_2 \cdot Cu(OH)_2$; phosphates such as $(NH_4)_2MnO_2(P_2O_3)_2$; and aluminates, molybdates, zincates, antimonates, tungstates selenides, titanates, ferric cyanides, phthalates, CaS, ZnS, CdS, graphite, and carbon black; and organic pigments such as natural organic pigments such as cochineal lake and madder lake; nitroso pigments such as Naphthol Green Y and Naphthol Green B; nitro pigments such as Naphthol Yellow S and Pigment Chlorine 2G; Permanent Red 4R; azo pigments such as Hanza Yellow, Brilliant Carmine 68, and Scarlet 2R; and basic dye lakes such as Malachite Green and Rhodamine B, acid dye lakes such as Acid Green Lake and eosine lake, mordant dye lakes such as alizarin lake and purpurin lake, vat dye pigments such as Thioindigo red B and Indanthrene Orange, and phthalocyanine pigments such as Phthalocyanine Blue and Phthalocyanine Green.

The above additives can be used in any ratio and by any addition method as long as the effects of the present invention are not impaired.

## Resin Composition 1

The resin composition 1 (a resin composition of the first preferred aspect of the present invention) according to the present invention is characterized in that the above resin (S) and the above thermoplastic resin (C) are essential components. The other components described above may be contained as long as the effects of the present invention are not impaired.

Compositions and molecular weights of the resin composition 1 according to the present invention are not particularly limited as long as they do not impair the present invention, and from the viewpoints of obtaining favorable processability and mechanical properties, a proportion of component with a molecular weight of less than 5,000 as observed by gel permeation chromatography (GPC) is preferably 0.7 to 4.5%, more preferably 1.0 to 4.5%, further preferably 1.2 to 4.5%, and particularly preferably 1.3 to 3.0%., relative to the total component of the resin composition 1. The component with a molecular weight of less than 5,000 improves the processability of the resin composition 1, but can cause problems such as reduction of mechanical properties and bleed-out. In other words, within the aforementioned range of the proportion of the component with a molecular weight of less than 5,000 in the resin composition 1, an effect of improving processability is facilitated to be obtained while inhibiting problems such as reduction of mechanical properties and bleed-out, which is preferred.

Within the aforementioned range of the proportion of the component with a molecular weight of less than 5,000 in the resin composition 1, the coating agent obtained from the resin composition 1 has a particularly favorable coating film strength, particularly favorable adhesiveness, and stable adhesive strength over a long period of time, which is preferred.

The resin composition 1 according to the present invention is produced by melt-kneading the resin (S), thermoplastic resin (C) and an additive if necessary. As a method of melt-kneading, for example, a single-screw extruder or a twin-screw extruder can be used.

Various methods can be used for adding the resin (S) to the thermoplastic resin (C) to the extent that the effects of the present invention are not impaired. For example, a method for dry blending the resin (S) and thermoplastic resin (C) by using a high-speed mixer such as a Henschel mixer or a tumbler and then melting-kneading the mixture, and a method for adding the resin (S) directly from an open portion or inserting it by a side feeder or liquid feed pump upon melting-kneading the thermoplastic resin (C), are included. In the case of using the resin composition 1 according the present invention as a coating agent, kneading can also be carried out with the solvent, for example, in which the resin (S) and thermoplastic resin (C) dissolve.

A temperature upon melt-kneading is not particularly limited as long as it is a temperature at which the thermoplastic resin (C), for example, melts and for example, when the thermoplastic resin (C) is a propylene/1-butene copolymer, the temperature is usually in a range of 80 to 200°C and preferably in the range of 100 to 150°C.

The method for producing the resin composition 1 according to the present invention may also be a method for melt-kneading the resin (S) with the thermoplastic resin (C) to produce a resin (S)-containing masterbatch, further adding the thermoplastic resin (C) to the resin (S)-containing masterbatch, and melt-kneading the two to produce a resin composition 1.

The thermoplastic resin (C) used for production of the resin (S)-containing masterbatch and the thermoplastic resin (C) further added to the masterbatch after production of the masterbatch may be the same resin or different resins.

Methods for producing the resin (S)-containing masterbatch are not particularly limited, but include, for example, a method for melt-kneading the resin (S), the thermoplastic resin (C), and an additive if necessary in, for example, a

single-screw extruder, a twin-screw extruder, a plastomill, a Brabender, a kneader, a roll mixer, and a Banbury mixer. Among these methods, preferred is the method using a single-screw extruder or twin-screw extruder in terms of facilitation of mass production and facilitating a masterbatch in pellet form to be obtained, and particularly preferred is the method using a twin-screw extruder in terms of increasing compatibility of resin (S) and inhibiting the bleed out.

A temperature upon melt-kneading in the production of the masterbatch, is not particularly limited as long as the thermoplastic resin (C), for example, melts, and for example, when it is a propylene/1-butene copolymer, the temperature is usually in a range of 80 to 200°C and preferably in the range of 100 to 150°C.

The amount of resin (S) compounded in the resin (S)-containing masterbatch used in the present invention, is not particularly limited, but is usually in a range of 0.1 to 100 parts by mass, preferably in the range of 1 to 80 parts by mass, and more preferably in the range of 5 to 60 parts by mass, based on 100 parts by mass of thermoplastic resin (C) included in the resin (S)-containing masterbatch.

Compounding the resin (S) in the mass of the lower limit value or more of the above range facilitates softening and melting of components of thermoplastic resin (C) due to the resin (S), and provides a favorable flowability improvement effect upon melt-kneading the resin (S)-containing masterbatch and the thermoplastic resin (C) to be further added in an extruder, which is preferred. Compounding the resin (S) in the mass of the upper limit value or less of the above range enables a resin (S)-containing masterbatch that can inhibit bleed-out of resin (S) to be obtained, which is preferred.

Methods for melt-kneading the resin (S)-containing masterbatch and the thermoplastic resin (C) to be added to the masterbatch, are not particularly limited, and for example, the same melt-kneading method as described above in the production method of resin (S)-containing masterbatches, for example, can be employed.

A ratio between the amount of resin (S)-containing masterbatch and the amount of thermoplastic resin (C) to be added to the masterbatch is preferably 1 to 110 parts by mass, more preferably 15 to 110 parts by mass, and particularly preferably 15 to 50 parts by mass of resin (S)-containing masterbatch, based on 100 parts by mass of thermoplastic resin (C) to be added to the masterbatch. When the ratio of the amount of resin (S)-containing masterbatch to the amount of the thermoplastic resin (C) to be added to the masterbatch is smaller than the lower limit value of the above range, the amount of resin (S) in the resin composition may become small, which may be difficult to achieve an improved effect of processability. On the other hand, when the ratio of the amount of resin (S)-containing masterbatch to the amount of thermoplastic resin (C) to be added to the masterbatch is greater than the upper limit value of the range, the content of resin (S) increases, facilitating lowering of the mechanical properties and bleed-out resistance.

In the case of using the resin composition 1 according to the present invention as a coating agent, kneading can also be carried out with the solvents, for example, in which the resin (S) and thermoplastic resin (C) dissolve.

Use of resin composition 1

The coating agent obtained from the resin composition 1 of the present invention is suitable for use as primers, paints, hot-melt adhesives, and optically transparent double-sided tapes.

A method for forming a coating film of the coating agent of the present invention is not particularly limited, and can be carried out by known methods. A coating film can be obtained, for example, by applying the coating agent of the present invention using methods such as a die coating method, a flow coating method, a spray coating method, a bar coating method, a gravure coating method, a gravure reverse coating method, a kiss reverse coating method, a micro gravure coating method, a roll coating method, a blade coating method, a rod coating method, a roll doctor coating method, an air knife coating method, a comma roll coating method, a reverse roll coating method, a transfer roll coating method, a kiss roll coating method, a curtain coating method, and a dipping coating method, followed by drying by an appropriate method, such as natural drying or heating forced drying.

The coating agent of the present invention can also be used as a decorative film. The decorative film is not particularly limited other than having a layer obtained from the coating agent of the present invention, and can be used in combinations with films having known designability. For example, a film that has been preliminarily decorated by for example, printing, coating (painting), and vapor deposition, or a film that has been decorated by combinations of these, can be used as a design layer, and then be stacked with a layer obtained from the coating agent of the present invention and used.

In other words, the above decorative film has at least one layer, the layer obtained from the aforementioned coating agent of the present invention. In a typical aspect thereof, the above decorative film has a design layer made of a film having designability, such as a film preliminarily decorated by printing, coating (painting), and vapor deposition, for example, and a layer obtained from the coating agent of the present invention. Note, however, in the following descriptions herein, this layer may be referred to as a "coating film" focusing on its shape. It may also be referred to as a "adhesive layer" focusing on its function.

Here, examples of materials of the film with the design layer include thermoplastic films such as an acrylic film, a PET film, a polycarbonate film, a COC film, and a polyvinyl chloride film.

A method for producing the above decorative film is not particularly limited as long as the decorative film is

fulfilled with a layer (coating film) obtained from the coating agent of the present invention. Specific examples thereof include, a method for dry laminating the coating film of the present invention on a surface facing an adherend of the decorative film having a design layer, a method for directly arranging a design layer on the coating film of the present invention by printing, for example, a method for sequentially forming a clear layer, a coating material layer and a layer composed of the coating film of the present invention (i.e., the layer obtained from the coating agent of the present invention) on the above film by printing, for example.

The decorative film having the coating film of the present invention can decorate formed bodies having complex three-dimensional structures by utilizing, for example, existing vacuum forming methods such as vacuum forming and pressure vacuum forming, an insert forming method and an in-mold forming method, and a TOM method using the "vacuum forming apparatus" described in JP3733564B.

Examples of an adherend for the above decorative film suitably include, for example, polyolefin materials such as PP; ABS, PC, PET, acrylic resins, and metallic materials such as ED steel sheets, Mg alloys, SUS, and aluminum alloys. The adherend may be a composite of the above resin and the above metallic material.

The formed bodies obtained by the decoration method can be used for automotive interior and exterior members; various front panels for AV equipment, for example; surface decorative materials such as buttons and emblems; various parts such as mobile phone cases, housings, display windows, and buttons; exterior materials for furniture; interior construction materials such as bathrooms, walls, ceilings, and floors; exterior construction materials such as exterior walls such as siding, fences, roofs, gates, and gable plates; surface decorative materials for window frames, doors, railings, sills and lintels; optical members such as various displays, lenses, mirrors, goggles and window glass; interior and exterior materials for various vehicles other than automobiles such as trains, aircraft and ships; and various packaging containers such as bottles, cosmetic containers, and small containers; packaging materials, prizes, miscellaneous goods such as small articles, and other various applications, for example.

<<Aspect 2»

The resin composition of the preferred second aspect of the present invention (hereinafter also referred to as "resin composition 2") is a water dispersion composition containing at least one resin (S) selected from the group consisting of the copolymer (A) and acid-modified product (B) described above. Such a resin composition 2, the resin composition of the second aspect of the present invention, is particularly suitable for applications such as a sizing agent for reinforced fibers, for example.

[Resin (S)]

The resin (S) included in the resin composition 2 of the present invention is a resin composed of one or more of ethylene·α-olefin copolymer (A) and acid-modified product (B) of the copolymer (A).

[Copolymer (A)]

In the resin composition 2, the copolymer (A) is an ethylene·α-olefin copolymer including a structural unit derived from an α-olefin having 3 or more carbon atoms and satisfying requirements (a-1) to (a-3) below.

In the resin composition 2, the α-olefin having 3 or more carbon atoms, constituting the copolymer (A) and the following requirements (a-1) to (a-3) satisfied by the copolymer (A) are the same as those of the copolymer (A) described in the aspect 1.

A method for producing the copolymer (A) to be used for the resin composition 2 is the same as the method for producing the copolymer (A) to be used for the resin composition 1, as described in detail in the aspect 1.

Requirement (a-1)

A kinematic viscosity at 100°C is 10 to 5,000 $mm^2/s$.

The kinematic viscosity of the copolymer (A) is a value measured by the method described in JIS K2283. This kinematic viscosity is 10 to 5,000 $mm^2/s$, preferably 10 to 3,500 $mm^2/s$, more preferably 20 to 3,500 $mm^2/s$, and particularly preferably 20 to 3,000 $mm^2/s$. When the kinematic viscosity is the lower limit value or more of each of the above ranges, the copolymer (A) has less components that are easy to volatile, hardly ignites, tends to improve shelf life and further tends to reduce a weight loss due to evaporation in a water dispersion. When the kinematic viscosity is the upper limit or less of each of the above ranges, the copolymer (A) tends to be uniformly dispersed in water.

Requirement (a-2)

The content of structural unit derived from an $\alpha$-olefin is 60 to 85 mol%.

A content rate of structural unit derived from an $\alpha$-olefin in the copolymer (A) (based on 100 mol% of the total content of all monomer units) is measured by $^{13}C$ NMR according to the method described in "Polymer Analysis Handbook" (Asakura Publishing Co., Ltd., 2008, first edition, p.184-211). The sample determined by this method can also be measured using Fourier transform infrared spectroscopy (FT-IR), as a known sample. The content rate of structural unit derived from this $\alpha$-olefin is 60 to 85 mol%, preferably 65 to 85 mol%, and more preferably 65 to 80 mol%. When this content rate is the upper limit value or less of each of the above ranges, crystals tend to hardly be generated in the copolymer (A), as a result of which the copolymer is less likely to increase its viscosity and hardly solidifies, and tends to be uniformly dispersed in water. Further, this content rate being within each of the above ranges tends to provide an advantage of increasing strength of the composition combined with the matrix resin (M) described below. This is presumed due to a favorable structure of molecular chain entanglement between the ethylene·$\alpha$-olefin copolymer (A) and the matrix resin (M), the structure of which is more effective in the case of matrix resin (M) being a polyolefinic resin. This is because the high content rate of structural unit derived from an $\alpha$-olefin renders excellent compatibility with the polyolefinic resin.

Requirement (a-3)

The molecular weight distribution (Mw/Mn) in molecular weight in terms of polystyrene as measured by gel permeation chromatography (GPC) is 2.5 or less.

The molecular weight distribution (Mw/Mn) of the copolymer (A) is more specifically calculated as a ratio of a weight-average molecular weight (Mw) to a number-average molecular weight (Mn) as measured by GPC as described above. This molecular weight distribution (Mw/Mn) is 2.5 or less, preferably 2.3 or less, and more preferably 2.0 or less. In general, a large molecular weight distribution (Mw/Mn) of a polymer means that a polymer contains many low molecular weight components and many high molecular weight components. Therefore, the molecular weight distributions (Mw/Mn) of the ethylene·$\alpha$-olefin copolymer (A) within each of the above ranges reduces the low molecular weight component, from which the copolymer (A) has a small amount of components that are easy to volatile, hardly ignites, tends to improve shelf life, and further tends to reduce a weight loss due to evaporation in a water dispersion. At the same time, high molecular weight components are a few in amount, resulting in a likelihood of homogenous dispersion in water.

The copolymer (A) according to the resin composition 2 preferably further satisfies one or more of the following requirements (a-5) to (a-8).

Requirement (a-5)

The weight-average molecular weight (Mw) in terms of polystyrene as measured by gel permeation chromatography (GPC) is 1,000 to 50,000.

The weight-average molecular weight (Mw) of ethylene-$\alpha$-olefin copolymer (A) is the weight-average molecular weight (Mw) measured by GPC as described above. The weight-average molecular weight (Mw) of ethylene·$\alpha$-olefin copolymer (A) is preferably 1,000 to 50,000, more preferably 1,500 to 30,000, particularly preferably 1,500 to 20,000, and most preferably 1,500 to 15,000. When the weight-average molecular weight (Mw) is the lower limit value or more of each of the above ranges, the copolymer (A) has less components that are easy to volatile, hardly ignites, tends to improve shelf life, and further tends to reduce a weight loss due to evaporation in a water dispersion. The weight-average molecular weight (Mw) being the upper limit value or less of each of the above ranges tends to allow the ethylene·$\alpha$-olefin copolymer (A) to be uniformly dispersed in water.

Requirement (a-6)

The B value represented by the following formula [1] is 1.1 or more.
[Math. 2]

$$B = \frac{P_{OE}}{2P_O \cdot P_E} \quad \cdots [1]$$

wherein in formula [1], $P_E$ represents a molar fraction of ethylene units included, $P_O$ represents a molar fraction of $\alpha$-

olefin units included, and $P_{OE}$ represents a molar fraction of ethylene-α-olefin chains in the total dyad chain.

This B value is an indicator of randomness of a copolymerized monomer chain distribution in the ethylene-α-olefin copolymer (A). $P_E$, $P_O$, and $P_{OE}$ in formula [1] can be determined by measurements of $^{13}$C-NMR spectra, based on known literatures such as the reports by J. C. Randall [Macromolecules, 15, 353 (1982)] and J. Ray et al. [Macromolecules, 10, 773 (1977)] and "Polymer Analysis Handbook" (Asakura Publishing Co., Ltd., 2008, first edition, p.184-211) .

The B value represented in formula [1] of the copolymer (A) is preferably 1.1 or more and more preferably 1.2 or more. The upper limit of the B value is not particularly limited, but is usually 2.0 or less. The large B value indicates a few chain structures of an ethylene unit and an α-olefin unit, uniform distributions of ethylene units and α-olefin units, and a copolymer with narrow composition distribution. Therefore, the B values being within each of the above ranges tend to hardly cause crystals to be generated in the ethylene·α-olefin copolymer (A), as a result of which the copolymer hardly increases its viscosity, hardly solidifies and has a likelihood of being uniformly dispersed in water.

Requirement (a-7)

The amount of unsaturated bond as measured by $^1$H-NMR is less than 0.5 per 1000 carbon atoms.

The amount of unsaturated bonds in the copolymer (A) is the number of unsaturated bonds per 1000 carbon atoms, as measured by $^1$H-NMR as described above. The unsaturated bond is, for example, a double bond derived from for example, vinyl, vinylidene, disubstituted olefin, or trisubstituted olefin. Specific measurement conditions are as described in the Examples section. The amount of unsaturated bonds is preferably less than 0.5, more preferably less than 0.3, particularly preferably less than 0.2, and most preferably less than 0.1. When the amount of unsaturated bonds is within each of the above ranges, the heat resistance of the copolymer (A) tends to be improved.

Requirement (a-8)

No melting point is observed.

The copolymer (A) is preferably a polymer with no melting point (Tm) observed. Here, the melting point that is not observed specifically means that the heat of fusion (ΔH) (unit: J/g) measured by differential scanning calorimetry (DSC) is substantially not measured. Furthermore, the heat of fusion (ΔH) that is not substantially measured means that no peak is observed in differential scanning calorimetry (DSC) or that the observed heat of fusion is 1 J/g or less. Specifically, the melting point (Tm) and heat of fusion (ΔH) are obtained by carrying out differential scanning calorimetry (DSC) and analyzing a DSC curve obtained when a temperature was decreased to -100°C and then increased to 150°C at a rate of temperature rise of 10°C/min, by referring to JIS K7121. In a case in which the copolymer (A) is a polymer with no melting point (Tm) observed, it tends to hardly create crystals, as a result of which the copolymer hardly increases its viscosity, hardly solidifies, and has a likelihood of being uniformly dispersed in water.

Of each requirement described above, the kinematic viscosity of the copolymer (A) at 100°C depends on, for example, its molecular weight. In other words, a high molecular weight results in high viscosity, while a low molecular weight results in low viscosity. Therefore, the kinematic viscosity can be adjusted by controlling a molecular weight. The molecular weight distribution (Mw/Mn) can also be adjusted by removing low molecular weight components by known methods such as vacuum distillation. Furthermore, the amount of unsaturated bonds can be reduced by hydrogen addition (hereinafter referred to as "hydrogenation") by employing known methods. Reducing the amount of unsaturated bonds tends to improve oxidation stability and heat resistance.

Specific examples of the α-olefin forming the copolymer (A) according to the resin composition 2 include linear or branched α-olefins having 3 or more carbon atoms such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, and 1-eicosene. Among them, linear or branched α-olefins having 3 to 20 carbon atoms are preferred, and at least one α-olefin selected from propylene, 1-butene, 1-hexene and 1-octene is more preferred. Furthermore, propylene is most preferable from the viewpoint of flowability of a water dispersion. Moreover, the α-olefin being propylene and the matrix resin (M) described later being a propylenic resin (G), have a tendency to be advantageous in increasing strength of composition in which they are combined with each other. This is presumed because the copolymer (A) and the matrix resin (M) form a favorable structure of molecular chain entanglement.

The α-olefins can be used singly or in combinations with two or more thereof. Further, at least one other monomer selected from a polar group-containing monomer, an aromatic vinyl compound, an alicyclic vinyl compound, and a cyclic olefin is co-present in a reaction system together with the α-olefin, and is then polymerized to also enable a copolymer (A) to be obtained. In this case, the amount of the other monomer is preferably 20 parts by mass or less and more preferably 10 parts by mass or less based on 100 parts by mass in total of ethylene and the α-olefin.

In the resin composition 2, the copolymers (A) described above can be used singly or in combinations of two or more thereof. For example, two or more ethylene·α-olefin copolymers (A) having different molecular weights and/or

different monomer compositions may be combined for use.

[Acid-modified product (B)]

The acid-modified product (B) used in the present invention is the acid-modified product of the copolymer (A) described above.

The acid-modified product (B) is, for example, a polymer in which the copolymer (A) is graft modified with a graft component. When the amount of unsaturated bonds in the copolymer (A) is small (for example, when the requirement (a-7) described previously is satisfied), the graft component is presumed to tend to be randomly grafted to the main chain backbone of the copolymer (A).

Examples of the graft component used in the acid-modified product (B) preferably includes an unsaturated carboxylic acid having 3 to 10 carbon atoms (more preferably 3 to 8 carbon atoms) and a derivative of this unsaturated carboxylic acid. Examples of the derivative of the unsaturated carboxylic acid include, for example, acid anhydrides, esters, amides, and imides of the unsaturated carboxylic acids. Specific examples of the unsaturated carboxylic acid include monobasic acids such as acrylic acid and methacrylic acid; and dibasic acids such as maleic acid, fumaric acid, itaconic acid, citraconic acid, and 5-norbornene-2,3-dicarboxylic acid. Specific examples of the acid anhydride of the unsaturated carboxylic acid include acid anhydrides of dibasic acids such as maleic acid, itaconic acid, citraconic acid and 5-norbornene-2,3-dicarboxylic acid. Specific examples of the ester of the unsaturated carboxylic acid include esters and half esters such as methyl acrylate, methyl methacrylate, ethyl acrylate, ethyl methacrylate, glycidyl acrylate, maleic acid monoethyl ester, maleic acid diethyl ester, fumaric acid monomethyl ester, fumaric acid dimethyl ester, itaconic acid monomethyl ester, and itaconic acid diethyl ester. Specific examples of the amide of the unsaturated carboxylic acid include acrylamide, methacrylamide, maleic acid monoamide, maleic acid diamide, maleic acid-N-monoethylamide, maleic acid-N,N-diethylamide, maleic acid-N-monobutyl amide, maleic acid-N,N-dibutylamide, fumaric acid monoamide, fumaric acid diamide, fumaric acid-N-monobutylamide, and fumaric acid-N,N-dibutylamide. Specific examples of the imide of the unsaturated carboxylic acid include maleimide, N-butylmaleimide, and N-phenylmaleimide. Among them, at least one compound selected from the group consisting of maleic acid and maleic anhydride is preferred in that it has a high polarity as one monomer and hardly produces a by-product such as a homopolymer in a modification reaction using peroxide. The graft components can be used singly or in combinations of two or more thereof.

The acid-modified product (B) according to the present invention preferably satisfies one or more of the following requirements (b-1) to (b-4).

Requirement (b-1)

An acid number is 1 to 300 mg KOH/g.

The acid number of acid-modified product (B) is a value indicating the number of milligrams of potassium hydroxide required to neutralize an acid contained in 1 g of a polymer, and is an index of the graft amount of the graft component. This acid number can be measured by the method in accordance with JIS K0070. Specific measurement conditions are as described in the Examples section. This acid number is preferably 1 to 300 mgKOH/g, more preferably 5 to 200 mgKOH/g, and particularly preferably 10 to 150 mgKOH/g. When this acid number is the lower limit value or more of each of the above ranges, the polarity of the acid-modified product (B) increases and stability of a water dispersion tends to improve. When this acid number is the upper limit value or less of each of the above ranges, hydrogen bonding between the graft components is inhibited, as a result of which the acid-modified product (B) inhibits its viscosity from increasing and tends to uniformly disperse in water. The acid number of the acid-modified product (B) can be adjusted by the graft amount of graft component with respect to the ethylene·$\alpha$-olefin copolymer (A). For example, the graft amount may be increased in order to increase the acid number of the acid-modified product (B).

Requirement (b-2)

An apparent viscosity at 150°C is 1 to 1,000 cPs.

An apparent viscosity (Brookfield viscosity) of the acid-modified product (B) at 150°C can be measured by the method described in JIS K7117-1. This apparent viscosity is preferably 1 to 1,000 cPs, more preferably 1 to 800 cPs, and particularly preferably 5 to 800 cPs. When this apparent viscosity is within each of the above ranges, a balance between low volatility, handleability and dispersibility in water tends to become excellent.

Requirement (b-3)

The weight-average molecular weight (Mw) in terms of polystyrene as measured by gel permeation chromatography (GPC) is 1,000 to 50,000.

The weight-average molecular weight (Mw) of the acid-modified product (B) is the weight-average molecular weight (Mw) measured by GPC as described above. The weight-average molecular weight (Mw) of the acid-modified product (B) is preferably 1,000 to 50,000, more preferably 1,000 to 30,000, particularly preferably 1,500 to 30,000, and most preferably 1,500 to 20,000. The weight-average molecular weight (Mw) being the lower limit value or more of each of the above ranges reduces components that are easy to volatile, from which the acid-modified product (B) has a small amount of components that are easy to volatile, hardly ignites, tends to improve shelf life, and further tends to reduce a weight loss due to evaporation in a water dispersion. The weight-average molecular weight (Mw) being the upper limit value or less of each of the above ranges tends to allow the acid-modified product (B) to be uniformly dispersed in water.

Requirement (b-4)

The molecular weight distribution (Mw/Mn) in molecular weight in terms of polystyrene as measured by gel permeation chromatography (GPC) is 2.5 or less.

The molecular weight distribution (Mw/Mn) of the acid-modified product (B) is more specifically calculated as a ratio of a weight-average molecular weight (Mw) to a number-average molecular weight (Mn) as measured by GPC as described above. This molecular weight distribution (Mw/Mn) is preferably 2.5 or less, more preferably 2.3 or less, and particularly preferably 2.0 or less. In general, a large molecular weight distribution (Mw/Mn) of a polymer means that a polymer contains many low molecular weight components and many high molecular weight components. Therefore, the molecular weight distributions (Mw/Mn) of the acid-modified product (B) within each of the above ranges reduces the low molecular weight component, from which the acid-modified product (B) has a small amount of components that are easy to volatile, hardly ignites, tends to improve shelf life, and further tends to reduce a weight loss due to evaporation in an aqueous dispersion. At the same time, high molecular weight components are few in amount, resulting in a likelihood of homogenous dispersion in water.

The acid-modified product (B) preferably further satisfies the following requirement (b-5).

Requirement (b-5)

No melting point is observed.

The acid-modified product (B) is preferably a polymer with no melting point (Tm) observed. A measurement method of this melting point (Tm) and a definition and significance of the melting point (Tm) not being observed are the same as those described in requirement (a-8) above.

The acid-modified products described above can be used singly or in combinations of two or more thereof. For example, two or more acid-modified products (B) with different graft components and/or different molecular weights and/or different monomer compositions may be combined for use.

Resin composition 2 (water dispersion composition)

The resin composition 2 according to the present invention is a water dispersion composition, which is a water dispersion containing 0.01 to 50% by mass of at least one resin (S) selected from the group consisting of the copolymer (A) and acid-modified product (B) described above. Hereinafter, the resin composition 2 is also referred to as "water dispersion composition" or simply "water dispersion."

The content of at least one resin (S) selected from the group consisting of the copolymer (A) and acid-modified product (B) in a water dispersion is 0.01 to 50% by mass, preferably 0.05 to 30% by mass, and more preferably 0.1 to 20% by mass. Note, however, this content is a value based on 100% by mass of the total water dispersion. When both the copolymer (A) and the acid-modified product (B) are included, this content refers to the total content thereof.

The content of water in the water dispersion is preferably 50 to 99.99% by mass, more preferably 70 to 99.95% by mass, and particularly preferably 80 to 99.9% by mass.

Examples of production methods of the water dispersion include, for example, a method for adding or not adding a hydrophilic solvent (I) to at least one resin (S) selected from the group consisting of the copolymer (A) and the acid-modified product (B) in the presence or absence of an organic solvent (H), subjecting the mixture to forced emulsification by using emulsificaion equipment such a homomixer, a colloid mill, a line mixer, and a homogenizer in the presence of water and a surfactant (J), and then removing the organic solvent (H), or a method for adding or not adding a hydrophilic solvent (I) to at least one resin (S) selected from the group consisting of the copolymer (A) and the acid-modified product (B) in the presence or absence of an organic solvent (H), mixing a basic substance (K) to partially or totally neutralize it, adding water, and then removing an organic solvent (H), as well as a method for implementing both the aforementioned neutralization and forced emulsification to allow the system to be water soluble.

Specific examples of the organic solvent (H) used in the methods described above include aromatic hydrocarbons such as xylene, toluene and ethylbenzene; aliphatic hydrocarbons such as hexane, heptane, octane and decane;

alicyclic hydrocarbons such as cyclohexane, cyclohexene, and methylcyclohexane; esteric solvents such as ethyl acetate, n-butyl acetate, cellosolve acetate, propylene glycol monomethyl ether acetate, propylene glycol monoethyl ether acetate, and 3-methoxybutyl acetate; ketone-based solvents such as methyl ethyl ketone and methyl isobutyl ketone. They can be used singly or in a mixture of two or more thereof. Among them, aromatic hydrocarbons are preferred.

Specific examples of the hydrophilic solvent (I) used in the above methods include alcohols such as ethanol, isopropanol and butanol; glycols such as ethylene glycol monoethyl ether, ethylene glycol monoisopropyl ether and ethylene glycol monobutyl ether; and cellosolves such as methyl cellosolve, ethyl cellosolve, butyl cellosolve, and cellosolve acetate. They can be used singly or in a mixture of two or more thereof.

Specific examples of the surfactant (J) used in the above methods include anionic surfactants such as a sodium alkylbenzenesulfonate, a sodium alkylsulfate, a sodium dialkylsulfosuccinate, a sodium polyoxyethylene alkyl ether sulfate, a sodium polyoxyethylene alkylphenyl ether sulfate, a sodium alkyl naphthalene sulfonate, sodium naphthalene sulfonate, potassium oleate, a sodium alkyldiphenyl ether disulfonate, a polyoxyethylene propenyl alkyl phenyl ammonium sulfate, a sodium melanin resin sulfonate, a special polyacrylate, an olefin·maleic acid copolymer, a sodium carboxymethyl cellulose salt, potassium stearate, sodium stearate, and triethanolamine stearate, nonionic surfactants such as fatty acid monoglyceride, sorbitan fatty acid ester, sugar fatty acid partial ester, polyglycerin fatty acid partial ester, a polyoxyethylene alkyl ether, a polyoxyethylene alkylphenyl ether, polyoxyethylene sorbitan fatty acid partial ester, polyoxyethylene sorbitol fatty acid partial ester, polyoxyethylene glycerin fatty acid partial ester, polyoxyethylene fatty acid amine, polyoxyethylene (hardened) castor oil, polyoxyethylene glycol fatty acid ester, a polyoxyethylene polyoxypropylene·block copolymer, hydroxyethylcellulose, polyvinyl alcohol, polyvinylpyrrolidone, and methylcellulose; amphoteric surfactants such as alkylammonium chloride, trimethyl alkyl ammonium bromide, an alkyl pyridinium chloride, and casein, as well as water-soluble polyvalent metal salts. They can be used singly or in a mixture of two or more thereof.

Specific examples of the basic substance (K) used in the above methods include alkali metals such as sodium, potassium and calcium; inorganic amines such as hydroxylamine, ammonium hydroxide and hydrazine; organic amines such as ammonia, methylamine, ethylamine, ethanolamine, and morpholine; oxides, hydroxides, and hydrides of alkali metals and alkaline earth metals such as sodium oxide, sodium peroxide, potassium oxide, calcium oxide, strontium oxide, sodium hydroxide, potassium hydroxide, and calcium hydroxide; weak acid salts of alkali metals and alkaline earth metals such as sodium carbonate, potassium carbonate, sodium hydrogen carbonate, potassium hydrogen carbonate, calcium hydrogen carbonate, sodium acetate, potassium acetate, and calcium acetate. They can be used singly or in a mixture of two or more thereof.

When producing a water dispersion containing the acid-modified product (B), morpholine is preferably used. Use of morpholine provides an effect of stabilizing the water dispersion by reaction of the morpholine with a polar group of the acid-modified product (B). Morpholine may also be added upon production of the water dispersion, or it may be preliminarily mixed with the acid-modified product (B) and reacted. The amount of morpholine added is preferably 1 to 50 parts by mass, more preferably 1 to 30 parts by mass, and particularly preferably 2 to 20 parts by mass based on 100 parts by mass of acid-modified product (B).

The water dispersion may contain additives such as corrosion inhibitors, antioxidants, animal or vegetable oils or their fatty acid esters, synthetic lubricants, waxes, and inorganic powders, in addition to the surfactant (J) described previously, for example. The additives may be used singly or in combinations of two or more thereof.

[Propylenic resins (D) and (E)]

The water dispersion composition of the present invention may further contain a propylenic resin (D) and a propylenic resin (E) containing at least a carboxylate salt bonded to the polymeric chain.

The propylenic resin (D) preferably contains 70 to 100% by mass of a component (D-1) having a weight-average molecular weight (Mw) of 150,000 or higher and 0 to 30% by mass of a component (D-2) having a weight-average molecular weight (Mw) of lower than 150,000, based on 100% by mass in total of components (D-1) and (D-2). The amount of component (D-1) is more preferably 73 to 100% by mass, and the amount of component (D-2) is more preferably 0 to 27% by mass.

The weight-average molecular weight (Mw) of component (D-1) (hereinafter also referred to as "propylenic resin component (D-1)") in the propylenic resin (D) is 150,000 or higher, preferably higher than 150,000, more preferably 200,000 or higher, particularly preferably 250,000 or higher, and most preferably 280,000 or higher. The upper limit value of the weight-average molecular weight (Mw) of the propylenic resin component (D-1) is not particularly limited, but is preferably 700,000 or lower, more preferably 500,000 or lower, particularly preferably 450,000 or lower, and most preferably 400,000 or lower from the viewpoint of melt flowability upon forming and appearance of the formed body. The propylenic resin (D) containing such a specific amount of propylenic resin component (D-1) with such a specific weight-average molecular weight (Mw), is less likely to cause problems of generation of fluff, shape changes such as disintegration, peeling, and folding due to impact, for example, and a problem of generation of fine powder due to these problems, even if the amount of propylenic resin (D) used in reinforced fiber bundles is small.

The weight-average molecular weight (Mw) of component (D-2) (hereinafter also referred to as "propylenic resin component (D-2)") included in propylenic resin (D), as necessary is less than 150,000, preferably 120,000 or lower, and more preferably 100,000 or lower. The lower limit value of the weight-average molecular weight (Mw) of the propylenic resin component (D-2) is not particularly limited, however, from the viewpoint of strength of reinforced fiber bundles and handleability (stickiness, for example), it is preferably 20,000 or higher, more preferably 30,000 or higher, particularly preferably 40,000 or higher, and most preferably 50,000 or higher.

A difference between the weight-average molecular weight (Mw) of propylenic resin component (D-1) and that of propylenic resin component (D-2) is preferably 100,000 to 300,000, more preferably 100,000 to 200,000, and particularly preferably 130,000 to 200,000.

The weight-average molecular weight (Mw) of propylenic resin (D) is preferably higher than that of propylenic resin (E). In this case, the propylenic resin (E) is expected to easily move upon forming, and interaction between reinforced fibers and the propylenic resin (E) is expected to be stronger. A difference between the weight-average molecular weight (Mw) of propylenic resin (D) and that of propylenic resin (E) is preferably 10,000 to 380,000, more preferably 120,000 to 380,000, and particularly preferably 130,000 to 380,000.

The propylenic resin (D) is a resin having a structural unit derived from propylene, and the amount of structural unit derived from propylene is preferably 50 mol% or more. In particular, it is preferably a random or block copolymer including a structural unit derived from at least one olefin (excluding propylene) selected from the group consisting of an α-olefin, a conjugated diene and a non-conjugated diene and a structural unit derived from a polyene, together with a structural unit derived from propylene.

Specific examples of the α-olefin in the propylenic resin (D) include α-olefins having 2 to 20 carbon atoms excluding propylene, such as ethylene, 1-butene, 3-methyl-1-butene, 4-methyl-1-pentene, 3-methyl-1-pentene, 4-methyl-1-hexene, 4,4-dimethyl-1-hexene, 1-nonene, 1-octene, 1-heptene, 1-hexene, 1-decene, 1-undecene, 1-dodecene, 1-tetradecene, 1-hexadecene, 1-octadecene, and 1-eicosene. Among them, 1-butene, ethylene, 4-methyl-1-pentene and 1-hexene are preferred, and 1-butene and 4-methyl-1-pentene are more preferred. Specific examples of the conjugated diene and non-conjugated diene include butadiene, ethylidene norbornene, dicyclopentadiene, and 1,5-hexadiene. Two or more of the α-olefins, conjugated dienes and non-conjugated dienes described above may be combined for use.

A proportion of structural units derived from propylene in the propylenic resin (D) is preferably 50 to 100 mol%, more preferably 50 to 99 mol%, particularly preferably 55 to 98 mol%, and most preferably 60 to 97 mol%.

The propylenic resin (D) preferably has Shore A hardness of 60 to 90 or Shore D hardness of 45 to 65. A more preferred range of Shore A hardness is 65 to 88 and a particularly preferred range is 70 to 85. A more preferred range of Shore D hardness is 48 to 63 and a particularly preferred range is 50 to 60. Within these ranges of the Shore A hardness or Shore D hardness of the propylenic resin (D), it has favorable followability to reinforced fibers, hardly generates partial cracks, and facilitates forming of reinforced fiber bundles with a stable shape. It also tends to have an advantage of increasing strength of a composition combined with the matrix resin (M) described below. This is presumed because the propylenic resin (D) and matrix resin (M) form a favorable structure of their molecular chain entanglement.

The propylenic resin (E) is a propylenic resin containing at least a carboxylate salt bonded to the polymeric chain. This carboxylate salt is effective in terms of enhancing interaction with reinforced fibers. This propylenic resin (E) can be obtained by known methods. Specifically, a representative method is a method including carrying out a radical graft polymerization of a propylenic polymer and a monomer having a carboxylic acid structure.

Among raw materials for the propylenic resin (E), examples of the propylenic polymer include, for example: a propylene homopolymer; and copolymers of propylene with a single α-olefin or two or more α-olefins, representative examples including an ethylene·propylene copolymer, a propylene·1-butene copolymer, and ethylene·propylene·1-butene copolymer. Aspects of this propylenic polymer and specific examples of the olefins are the same as the aspect of propylenic resin (D) and specific examples of the olefins described previously.

Among raw materials for the propylenic resin (E), examples of the monomer having a carboxylic acid structure include, for example, a monomer having a neutralized or unneutralized carboxylic acid group, and a monomer having a saponified or unsaponified carboxylic ester. For example, ethylenically unsaturated carboxylic acids, anhydrides thereof, and esters thereof and compounds having an unsaturated vinyl group other than an olefin, can be used. Specific examples of the ethylenically unsaturated carboxylic acid include (meth)acrylic acid, maleic acid, fumaric acid, tetrahydrophthalic acid, itaconic acid, citraconic acid, crotonic acid and isocrotonic acid. Specific examples of the acid anhydride include nadic acid™ (endosys-bicyclo[2.2.1]hept-5-ene-2,3-dicarboxylic acid), maleic anhydride, and citraconic anhydride. Specific examples of the compound having an unsaturated vinyl group other than an olefin include (meth)acrylic acid esters, hydroxyl group-containing vinyls, epoxy group-containing vinyls, isocyanate group-containing vinyls, aromatic vinyls, amides having unsaturated vinyls, vinyl esters, unsaturated sulfonic acids, and unsaturated phosphoric acids. Two or more of these monomers may be combined for use. Among them, the acid anhydride is preferred, and maleic anhydride is more preferred.

A content rate of carboxylic acid group of the propylenic resin (E) can be specified, for example, by its acid

number. The acid number of propylenic resin (E) is preferably 10 to 100 mg KOH/g, more preferably 20 to 80 mg KOH/g, particularly preferably 25 to 70 mg KOH/g, and most preferably 25 to 65 mg KOH/g.

A degree of neutralization or saponification, i.e., a conversion rate of, for example, a metal salt or ammonium salt of the carboxylic acid group that a raw material of the propylenic resin (E) has, to the carboxylate salt is usually 50 to 100%, preferably 70 to 100%, and more preferably 85 to 100%. The carboxylic acid groups in the propylenic resin (E) are totally neutralized or saponified by a base substance, however, a portion of carboxylic acid groups may remain without being neutralized or saponified.

The weight-average molecular weight (Mw) of propylenic resin (E) is preferably 1,000 to 100,000, more preferably 2,000 to 80,000, particularly preferably 5,000 to 50,000, and most preferably 5,000 to 30,000.

The weight-average molecular weights (Mw) of the propylenic resins (D) and (E) described above are measured by gel permeation chromatography (GPC).

The amount of propylenic resin (E) is preferably 3 to 50 parts by mass, preferably 3 to 45 parts by mass, more preferably 5 to 45 parts by mass, particularly preferably 7 to 40 parts by mass, and most preferably 10 to 40 parts by mass, based on 100 parts by mass of propylenic resin (D).

In a case in which the water dispersion composition of the present invention contains the propylenic resin (D) and propylenic resin (E) described above, a proportion of the total content of copolymer (A) and acid-modified product (B), based on the total content of copolymer (A), acid-modified product (B), propylenic resin (D) and propylenic resin (E) (100% by mass), is preferably 50% by mass or more and less than 100% by mass, more preferably 50% by mass or more and 90% by mass or less, particularly preferably 55% by mass or more and 85% by mass or less, and most preferably 60% by mass or more and 80% by mass or less. The proportion of the total content of copolymer (A) and acid-modified product (B) being the lower limit value or more of each of the above ranges tends to further improve an inhibition effect of generation of fluff.

The water dispersion composition of the present invention can be used for paints (coating materials), primers, adhesives, printing inks and pastes, finishing agents for paper, spinning yarns, and textiles, metal working oils, and mold release agents, in addition to sizing agents for reinforced fibers. The water dispersion composition of the present invention has excellent compatibility with a polyolefinic resin due to the high content of structural unit derived from an $\alpha$-olefin, and forms a favorable structure of molecular chain entanglement, and therefore can be suitably used particular for paints, primers, and adhesives.

<Reinforced fiber bundle>

The reinforced fiber bundle of the present invention is a reinforced fiber bundle formed by reinforced fibers bundled together by at least one resin (S) selected from the group consisting of the copolymer (A) and the acid-modified product (B) described above adhered to the reinforced fibers, and is used for a thin-film article in which the reinforced fibers are unidirectionally oriented. More specifically, this reinforced fiber bundle is a reinforced fiber bundle obtained by treating reinforced fibers with a sizing agent for reinforced fibers of the present invention, and is used for a thin film article in which the reinforced fibers are unidirectionally oriented.

The reinforced fiber bundle of the present invention can be suitably obtained by using the resin composition 2 (water dispersion composition) of the present invention described above as a sizing agent for reinforced fibers.

A type of reinforced fiber constituting the reinforced fiber bundle is not particularly limited, but a fiber with high strength and high elastic modulus is preferred.
Specific examples of the reinforced fiber include fibers such as a carbon fiber, a glass fiber, an aramid fiber, an alumina fiber, a silicon a carbide fiber, a boron fiber, and a metallic fiber. Two or more of these may be combined for use. Among these, the carbon fiber is preferred, and PAN-based, pitch-based or rayon-based carbon fibers are more preferred in terms of effects of improvement on mechanical properties and weight saving of formed products. Furthermore, the PAN-based carbon fiber is particularly preferred in terms of a balance between strength and modulus of the resulting formed product. Reinforced fibers imparted with electrical conductivity, for example, those containing metals such as nickel, copper, and ytterbium, can also be used. The metals are preferably included in a form of coating the reinforced fiber.

An average fiber size of the reinforced fibers is not particularly limited, but is preferably 1 to 20 $\mu$m and more preferably 3 to 15 pm, in terms of the mechanical properties and surface appearance of the resulting formed product. The number of single fibers in the reinforced fiber bundle is not particularly limited, but is usually 100 to 350,000 fibers, preferably 1,000 to 250,000 fibers and more preferably 5,000 to 220,000 fibers. Furthermore, the present invention is also expected to demonstrate an excellent effect on a fiber bundle with more than 40,000 fibers (large tow).

The amount of resin component adhered in 100% by mass of the reinforced fiber bundle is preferably 0.3 to 5.0% by mass and more preferably 0.5 to 2.0% by mass. Here, the amount of resin component adhered refers to the total amount adhered of the copolymer (A), acid-modified product (B), propylene resin (D) and propylene resin (E) described above.

A method for producing the reinforced fiber bundle is not particularly limited. From the point of view of facilitating

the resin component to be uniformly adhered between single fibers, a method for imparting a sizing agent for reinforced fibers (emulsion of resin components, which is the resin composition 2 (water dispersion composition) of the present invention) to reinforced fibers and drying the emulsion, is preferred. As methods for imparting the emulsion to reinforced fibers, known methods such as a roller dipping method, a roller transfer method, and a spray method, can be employed.

<Thin film article>

The thin film article of the present invention is a thin film article (UD sheet) in which reinforced fibers containing 1 to 80 parts by mass of reinforced fiber bundles of the present invention described above and 20 to 99 parts by mass of the thermoplastic matrix resin (M) based on 100 parts by mass in total of the reinforced fiber bundles and matrix resin (M), are unidirectionally oriented.

A type of matrix resin (M) is not particularly limited as long as it is a thermoplastic resin. Specific examples thereof include a polycarbonate resin, a styrenic resin, a polyamide resin, a polyester resin, a polyphenylene sulfide resin (PPS resin), a modified polyphenylene ether resin (modified PPE resin), a polyacetal resin (POM resin), a liquid crystal polyester, a polyarylate, acrylic resins such as a polymethylmethacrylate resin (PMMA), vinyl chloride, a polyimide (PI), a polyamideimide (PAI), a polyetherimide (PEI), a polysulfone, a polyethersulfone, a polyketone, a polyetherketone, a polyetheretherketone (PEEK), polyolefins such as a polyethylene and a polypropylene, a modified polyolefin, a phenolic resin, and a phenoxy resin. These may be used in combinations of two or more thereof. The polyamide resin and polyester resin are preferable as resins having polarity, and the polyolefinic resin is preferable as resin having low polarity. In particular, the polyamide resin (F) and propylenic resin (G) described below, are more preferable from the viewpoint of cost and weight saving of formed products. Namely, a reinforced fiber bundle-containing polyamide resin composition or reinforced fiber bundle-containing propylenic resin composition is preferably used for the UD sheet.

In a case in which the matrix resin (M) is a propylenic resin (G), use of propylene as an $\alpha$-olefin of the ethylene·$\alpha$-olefin copolymer (A) tends to be advantageous in increasing strength of a composition combining each other. This is presumed because the ethylene·$\alpha$-olefin copolymer (A) and the matrix resin (M) form a favorable structure of molecular chain entanglement.

The propylenic resin (G) may be an unmodified propylenic resin or a propylenic resin including a carboxylic acid structure or a carboxylate salt structure, which are introduced by modification, for example. In particular, both the unmodified propylenic resin and the propylenic resin including carboxylic acid or carboxylate salt structures, are preferably included. A preferred mass ratio in such cases is 99/1 to 80/20 in terms of ratio of the unmodified body/modified body, more preferably 98/2 to 85/15, and particularly preferably 97/3 to 90/10. Specific aspects of propylenic resin (G) are the same as those of propylenic resin (D) and propylenic resin (E) described previously.

The weight-average molecular weight (Mw) of propylenic resin (G) is preferably 50,000 to 350,000, more preferably 100,000 to 330,000, and particularly preferably 150,000 to 320,000.

The polyamide resin (F) tends to have superior adhesiveness to metal compared to the polyolefinic resin. Therefore, the polyamide resin (F) is preferably used as the matrix resin (M) in applications requiring adhesiveness to metal. A type of polyamide resin (F) is not particularly limited. Specific examples thereof include polyamide 6, polyamide 12, polyamide 66, polyamide 11, and aromatic polyamides. Among them, the polyamide 6 and polyamide 12 are particularly preferred.

The amount of reinforced fiber bundles in the UD sheet of the present invention is 1 to 80 parts by mass, preferably 1 to 70 parts by mass, more preferably 3 to 68 parts by mass, and particularly preferably 5 to 65 parts by mass. The amount of matrix resin (M) is 20 to 99 parts by mass, preferably 30 to 99 parts by mass, more preferably 32 to 97 parts by mass, and particularly preferably 35 to 95 parts by mass. These are amounts based on 100 parts by mass in total of the reinforced fiber bundles and matrix resin (M).

A thickness of the UD sheet of the present invention is usually 1 to 500 $\mu$m. A method for producing the UD sheet is not particularly limited and known methods can be used. For example, there is a method for aligning spread fiber bundles and bringing them into contact with the molten matrix resin (M) to obtain a UD sheet. This UD sheet can be used as is, or a laminate that is fabricated by stacking a plurality of sheets and integrating them, can be used. The sheet can also be appropriately cut to form a tape shape. The thickness of the UD sheet is preferably 1 to 500 pm, more preferably 5 to 400 pm, particularly preferably 10 to 300 pm, and most preferably 10 to 250 $\mu$m. For example, sheet or tape-shaped UD sheets can be stacked by methods as press forming, stamp forming, and tape winding forming.

The UD sheet of the present invention is useful, for example, as a UD sheet for tape winding forming. Examples of the tape winding forming include, for example, a method for processing a UD sheet into a tape shape and fusing it on a mandrel while melting a tape surface by a tape winding method combined with a laser fusion method and bring it into contact with the mandrel. The tape can also be fused by heating instead of the laser fusion method. A type of matrix resin (M) in the UD sheet for tape winding forming is not particularly limited, and one or more resins selected from the group consisting of the propylenic resin (G) and polyamide resin (F) described previously are preferably included. The amount of reinforced fiber bundle in this case is preferably 25 to 75 parts by mass, and the amount of matrix resin (M)

is preferably 25 to 75 parts by mass. These are amounts based on 100 parts by mass in total of the reinforced fiber bundles and matrix resin (M). In the case of employing the laser fusion method, a dye (such as carbon black) that absorbs light with a wavelength of 300 to 3000 μm is also preferably added to the UD sheet for tape winding forming.

The UD sheets using the reinforced fiber bundles of the present invention are excellent in terms of mechanical properties and inhibition of generation of fluff, therefore can be used for various applications, and are particularly suitable for applications of automotive parts, electrical and electronic parts, and home and office appliance parts. The tape-shaped UD sheet can also be suitably used, for example, in external reinforcement of various types of containers, such as pipes and pressure vessels.

## Examples

Hereinafter the present invention will be described in detail with reference to Examples, but the present invention is not limited to these Examples.

In the following Examples and Comparative Examples, each physical property was measured or evaluated by the following methods.

### (1) Viscometric property

The kinematic viscosity was measured at 100°C based on ASTM D 445 using a fully automatic viscometer CAV-4 manufactured by CANON INC. (same as the measurement in accordance with to JIS K2283).

The apparent viscosity at 150°C (Brookfield viscosity) was measured and calculated in accordance with JIS K7117-1.

### (2) Content rate of α-olefin unit (mol%)

The α-olefin copolymer was measured by using an ECP500 nuclear magnetic resonance apparatus manufactured by JEOL Ltd., with a mixed solvent of ortho-dichlorobenzene/heavy benzene (80/20 volume%), sample concentration of 55 mg/0.6 mL, measurement temperature of 120°C, observation nucleus of $^{13}C$ (125 MHz), sequence of single-pulse proton decoupling, pulse width of 4.7 psec (45° pulse), repetition time of 5.5 seconds, and cumulative number of 10,000 or more, and reference value for chemical shift of 27.50 ppm, and the content rate of α-olefin unit was determined.

### (3) Weight-average molecular weight (Mw) and molecular weight distribution (Mw/Mn)

The weight-average molecular weights (Mw) and number-average molecular weights (Mn) of the copolymer (A) and acid-modified product (B) thereof were measured by using the following high-speed GPC measuring apparatus. Calibration was performed using monodisperse polystyrene having a known molecular weight as a standard substance. The molecular weight distribution (Mw/Mn) was calculated from the obtained molecular weights.

Measuring equipment: HLC8320GPC manufactured by Tosoh Corporation
Mobile phase: THF (manufactured by Wako Pure Chemical Industries, Ltd., stabilizer-free, liquid chromatography grade)
Column: Two TSKgel Super Multipore HZ-M manufactured by Tosoh Corporation were connected in series.
Sample concentration: 5 mg/mL
Mobile phase flow rate: 0.35 mL/min
Measurement temperature: 40°C
Standard sample for calibration curve: PStQuick MP-M manufactured by Tosoh Corporation

### (4) Melting point and heat of fusion

Using X-DSC-7000 manufactured by Seiko Instruments Inc., a sample of about 8 mg of the copolymer was placed in a simple airtight aluminum sample pan in a DSC cell, and the DSC cell was heated at a rate of 10°C/min from room temperature to 150°C under a nitrogen atmosphere, then held at 150°C for 5 minutes, and then cooled at a rate of 10°C/min to cool the DSC cell to -100°C (cooling process). Subsequently, the DSC cell was held at -100°C for 5 minutes and then raised at a rate of 10°C/min, and a temperature at which the enthalpy curve obtained in the course of temperature rise exhibits the maximum value, was determined as a melting point (Tm), and a sum of endothermic energy amount accompanying melting was determined as a heat of fusion (ΔH). In a case in which no peak was observed or a value of heat of fusion (ΔH) was 1 J/g or less, the melting point (Tm) was deemed not to be observed (n.d.). The melting point (Tm) and heat of fusion (ΔH) were determined in accordance with JIS K7121.

(5) Graft amount of polar group-containing monomer

The graft amount of polar group-containing monomer in thermoplastic resin (C-2) was determined by $^{1}$H-NMR measurement.

(6) B value

A $^{13}$C-NMR spectrum was measured under the conditions of an o-dichlorobenzene/benzene-$d_6$ (4/1 [vol/vol%]) as measurement solvent, measurement temperature of 120°C, spectrum width of 250 ppm, pulse repetition time of 5.5 seconds, and pulse width of 4.7 psec (45° pulse) (100 MHz, JEOL ECX400P), or under the measurement conditions of measurement temperature of 120°C, spectrum width of 250 ppm, pulse repetition time of 5.5 seconds, and pulse width of 5.0 psec (45° pulse) (125 MHz, Bruker Biospin AVANCEIIIcryo-500), and a B value was calculated based on the following formula [1]. The assignment of peaks was carried out with reference to the previously described published literatures.
[Math. 3]

$$B = \frac{P_{OE}}{2P_O \cdot P_E} \quad \cdots [1]$$

wherein in formula [1], $P_E$ represents a molar fraction of ethylene units included, $P_O$ represents a molar fraction of α-olefin units included, and $P_{OE}$ represents a molar fraction of ethylene·α-olefin chains in the total dyad chain.

(7) Unsaturated bond amount

A $^{1}$H-NMR (400 MHz, JEOL ECX400P) spectrum was measured by using o-dichlorobenzene-$d_4$ as measurement solvent under the following measurement conditions: measurement temperature of 120°C, spectrum width of 20 ppm, pulse repetition time of 7.0 seconds, and pulse width of 6.15 psec (45° pulse). The solvent peak (ortho-dichlorobenzene 7.1 ppm) was used as reference of chemical shift, and the amount of unsaturated bonds per 1,000 carbon atoms (pcs/1,000C) was calculated from a ratio of integrated values of the main peak observed at 0 to 3 ppm and the peak derived from the unsaturated bond observed at 4 to 6 ppm.

(8) Acid number of acid-modified product (B)

A sample solution was obtained by dissolving a sample of copolymer weighed precisely in a mixed solvent of mixed xylene and n-butanol (mass ratio thereof = 1:1). The sample solution was then titrated with a pre-determined alcohol solution of N/10 potassium hydroxide (solution in which 5 g of ion-exchange water was added to 7 g of special grade potassium hydroxide to make 1 L (liter) with a grade 1 ethyl alcohol, and its titer = F was determined by N/10 hydrochloric acid with 1% phenolphthalein solution), and the acid number was calculated from the neutralized amount according to the following formula.

Acid number (mgKOH/g)

= (N/10 KOH titration volume (ml) × F × 5.61)/(sample (g) × 0.01)

(9) Weight-average molecular weight (Mw) measurement of propylenic resins (D) and (E)

Molecular weights were determined by the GPC method under the following conditions.
Liquid chromatograph: PL-GPC 220 type high temperature gel permeation chromatograph (with built-in differential refractive index apparatus) manufactured by Polymer Laboratories Ltd.

$$\text{Column: TSKgel GMH}_{HR}\text{-H (S)-HT} \times 2 \text{ and GMH}_{HR}\text{-H (S)} \times 1,$$

connected in series, manufactured by Tosoh Corporation.

Mobile phase medium: 1,2,4-trichlorobenzene (containing 0.025% stabilizer)
Flow rate: 1.0 ml/min.
Measurement temperature: 150°C
Method of preparation of calibration curve: Standard polystyrene samples were used.
Sample concentration: 0.15% (w/v)
Sample solution volume: 500 μl
Standard sample for calibration curve preparation: Monodisperse polystyrene manufactured by Tosoh Corporation
Molecular weight calibration method: Standard calibration method (in terms of polystyrene)

(10) Structural analysis of propylenic resins (D) and (E)

For each propylenic resin, elemental analysis of organic compounds, inductively coupled plasma (ICP) emission analysis, IR (infrared absorption) spectrum analysis, $^{1}$H-NMR measurement, and $^{13}$C-NMR measurement were conducted to evaluate content rates of each monomer structure by contents of elements of the propylenic resins, identification of functional group structures, peak intensities of each assigned proton and carbon. The elemental analysis of organic compounds was performed by using an organic elemental analyzer 2400II (manufactured by PerkinElmer, Inc.). The ICP emission analysis was performed by using an ICPS-7510 (manufactured by SHIMADZU CORPORATION). The IR spectrum analysis was performed by using an IR-Prestige-21 (manufactured by SHIMADZU CORPORATION). The $^{1}$H-NMR measurement and $^{13}$C-NMR measurement were performed by using a JEOL JNM-GX400 spectrometer (manufactured by JEOL Ltd.).

(11) Measurement of carboxylate salt content of propylenic resins (D) and (E)

The carboxylate salt content and the unneutralized carboxylic acid content of each propylenic resin were measured by carrying out the following operations. 0.5 g of propylenic resin was heated and refluxed in 200 ml of toluene, followed by dissolved. This solution was titrated with a 0.1 normal potassium hydroxide-ethanol standard solution, and the acid number was calculated according to the following formula. Phenolphthalein was used as indicator.

$$\text{Acid number} = (5.611 \times A \times F)/B \ (\text{mg-KOH/g})$$

A: Amount of 0.1 normal potassium hydroxide-ethanol standard solution used (ml)
F: Factor of 0.1 normal potassium hydroxide-ethanol standard solution (1.02)
B: Amount of sample taken (0.50g)

Next, the acid number calculated by the method described above was converted to the number of moles of unneutralized carboxylic acid groups by the following formula.

$$\text{Number of moles of unneutralized carboxylic acid groups}$$

$$= \text{acid number} \times 1{,}000/56 \ (\text{mol/g})$$

Then, by using the total number of moles of carboxylic acid groups (mol/g) calculated by separately quantifying carbonyl carbon of the carboxylic acid groups by IR, NMR, and elemental analysis, etc., a conversion rate of the carboxylic acid groups to neutralized salts is calculated from the following formula.

$$\text{Conversion rate \%} = (1-r) \times 100 \ (\%)$$

r: The number of moles of unneutralized carboxylic acid groups/total number of moles of carboxylic acid groups

Production of copolymer (A)

[Production Example 1-1: Synthesis of ethylene/propylene copolymer (a-1)]

A glass polymerization vessel with an inner volume of 1 L that had been sufficiently replaced with nitrogen, was fed with 250 mL of decane, a temperature inside the system was raised to 130°C, the vessel was then continuously fed with ethylene at a flow rate of 25 L/hr, propylene at a flow rate of 75 L/hr and hydrogen at a flow rate 360 L/hr, and the mixture was then stirred at 600 rpm. Next, the vessel was fed with 0.2 mmoles of triisobutylaluminum, and subsequently fed with a mixture of preliminarily having mixed 0.688 mmoles of MMAO and 0.0023 mmoles of [methylphenylmethylene($\eta^5$-cyclopentadienyl) ($\eta^5$-2,7-di-t-butylfluorenyl)]zirconium dichloride in toluene for 15 minutes or longer to then initiate polymerization. Thereafter, continuous supply of ethylene, propylene, and hydrogen was continued, and the polymerization was performed at 130°C for 15 minutes. After completing the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain a propylene-ethylene copolymer (copolymer (a-1)).

[Production Example 1-2: Synthesis of ethylene/propylene copolymer (A-1)]

A glass polymerization vessel with an inner volume of 1 L that had been sufficiently replaced with nitrogen, was fed with 250 mL of decane, a temperature inside the system was raised to 130°C, the vessel was then continuously fed with ethylene at a flow rate of 15 L/hr, propylene at a flow rate of 85 L/hr and hydrogen at a flow rate 360 L/hr, and the mixture was stirred at 600 rpm. Next, the vessel was fed with 0.2 mmoles of triisobutylaluminum, and subsequently fed with a mixture of preliminarily having mixed 1.147 mmoles of MMAO and 0.0038 mmoles of [methylphenylmethylene($\eta^5$-cyclopentadienyl) ($\eta^5$-2,7-di-t-butylfluorenyl)]zirconium dichloride in toluene for 15 minutes or longer to then initiate polymerization. Thereafter, continuous supply of ethylene, propylene, and hydrogen was continued, and the polymerization was performed at 130°C for 15 minutes. After completing the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain a propylene-ethylene copolymer (copolymer (A-1)).

[Production Example 1-3: Synthesis of ethylene/propylene copolymer (A-2)]

A glass polymerization vessel with an inner volume of 1 L that had been sufficiently replaced with nitrogen, was fed with 250 mL of decane, a temperature inside the system was raised to 130°C, the vessel was then continuously fed with ethylene at a flow rate of 12 L/hr, propylene at a flow rate of 88 L/hr and hydrogen at a flow rate 360 L/hr, and the mixture was stirred at 600 rpm. Next, the vessel was fed with 0.2 mmoles of triisobutylaluminum, and subsequently fed with a mixture of preliminarily having mixed 1.794 mmoles of MMAO and 0.0060 mmoles of [methylphenylmethylene($\eta^5$-cyclopentadienyl) ($\eta^5$-2,7-di-t-butylfluorenyl)]zirconium dichloride in toluene for 15 minutes or longer to then initiate polymerization. Thereafter, continuous supply of ethylene, propylene, and hydrogen was continued, and the polymerization was performed at 130°C for 15 minutes. After completing the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain a propylene-ethylene copolymer (copolymer (A-2)).

[Production Example 1-4: Synthesis of ethylene/propylene copolymer (a-2)]

A glass polymerization vessel with an inner volume of 1 L that had been sufficiently replaced with nitrogen, was fed with 250 mL of decane, a temperature inside the system was raised to 50°C, the vessel was then continuously fed with ethylene at a flow rate of 25 L/hr, propylene at a flow rate of 75 L/hr and hydrogen at a flow rate 100 L/hr, and the mixture was stirred at 600 rpm. Next, the vessel was fed with 0.2 mmoles of triisobutylaluminum, and subsequently fed with a mixture of preliminarily having mixed 0.688 mmoles of MMAO and 0.0023 mmoles of [methylphenylmethylene($\eta^5$-cyclopentadienyl) ($\eta^5$-2,7-di-t-butylfluorenyl)]zirconium dichloride in toluene for 15 minutes or longer to then initiate polymerization. Thereafter, continuous supply of ethylene, propylene, and hydrogen was continued, and the polymerization was performed at 130°C for 15 minutes. After completing the polymerization by adding a small amount of isobutyl alcohol into the system, unreacted monomer was purged. The obtained polymer solution was washed with

100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain a propylene-ethylene copolymer (copolymer (a-2)).

[Production Example 1-5: Synthesis of ethylene/propylene copolymer (A-3)]

A glass polymerization vessel with an inner volume of 1 L which had been sufficiently replaced with nitrogen, was fed with 250 mL of decane, a temperature inside the system was raised to 50°C, the vessel was then continuously fed with ethylene at a flow rate of 15 L/hr, propylene at a flow rate of 85 L/hr and hydrogen at a flow rate 100 L/hr, and the mixture was stirred at 600 rpm. Next, the vessel was fed with 0.2 mmoles of triisobutylaluminum, and subsequently fed with a mixture of preliminarily having mixed 1.147 mmoles of MMAO and 0.0038 mmoles of [methylphenylmethylene($\eta^5$-cyclopentadienyl) ($\eta^5$-2,7-di-t-butylfluorenyl)]zirconium dichloride in toluene for 15 minutes or longer to then initiate polymerization. Thereafter, continuous supply of ethylene, propylene, and hydrogen was continued, and the polymerization was performed at 130°C for 15 minutes. After completing the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain a propylene-ethylene copolymer (copolymer (A-3)).

[Production Example 1-6: Synthesis of ethylene/propylene copolymer (A-4)]

A glass polymerization vessel with an inner volume of 1 L that had been sufficiently replaced with nitrogen, was fed with 250 mL of decane, a temperature inside the system was raised to 50°C, the vessel was then continuously fed with ethylene at a flow rate of 12 L/hr, propylene at a flow rate of 88 L/hr and hydrogen at a flow rate 100 L/hr, and the mixture was stirred at 600 rpm. Next, the vessel was fed with 0.2 mmoles of triisobutylaluminum, and subsequently fed with a mixture of preliminarily having mixed 1.794 mmoles of MMAO and 0.0060 mmoles of [methylphenylmethylene($\eta^5$-cyclopentadienyl) ($\eta^5$-2,7-di-t-butylfluorenyl)]zirconium dichloride in toluene for 15 minutes or longer to then initiate polymerization. Thereafter, continuous supply of ethylene, propylene, and hydrogen was continued, and the polymerization was performed at 130°C for 15 minutes. After completing the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain a propylene-ethylene copolymer (copolymer (A-4)).

[Production Example 1-7: Synthesis of ethylene/propylene copolymer (A-5)]

A glass polymerization vessel with an inner volume of 1 L that had been sufficiently replaced with nitrogen, was fed with 250 mL of decane, a temperature inside the system was raised to 50°C, the vessel was then continuously fed with ethylene at a flow rate of 10 L/hr, propylene at a flow rate of 90 L/hr and hydrogen at a flow rate 100 L/hr, and the mixture was stirred at 600 rpm. Next, the vessel was fed with 0.2 mmoles of triisobutylaluminum, and subsequently fed with a mixture of preliminarily having mixed 2.055 mmoles of MMAO and 0.0069 mmoles of [methylphenylmethylene($\eta^5$-cyclopentadienyl) ($\eta^5$-2,7-di-t-butylfluorenyl)]zirconium dichloride in toluene for 15 minutes or longer to then initiate polymerization. Thereafter, continuous supply of ethylene, propylene, and hydrogen was continued, and the polymerization was performed at 130°C for 15 minutes. After completing the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain a propylene-ethylene copolymer (copolymer (A-5)).

[Production Example 1-8: Synthesis of ethylene/propylene copolymer (A-6)]

A glass polymerization vessel with an inner volume of 1 L that had been sufficiently replaced with nitrogen, was fed with 250 mL of decane, a temperature inside the system was raised to 50°C, the vessel was then continuously fed with ethylene at a flow rate of 10 L/hr, propylene at a flow rate of 90 L/hr and hydrogen at a flow rate 100 L/hr, and the mixture was stirred at 600 rpm. Next, the vessel was fed with 0.2 mmoles of triisobutylaluminum, and subsequently fed with a mixture of preliminarily having mixed 2.055 mmoles of MMAO and 0.0069 mmoles of [diphenylmethylene($\eta^5$-3-n-butylcyclopentadienyl)($\eta^5$-2,7-di-t-butylfluorenyl)]zirconium dichloride in toluene for 15 minutes or longer to then initiate polymerization. Thereafter, continuous supply of ethylene, propylene, and hydrogen was continued, and the

polymerization was performed at 130°C for 15 minutes. After completing the polymerization by adding a small amount of isobutyl alcohol into the system, unreacted monomer was purged. The obtained polymer solution was washed with 100 mL of 0.2 mol/l hydrochloric acid three times and then with 100 mL of distilled water three times, dried over magnesium sulfate, and then the solvent was distilled off under reduced pressure. The resulting polymer was dried overnight under reduced pressure at 80°C to obtain a propylene-ethylene copolymer (copolymer (A-6)).

The physical properties of the obtained copolymers (A-1) to (A-6) and (a-1) and (a-2) are shown in Table 1. In Table 1, the content rates of structural units derived from propylene is indicated as "propylene content".

[Table 1]

Table 1

| Production Example | 1-1 | 1-2 | 1-3 | 1-4 | 1-5 | 1-6 | 1-7 | 1-8 |
|---|---|---|---|---|---|---|---|---|
| Copolymer | (a-1) | (A-1) | (A-2) | (a-2) | (A-3) | (A-4) | (A-5) | (A-6) |
| Kinematic viscosity at 100°C ($mm^2/s$) | 40 | 40 | 40 | 2,000 | 2,000 | 2,000 | 2,500 | 2,500 |
| $\alpha$-olefin content (mol%) | 48 | 68 | 76 | 52 | 70 | 76 | 79 | 80 |
| Weight-average molecular weight (Mw) | 2,700 | 2,400 | 2,500 | 12,500 | 13,000 | 13,100 | 14,200 | 14,300 |
| Molecular weight distribution (Mw/Mn) | 1.5 | 1.5 | 1.5 | 1.9 | 2.1 | 2.1 | 2.0 | 2.0 |
| B value | 1.2 | 1.1 | 1.1 | 1.2 | | | 1.1 | 1.1 |
| Amount of unsaturated bond | <0.1 | <0.1 | <0.1 | <0.1 | | | <0.1 | <0.1 |
| Melting point | n. d. | n. d. | n. d. | n. d. | | | n. d. | n. d. |

Production of acid-modified product (B)

As described hereinbelow, by using the ethylene·propylene copolymers (A-1), (A-2), (A-5), and (A-6), and the ethylene·propylene copolymers (a-1) and (a-2), which were obtained in the aforementioned Production Examples 1-1 to 1-4, 1-7 and 1-8, graft modification was carried out with grafting components to obtain acid-modified ethylene·propylene copolymers (B-1) to (B-4) and acid-modified ethylene·propylene copolymers (b-1) and (b-2).

[Production Example 2-1: Synthesis of acid-modified ethylene·propylene copolymer (b-1)]

A glass 200-mL reactor with a stirrer, which equipped with a nitrogen inlet pipe, a water-cooled condenser, a thermometer, and two dropping funnels, was charged with 100 g of the copolymer (a-1) obtained in Production Example 1-1, and a temperature inside the system was raised, nitrogen bubbling was started at 120°C, then the temperature was kept at 160°C. Then, 13 g of maleic anhydride (having heated to around 70°C to be formed into liquid) and 2.6 g of di-t-butyl peroxide, which had been preliminarily filled in each of two dropping funnels, were supplied over 8 hours to undergo reaction over 1 hour after completion of the supply. Next, the system temperature was further raised to 175°C, depressurized, and then kept under reduced pressure for 1 hour while gradually ventilating nitrogen by using a vacuum pump to remove impurities (unreacted maleic anhydride and dit-butyl peroxide decomposition products). An acid-modified ethylene·propylene copolymer (b-1) was obtained by this operation.

[Production Example 2-2; Synthesis of acid-modified ethylene·propylene copolymer (B-1)]

A reaction was carried out in the same manner as in Production Example 2-1, except that the copolymer (a-1) was changed to the copolymer (A-1) obtained in Production Example 1-2, and impurities were removed in the same manner. An acid-modified ethylene·propylene copolymer (B-1) was obtained by this operation.

[Production Example 2-3; Synthesis of acid-modified ethylene·propylene copolymer (B-2)]

A reaction was carried out in the same manner as in Production Example 2-1, except that the copolymer (a-1) was changed to the copolymer (A-2) obtained in Production Example 1-3, and impurities were removed in the same

manner. An acid-modified ethylene·propylene copolymer (B-2) was obtained by this operation.

[Production Example 2-4; Synthesis of acid-modified ethylene·propylene copolymer (b-2)]

A reaction was carried out in the same manner as in Production Example 2-1, except that the copolymer (a-1) was changed to the copolymer (a-2) obtained in Production Example 1-4 and the amounts of maleic anhydride and di-t-butyl peroxide were changed to 3.8 g and 0.8 g, respectively, and they were added over 3 hours, and impurities were removed in the same manner. An acid-modified ethylene·propylene copolymer (b-2) was obtained by this operation.

[Production Example 2-5; Synthesis of acid-modified ethylene·propylene copolymer (B-3)]

A reaction was carried out in the same manner as in Production Example 2-4, except that the copolymer (a-2) was changed to the copolymer (A-5) obtained in Production Example 1-7, and impurities were removed in the same manner. An acid-modified ethylene·propylene copolymer (B-3) was obtained by this operation.

[Production Example 2-6; Synthesis of acid-modified ethylene·propylene copolymer (B-4)]

A reaction was carried out in the same manner as in Production Example 2-4, except that the copolymer (a-2) was changed to the copolymer (A-6) obtained in Production Example 1-8, and impurities were removed in the same manner. An acid-modified ethylene·propylene copolymer (B-4) was obtained by this operation.

The physical properties of the obtained copolymers (B-1) to (B-4) and copolymers (b-1) and (b-2) are shown in Table 2.

[Table 2]

Table 2

| Production Example | 2-1 | 2-2 | 2-3 | 2-4 | 2-5 | 2-6 |
|---|---|---|---|---|---|---|
| Acid-modified product | Acid-modified ethylene·propylen copolymer (b-1) | Acid-modified ethylene·propylen copolymer (B-1) | Acid-modified ethylene·propylen copolymer (B-2) | Acid-modified ethylene·propylen copolymer (b-2) | Acid-modified ethylene·propylen copolymer (B-3) | Acid-modified ethylene·propylen copolymer (B-4) |
| component (A) used for modification | (a-1) | (A-1) | (A-2) | (a-2) | (A-5) | (A-6) |
| Acid number | 120 | 120 | 120 | 35 | 35 | 35 |
| Apparent viscosity at 150°C (mPa·s) | 50 | 40 | 40 | 680 | 710 | 720 |
| Weight-average molecular weight (Mw) | 3500 | 3000 | 2900 | 17200 | 17500 | 17500 |
| Molecular weight distribution (Mw/Mn) | 1.8 | 1.7 | 1.7 | 2.0 | 2.0 | 2.0 |

Production of thermoplastic resin (C)

[Production Example 3-1: Synthesis of propylene/1-butene copolymer (thermoplastic resin (C-1)]

A 2-liter autoclave, an inside of which was sufficiently replaced with nitrogen, was charged with 900 ml of hexane and 90 g of 1-butene, added with 1 mmol of triisobutylaluminum, raised to a temperature of 70°C, then supplied with propylene to bring the total pressure to 7 $kg/cm^2G$, added with 0.30 mmoles of methylaluminoxane and 0.001 mmoles of rac-dimethylsilylene-bis{1-(2-methyl-4-phenylindenyl)}zirconium dichloride in terms of Zr atom, and continuously supplied with propylene to carry out polymerization for 30 minutes while keeping the total pressure at 7 $kg/cm^2G$. After the polymerization, the polymer was degassed and collected in a large volume of methanol, and dried under reduced pressure at 110°C for 12 hours. The obtained propylene/1-butene copolymer (thermoplastic resin C-1) had a melting point of 78.3°C, a heat of fusion of 29.2 J/g, Mw of 330,000, and the propylene content of 67.2 mol%.

[Production Example 3-2: Synthesis of maleic anhydride-modified propylene/1-butene copolymer (thermoplastic resin (C-2)]

3 kg of the above propylene/1-butene copolymer (thermoplastic resin A-1) was added to 10 L of toluene, the mixture was raised to a temperature of 145°C under a nitrogen atmosphere, and the copolymer was dissolved in toluene. Furthermore, the system was fed with 382 g of maleic anhydride and 175 g of di-tert-butyl peroxide over a period of 4 hours under stirring and continuously stirred at 145°C for 2 hours. After cooling, a large amount of acetone was charged to precipitate a modified copolymer, which was filtered, washed with acetone, and vacuum dried. The resulting maleic anhydride-modified propylene/1-butene copolymer (thermoplastic resin (C-2)) had a melting point of 75.8°C, a heat of fusion of 28.6 J/g, and Mw of 110,000, and the graft amount of maleic anhydride was 1 part by mass based on 100 parts by mass of the modified copolymer.

[Example 1]

An adhesive varnish was prepared by dissolving 90 g of thermoplastic resin (C-2) and 10 g of copolymer (A-1) in 400 g of toluene. A surface of hard aluminum (30 μm thick) was coated with the prepared adhesive varnish and the coated aluminum was dried at 200°C for 1 minute to obtain a coating film with a dry film thickness of 20 μm. The obtained hard aluminum with the coating film (adhesive layer) was compressed and bonded to a polypropylene (PP) adherend (25 × 50 × 2 mm, manufactured by Test Piece Co., Ltd.) by using a heat sealer (TP-701-B, manufactured by TESTER SANGYO CO., LTD.) under the conditions of 110°C and 0.3 MPa for 20 seconds. The test piece stood overnight at room temperature, then made a cut with 1cm width in strip form with a cutter, and a peel strength of a test piece with the aluminum being peeled off was measured under the conditions of 180° and 100 mm/min by using an autograph (AGS-500B manufactured by Shimadzu Corporation).

[Example 2]

The peel strength was measured in the same manner as in Example 1, except that the copolymer (A-1) was changed to copolymer (A-2).

[Comparative Example 1]

The peel strength was measured in the same manner as in Example 1, except that 90 g of thermoplastic resin (C-2) and 10 g of copolymer (A-1) were changed to 100 g of thermoplastic resin (C-2).

[Comparative Example 2]

The peel strength was measured in the same manner as in Example 1, except that the copolymer (A-1) was changed to copolymer (a-1).

Table 3 shows the evaluation results of Examples 1 and 2 and Comparative Examples 1 and 2.

[Table 3]

Table 3

| | | Example 1 | Example 2 | Comparative Example 1 | Comparative Example 2 |
|---|---|---|---|---|---|
| Composition | Thermoplastic resin (C) | C-2 | C-2 | C-2 | C-2 |
| | Content (% by mass) | 80 | 80 | 100 | 80 |
| | Copolymer (A) | A-1 | A-2 | - | a-1 |
| | Content (% by mass) | 20 | 20 | 0 | 20 |
| Adhesiveness | Adherend | PP | PP | PP | PP |
| | Compression and bonding temperature (°C) | 110 | 110 | 110 | 110 |
| | Peel strength at 180° (N/cm) | 15.4 | 13.6 | 4.9 | 10.2 |

Examples 1 and 2 using the copolymers (A-1) and (A-2) each, having a content rate of structural units derived from an $\alpha$-olefin having 3 or more carbon atoms in the range of 60 to 85 mol%, demonstrated superior peel strength compared to Comparative Example 2 in which the copolymer (a-1) was used instead of the copolymers.

[Example 3]

The peel strength was measured in the same manner as in Example 1, except that the copolymer (A-1) was changed to copolymer (A-3).

[Example 4]

The peel strength was measured in the same manner as in Example 1, except that the copolymer (A-1) was changed to copolymer (A-4).

[Example 5]

The peel strength was measured in the same manner as in Example 1, except that the copolymer (A-1) was changed to copolymer (A-5).

[Example 6]

The peel strength was measured in the same manner as in Example 1, except that the copolymer (A-1) was changed to copolymer (A-6).

[Comparative Example 3]

The peel strength was measured in the same manner as in Example 1, except that the copolymer (A-1) was changed to copolymer (a-2).
Table 4 shows the evaluation results of Examples 3 to 6 and Comparative Examples 1 and 3.

[Table 4]

Table 4

| | | Example 3 | Example 4 | Example 5 | Example 6 | Comparative Example 1 | Comparative Example 3 |
|---|---|---|---|---|---|---|---|
| Composition | Thermoplastic resin (C) | C-2 | C-2 | C-2 | C-2 | C-2 | C-2 |
| | Content (% by mass) | 80 | 80 | 80 | 80 | 100 | 80 |
| | Copolymer (A) | A-3 | A-4 | A-5 | A-6 | - | a-2 |
| | Content (% by mass) | 20 | 20 | 20 | 20 | 0 | 20 |
| Adhesiveness | Adherend | PP | PP | PP | PP | PP | PP |
| | Compression and bonding temperature (°C) | 110 | 110 | 110 | 110 | 110 | 110 |
| | Peel strength at 180° (N/cm) | 16.8 | 17.8 | 19.5 | 19.3 | 4.9 | 16.1 |

Examples 3 to 6 using the copolymers (A-3) to (A-6) each, having a content rate of structural units derived from an $\alpha$-olefin having 3 or more carbon atoms in the range of 60 to 85 mol%, demonstrated superior peel strength compared to Comparative Example 3 in which the copolymer (a-2) was used instead of the copolymers.

[Comparative Example 4: Production of sizing agent for reinforced fibers (emulsion X1)]

To 100 parts by mass of the acid-modified ethylene-propylene copolymer (b-1) obtained in Production Example 2-1, was added 25 parts by mass of a surfactant (polyoxyethylene alkyl ether HLB=13.5), and the mixture was kneaded at 80°C. To this mixture were added 10 parts by mass of morpholine and 140 parts by mass of distilled water, and the mixture was stirred at 80°C and 12,000 rpm with a homomixer to obtain emulsion X1. The solid concentration of the obtained emulsion X1 was 45%.
Reinforced fiber bundles were obtained in the same manner as in the example 1-1 of WO2017/183672, except that the emulsion X1 was used.

[Example 7: Production of sizing agent for reinforced fibers (emulsion X2)]

Emulsion X2 was obtained in the same manner as in Comparative Example 4, except that the acid-modified ethylene-propylene copolymer (B-1) obtained in Production Example 2-2 was used. The solid concentration of the obtained emulsion X2 was 45%.
Reinforced fiber bundles were obtained in the same manner as in the example 1-1 of WO2017/183672, except that the emulsion X2 was used.

[Example 8: Production of sizing agent for reinforced fibers (emulsion X3)]

Emulsion X3 was obtained in the same manner as in Comparative Example 4, except that the acid-modified ethylene-propylene copolymer (B-2) obtained in Production Example 2-3 was used. The solid concentration of the obtained emulsion X3 was 45%.
Reinforced fiber bundles were obtained in the same manner as in the example 1-1 of WO2017/183672, except that the emulsion X3 was used.

[Comparative Example 5: Production of sizing agent for reinforced fibers (emulsion X4)]

Emulsion X4 was obtained in the same manner as in Comparative Example 4, except that the acid-modified ethylene-propylene copolymer (b-2) obtained in Production Example 2-4 was used. The solid concentration of the obtained emulsion X4 was 45%.
Reinforced fiber bundles were obtained in the same manner as in the example 1-1 of WO2017/183672, except that the emulsion X4 was used.

[Example 9; Production of sizing agent for reinforced fibers (emulsion X5)]

Emulsion X5 was obtained in the same manner as in Comparative Example 4, except that the acid-modified ethylene-propylene copolymer (B-3) obtained in Production Example 2-5 was used. The solid concentration of the obtained emulsion X5 was 45%.
Reinforced fiber bundles were obtained in the same manner as in the example 1-1 of WO2017/183672, except that the emulsion X5 was used.

[Example 10: Production of sizing agent for reinforced fibers (emulsion X6)]

Emulsion X6 was obtained in the same manner as in Comparative Example 4, except that the acid-modified ethylene-propylene copolymer (B-4) obtained in Production Example 2-6 was used. The solid concentration of the obtained emulsion X6 was 45%.
Reinforced fiber bundles were obtained in the same manner as in the example 1-1 of WO2017/183672, except that the emulsion X6 was used.

[Comparative Example 6: Production of sizing agent for reinforced fibers (emulsion X7)]

100 parts by mass of a propylene-butene copolymer having Shore D hardness of 52 and a weight-average molecular weight (Mw) of 350,000 as measured by GPC as the propylenic resin (D), 10 parts by mass of a maleic

anhydride-modified propylenic polymer (weight-average molecular weight (Mw) of 20,000, acid number 45 mg-KOH/g, maleic anhydride content rate of 4% by mass, and melting point 140°C) as propylenic resin (E), and 3 parts by mass of potassium oleate as a surfactant, were mixed. This mixture was fed from a hopper of a twin-screw extruder (PCM-30, L/D=40, manufactured by Ikegai Iron Works Co., Ltd.) at a rate of 3,000 g/hour, and a 20% potassium hydroxide aqueous solution was continuously fed at a rate of 90 g/hour from a feed port disposed in a vent section of the extruder, and the mixture was continuously extruded at a heating temperature of 210°C. The extruded resin mixture was cooled to 110°C in a jacketed static mixer installed at an extruder port, and further charged into hot water at 80°C to obtain emulsion X7. The solid concentration of the resulting the emulsion X7 was 45%.

Note, however, the above maleic anhydride-modified propylenic polymer is a modified resin obtained by having mixed 96 parts by mass of propylene -butene copolymer, 4 parts by mass of maleic anhydride, and 0.4 parts by mass of a polymerization initiator (trade name: Perhexa 25B, manufactured by Nippon Yushi Inc.), and then having undergone modification at a heating temperature of 160°C for 2 hours.

Reinforced fiber bundles were obtained in the same manner as in the example 1-1 of WO2017/183672, except that the emulsion X7 was used.

[Example 11: Production of sizing agent for reinforced fibers (emulsion X8)]

Emulsion X8 was obtained by mixing 50 parts by mass of emulsion X3 and 50 parts by mass of emulsion X7.

Reinforced fiber bundles were obtained in the same manner as in the example 1-1 of WO2017/183672, except that the emulsion X8 was used.

For each reinforced fiber bundle obtained in Examples 7 to 11 and Comparative Examples 4 to 6 above, the amount of sizing agent adhered was measured according to the following methods, and interfacial shear strength (IFSS) and fluff were evaluated by the methods.

Table 5 shows the compositions of the sizing agents for reinforced fibers (emulsions) and the evaluation results of the reinforced fiber bundles.

It is noted that the contents shown in Table 5 indicate the content rates (% by mass) of each component based on the total content of acid-modified product, propylenic resin (D) and propylenic resin (E).

<Measurement of amount of sizing agent adhered to reinforced fiber bundle>

Approximately 5 g of reinforced fiber bundles to which the sizing agent adhered was sampled and dried at 120°C for 3 hours to measure its weight $W_1$ (g). The bundles were then heated at 450°C for 15 minutes in a nitrogen atmosphere, subsequently cooled to room temperature to measure its weight $W_2$ (g). The amount adhered was calculated by using $W_1$ (g) and $W_2$ (g).

$$\text{Amount adhered} = [(W_1-W_2)/W_2] \times 100\ (\%\ \text{by mass})$$

<Fluff evaluation test>

A reinforced fiber bundle was made a cut with 10 mm along a fiber direction by using a blade, and was torn by hand along the fiber direction. Then, the number of fluff that can be visually observed was counted from the tip of the incision upon tearing to a point 15 cm away from the tip. This procedure was repeated three times, and an average of the counts was used as the number of fluff generated. The number of fluff generated in Comparative Example 3 was used as standard, and the number of fluff generated in each Example was evaluated based on the following criteria.

"AA": Less than 1/5 of the number of fluff generated in Comparative Example 3.
"BB": 1/5 or greater and less than 1/2 of the number of fluff generated in Comparative Example 3.
"CC": 1/2 or greater of the number of fluff generated in Comparative Example 3.

<Interfacial shear strength (IFSS)>

Interfacial shear strength (fragmentation method) between a reinforced fiber bundle and a matrix resin was evaluated and measured by the following method. Two 100 μm thick resin films (20 cm × 20 cm square) composed of the matrix resin (M) were prepared. On one resin film, one single fiber with a length of 20 cm taken from the reinforced fiber bundle was arranged in a straight line, and another resin film was arranged on top of the single fiber so that the single fiber was sandwiched. This was pressed under pressure at 200°C for 3 minutes at a pressure of 4 MPa to fabricate

a sample in which the single fiber was embedded in the resins. This sample was further cut to obtain a test piece with a thickness of 0.2 mm, width of 5 mm, and length of 30 mm, with the single fiber embedded in the center. Five test pieces in total were further prepared in the same manner.

Tensile tests were conducted on these five test pieces by using an ordinary tensile test fixture under the conditions of a test length of 14 mm and a strain rate of 0.3 mm/min, and then an average fiber length at break (l) when fiber breakage ceased to occur, was measured by using a transmission optical microscope. Interfacial shear strength ($\tau$) (MPa) by the fragmentation method was obtained from the following equation.

$$\tau = (\sigma f \cdot d)/2Lc,\ Lc = (4/3) \cdot L$$

wherein Lc is the critical fiber length, L is an average value of final fiber lengths at break ($\mu$m), of is tensile strength of fiber (MPa), and d is a fiber diameter (pm). (Reference literature: Osawa et al., Journal of the Society of Fiber Science and Technology, Vol. 33, No. 1 (1977)).

of was obtained by the following method, assuming that the tensile strength distribution of the fiber follows a Weibull distribution. Namely, by using the single fiber, relation between a sample length and average tensile strength was determined from the average tensile strength obtained by samples with lengths of 5 mm, 25 mm, and 50 mm by using the least-squares method to then calculate the average tensile strength at a sample length of Lc.

The interfacial shear strength (IFSS) was measured according to the test method described above and evaluated according to the following criteria.

"AA": 22 MPa or more

"BB": 20 MPa or more and less than 22 MPa

"CC": 17 MPa or more and less than 20 MPa

"DD": Less than 17 MPa

[Table 5]

Table 5

| | | Example | | | | | Comparative Example | | |
|---|---|---|---|---|---|---|---|---|---|
| | | 7 | 8 | 9 | 10 | 11 | 4 | 5 | 6 |
| Emulsion | | X2 | X3 | X5 | X6 | X8 | X1 | X4 | X7 |
| Acid-modified product | Content (% by mass) | 100 | 100 | 100 | 100 | 50 | 100 | 100 | 0 |
| Propylenic resin (D) | Content (% by mass) | 0 | 0 | 0 | 0 | 45 | 0 | 0 | 90 |
| Propylenic resin (E) | Content (% by mass) | 0 | 0 | 0 | 0 | 5 | 0 | 0 | 10 |
| Amount adhered (% by mass) | | 0.78 | 0.78 | 0.86 | 0.88 | 0.85 | 0.76 | 0.82 | 0.87 |
| Fluff | | AA | AA | BB | BB | BB | AA | BB | - |
| IFSS | | BB | BB | BB | BB | AA | CC | CC | CC |

Industrial Applicability

The resin composition 1 of the present invention can be suitably used for coating agent applications and hot melt adhesive applications.

The resin composition 2 of the present invention can be suitably used for sizing agents for reinforced fibers applications.

The UD sheets using the reinforced fiber bundles of the present invention are excellent in terms of mechanical properties and inhibition of generation of fluff, therefore can be used for various applications and are particularly suitable

for applications of automotive parts, electrical and electronic parts, and home and office appliance parts. The tape-shaped UD sheets can also be suitably used, for example, in external reinforcement of various types of containers, such as pipes and pressure vessels.

## Claims

1. A resin composition comprising at least one resin (S) selected from the group consisting of an ethylene·α-olefin copolymer (A) comprising a structural unit derived from an α-olefin having 3 or more carbon atoms and satisfying the following requirements (a-1) to (a-3), and an acid-modified product (B) of the ethylene·α-olefin copolymer (A):

   (a-1) a kinematic viscosity at 100°C is 10 to 5,000 $mm^2/s$,
   (a-2) a content rate of a structural unit derived from an α-olefin having 3 or more carbon atoms is 60 to 85 mol%, and
   (a-3) a molecular weight distribution (Mw/Mn) in molecular weight in terms of polystyrene as measured by gel permeation chromatography (GPC) is 2.5 or less.

2. The resin composition according to claim 1, comprising

   0.01 to 80% by mass of at least one resin (S) selected from the group consisting of the ethylene·α-olefin copolymer (A) and the acid-modified product (B), and
   20 to 99.99% by mass of a thermoplastic resin (C) having a weight-average molecular weight (Mw) in terms of polystyrene as measured by gel permeation chromatography (GPC) of $1 \times 10^4$ or higher,
   wherein the ethylene·α-olefin copolymer (A) further satisfies (a-4) below:
   (a-4) a weight-average molecular weight (Mw) in terms of polystyrene as measured by gel permeation chromatography (GPC) is 1,000 to 30,000.

3. The resin composition according to claim 2, wherein the thermoplastic resin (C) has a heat of fusion in a range of 0 to 50 J/g as measured according to JIS K 7122.

4. The resin composition according to claim 2, wherein the thermoplastic resin (C) is one or more selected from the group consisting of (c-1) and (c-2) below:

   (c-1) a non-modified polymer comprising a constituent unit derived from an α-olefin having 2 to 20 carbon atoms, and
   (c-2) a modified polymer comprising a constituent unit derived from an α-olefin having 2 to 20 carbon atoms, which is partly or totally graft modified with a polar group-containing monomer.

5. The resin composition according to claim 4, wherein (c-2) above is (c-2') below:
   (c-2') a modified polymer comprising a constituent unit derived from an α-olefin having 2 to 20 carbon atoms, which is partly or totally graft modified with a polar group-containing monomer, and comprising 0.1 to 15 parts by mass of a constituent unit derived from the polar group-containing monomer based on 100 parts by mass of the modified polymer.

6. The resin composition according to claim 4, wherein (c-1) above is (c-1') below and (c-2) above is (c-2'') below:

   (c-1') a propylenic polymer comprising 50 to 100 mol% of a constituent unit derived from propylene and 0 to 50 mol% of a constituent unit derived from an α-olefin having 2 to 20 carbon atoms excluding propylene, based on 100 mol% in total of constituent units derived from propylene and the α-olefin having 2 to 20 carbon atoms,
   (c-2'') a modified polymer which is partly or totally graft modified of a propylenic polymer comprising 50 to 100 mol% of a constituent unit derived from propylene and 0 to 50 mol% of a constituent unit derived from an α-olefin having 2 to 20 carbon atoms excluding propylene, based on 100 mol% in total of constituent units derived from propylene and the α-olefin having 2 to 20 carbon atoms with a polar group-containing monomer, and comprising 0.1 to 15 parts by mass of a constituent unit derived from the polar group-containing monomer based on 100 parts by mass of the modified polymer.

7. The resin composition according to claim 4, wherein the polar group-containing monomer is one or more selected from an unsaturated carboxylic acid and an unsaturated carboxylic anhydride.

**8.** The resin composition according to claim 2, wherein the resin (S) comprises an ethylene·α-olefin copolymer (A) having a kinematic viscosity at 100°C of 10 $mm^2/s$ or more and less than 600 $mm^2/s$.

**9.** The resin composition according to claim 2, wherein the resin (S) comprises an ethylene·α-olefin copolymer (A) having a kinematic viscosity at 100°C of 600 to 3,500 $mm^2/s$.

**10.** A coating agent comprising the resin composition according to any one of claims 2 to 9.

**11.** The coating agent according to claim 10, which is a primer.

**12.** The coating agent according to claim 10, which is a paint.

**13.** A hot melt adhesive comprising the resin composition according to any one of claims 2 to 9.

**14.** The resin composition according to claim 1, which is a water dispersion composition comprising 0.01 to 50% by mass of at least one resin (S) selected from the group consisting of the ethylene·α-olefin copolymer (A) and the acid-modified product (B).

**15.** The resin composition according to claim 14, wherein the ethylene·α-olefin copolymer (A) further satisfies one or more of the following requirements (a-5) to (a-8):

(a-5) a weight-average molecular weight (Mw) in terms of polystyrene as measured by gel permeation chromatography (GPC) is 1,000 to 50,000,
(a-6) a B value represented by the following formula [1] is 1.1 or more:
[Math. 1]

$$B = \frac{P_{OE}}{2P_O \cdot P_E} \quad \cdots [1]$$

wherein $P_E$ represents a molar fraction of ethylene units included, $P_O$ represents a molar fraction of α-olefin units included, and $P_{OE}$ represents a molar fraction of ethylene·α-olefin chains of a total dyad chain,
(a-7) the amount of unsaturated bond measured by $^1$H-NMR is less than 0.5 per 1,000 carbon atoms,
(a-8) no melting point is observed.

**16.** The resin composition according to claim 14, wherein the acid-modified product (B) satisfies one or more of the following requirements (b-1) to (b-4):

(b-1) an acid number is 1 to 300 mg KOH/g,
(b-2) an apparent viscosity at 150°C is 1 to 1,000 cPs,
(b-3) a weight-average molecular weight (Mw) in terms of polystyrene as measured by gel permeation chromatography (GPC) is 1,000 to 50,000,
(b-4) a molecular weight distribution (Mw/Mn) in molecular weight in terms of polystyrene as measured by gel permeation chromatography (GPC) is 2.5 or less.

**17.** The resin composition according to claim 14, wherein the acid-modified product (B) is a copolymer modified the ethylene·α-olefin copolymer (A) with at least one compound selected from the group consisting of maleic acid and maleic anhydride.

**18.** The resin composition according to claim 14, further comprising a propylenic resin (D) and a propylenic resin (E) comprising at least a carboxylate salt bonded to the polymeric chain,

wherein the propylenic resin (D) comprises 70 to 100% by mass of a component (D-1) having a weight-average molecular weight (Mw) of 150,000 or higher and 0 to 30% by mass of a component (D-2) having a weight-average molecular weight (Mw) of lower than 150,000, based on 100% by mass in total of the components (D-1) and (D-2),
the weight-average molecular weight (Mw) of the propylenic resin (D) is higher than the weight-average molecular weight (Mw) of the propylenic resin (E),
the content of the propylenic resin (E) is 3 to 50 parts by mass based on 100 parts by mass of the propylenic resin (D), and
a ratio of the total content of the ethylene·α-olefin copolymer (A) and the acid-modified product (B) based on the total content of the ethylene·α-olefin copolymer (A), the acid-modified product (B), the propylenic resin (D), and the propylenic resin (E), is 50% by mass or more and less than 100% by mass.

**19.** The resin composition according to claim 14, wherein an α-olefin of the ethylene·α-olefin copolymer (A) is propylene.

**20.** A sizing agent for reinforced fibers, comprising the resin composition according to any of claims 14 to 19, which is used for a membrane article.

**21.** A sizing agent for reinforced fibers, comprising the resin composition according to any of claims 14 to 19, which is used for a thin film article in which reinforced fibers are unidirectionally oriented.

**22.** The sizing agent for reinforced fibers according to claim 20, wherein the reinforced fibers are carbon fibers.

**23.** A paint comprising the resin composition according to any of claims 14 to 19.

**24.** A primer comprising the resin composition according to any of claims 14 to 19.

**25.** An adhesive comprising the resin composition according to any of claims 14 to 19.

**26.** A reinforced fiber bundle comprising:

a resin (S) in the resin composition according to claim 1; and
reinforced fibers bundled together by the resin (S) in the resin composition adhered thereto,
wherein the reinforced fiber bundle is used for a thin film article in which the reinforced fibers are unidirectionally oriented.

**27.** The reinforced fiber bundle according to claim 26, wherein the acid-modified product (B) is a copolymer modified the ethylene·α-olefin copolymer (A) with at least one compound selected from the group consisting of maleic acid and maleic anhydride.

**28.** The reinforced fiber bundle according to claim 26, further comprising a propylenic resin (D) and a propylenic resin (E) comprising at least a carboxylic acid salt bonded to the polymeric chain,

wherein the propylenic resin (D) comprises 70 to 100% by mass of a component (D-1) having a weight-average molecular weight (Mw) of 150,000 or higher and 0 to 30% by mass of a component (D-2) having a weight-average molecular weight (Mw) of lower than 150,000, based on 100% by mass of the components (D-1) and (D-2),
the weight-average molecular weight (Mw) of the propylenic resin (D) is higher than the weight-average molecular weight (Mw) of the propylenic resin (E),
the content of the propylenic resin (E) is 3 to 50 parts by mass based on 100 parts by mass of the propylenic resin (D), and
a ratio of the total content of the ethylene·α-olefin copolymer (A) and the acid-modified product (B) based on the total content of the ethylene·α-olefin copolymer (A), the acid-modified product (B), the propylenic resin (D), and the propylenic resin (E), is 50% by mass or more and less than 100% by mass.

**29.** The reinforced fiber bundle according to claim 26, wherein the amount of one or more resins adhered, selected from the group consisting of the ethylene·α-olefin copolymer (A) and the acid-modified product (B) in 100% by mass of the reinforced fiber bundle, is 0.3 to 5.0% by mass.

**30.** The reinforced fiber bundle according to claim 26, wherein an α-olefin of the ethylene·α-olefin copolymer (A) is propylene.

**31.** The reinforced fiber bundle according to claim 26, wherein the reinforced fiber is a carbon fiber.

**32.** A thin film article, comprising 1 to 80 parts by mass of the reinforced fiber bundle according to any of claims 26 to 31, and 20 to 99 parts by mass of a matrix resin (M) that is thermoplastic, based on 100 parts by mass in total of the reinforced fiber bundle and the matrix resin (M), wherein the reinforced fibers are unidirectionally oriented.

**33.** The thin film article according to claim 32, wherein the matrix resin (M) is a propylenic resin (G).

**34.** The thin film article according to claim 32, wherein the reinforced fiber is a carbon fiber.

**35.** A method for producing the resin composition according to any of claims 1 to 9 and claims 14 to 19, comprising a step of producing an ethylene·α-olefin copolymer (A) comprising a structural unit derived from an α-olefin having 3 or more carbon atoms and satisfying requirements (a-1) to (a-3) below, by a method (α) below:

(a-1) a kinematic viscosity at 100°C is 10 to 5,000 $mm^2/s$,
(a-2) a content rate of a structural unit derived from an α-olefin having 3 or more carbon atoms is 60 to 85 mol%,
(a-3) a molecular weight distribution (Mw/Mn) in molecular weight in terms of polystyrene as measured by gel permeation chromatography (GPC) is 2.5 or less, and
a method (α): a method including a step of subjecting an α-olefin to liquid phase polymerization in the presence of a catalyst system comprising a bridged metallocene compound (P) represented by formula [II] below and at least one compound (Q) selected from the group consisting of an organometallic compound (Q-1), an organoaluminum oxy compound (Q-2), and a compound (Q-3) that reacts with the bridged metallocene compound (P) to form an ion pair.

[Chem. 1]

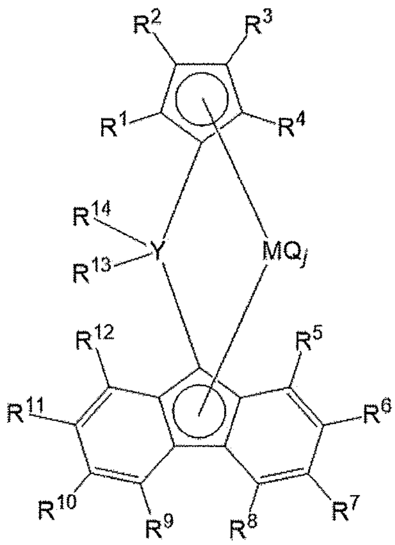

· · · [I I]

wherein $R^1$, $R^2$, $R^3$, $R^4$, $R^5$, $R^8$, $R^9$ and $R^{12}$ are each independently a hydrogen atom, a hydrocarbon group or a silicon-containing hydrocarbon group, a plurality of adjacent groups are optionally linked together to form a ring structure, $R^6$ and $R^{11}$ are identical to each other and are each a hydrogen atom, a hydrocarbon group or a silicon-containing hydrocarbon group, $R^7$ and $R^{10}$ are identical to each other and are each a hydrogen atom, a hydrocarbon group or a silicon-containing hydrocarbon group, $R^6$ and $R^7$ are optionally bonded with a hydrocarbon having 2 to 3 carbon atoms to form a ring structure, and $R^{10}$ and $R^{11}$ are optionally bonded with a hydrocarbon having 2 to 3 carbon atoms to form a ring structure, $R^6$, $R^7$, $R^{10}$ and $R^{11}$ are not simultaneously hydrogen atoms, Y is a carbon atom or a silicon atom, $R^{13}$ and $R^{14}$ are each independently a hydrogen atom, a hydrocarbon group or a silicon-containing hydrocarbon group and are optionally linked together to form a ring structure, M is Ti, Zr or Hf,
Q is independently a halogen atom, a hydrocarbon group, an anionic ligand, or a neutral ligand capable of coordinating to a lone electron pair, and j is an integer of 1 to 4.

**36.** The method for producing the resin composition according to claim 35, wherein either or both of substituents $R^{13}$ and $R^{14}$ of the bridged metallocene compound (P) represented by the formula [II] are aryl groups.

**37.** The method for producing the resin composition according to claim 35, wherein both substituents $R^{13}$ and $R^{14}$ of the bridged metallocene compound (P) represented by formula [II] above are aryl groups, and either one of substituents $R^2$ and $R^3$ is a saturated hydrocarbon group having 4 carbon atoms.

## INTERNATIONAL SEARCH REPORT

International application No.
**PCT/JP2022/021003**

**A. CLASSIFICATION OF SUBJECT MATTER**

***C08F 8/46***(2006.01)i; ***C08F 10/00***(2006.01)i; ***C09D 5/00***(2006.01)i; ***C09D 5/02***(2006.01)i; ***C08F 4/6592***(2006.01)i; ***C08L 23/00***(2006.01)i; ***C09D 123/00***(2006.01)i; ***C09D 123/02***(2006.01)i; ***C09D 123/26***(2006.01)i; ***C09J 123/00***(2006.01)i; ***C09J 123/02***(2006.01)i; ***C09J 123/26***(2006.01)i; ***D06M 15/227***(2006.01)i; ***D06M 15/263***(2006.01)i
FI: C08L23/00; C08F4/6592; C08F8/46; C08F10/00; C09D5/00 D; C09D5/02; C09D123/00; C09D123/02; C09D123/26; C09J123/00; C09J123/02; C09J123/26; D06M15/227; D06M15/263

According to International Patent Classification (IPC) or to both national classification and IPC

**B. FIELDS SEARCHED**

Minimum documentation searched (classification system followed by classification symbols)

C08F8/46; C08F10/00; C09D5/00; C09D5/02; C08F4/6592; C08L23/00; C09D123/00; C09D123/02; C09D123/26; C09J123/00; C09J123/02; C09J123/26; D06M15/227; D06M15/263

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 62-65738 A (MITSUI PETROCHEM IND LTD) 25 March 1987 (1987-03-25) claims, p. 3, lower right column, example 3 | 1, 8, 14-17<br>2-7, 9-13, 18-37 |
| X<br>Y<br>A | WO 2004/101679 A1 (MITSUI CHEMICALS, INC.) 25 November 2004 (2004-11-25) claims, pp. 33-35, examples | 1-19, 23-25<br>35-37<br>20-22, 26-34 |
| Y | WO 2010/074118 A1 (MITSUI CHEMICALS, INC.) 01 July 2010 (2010-07-01) claims, examples | 1-12, 14-23, 26-37 |
| Y | WO 2019/044626 A1 (MITSUI CHEMICALS, INC.) 07 March 2019 (2019-03-07) claims, paragraph [0032] | 1-12, 14-23, 26-37 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 July 2022** | **19 July 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/021003**

**C. DOCUMENTS CONSIDERED TO BE RELEVANT**

| Category* | Citation of document, with indication, where appropriate, of the relevant passages | Relevant to claim No. |
|---|---|---|
| Y | WO 2006/098452 A1 (MITSUI CHEMICALS, INC.) 21 September 2006 (2006-09-21) claims, pp. 20-60 | 35-37 |
| A | JP 1-188550 A (MITSUI PETROCHEM IND LTD) 27 July 1989 (1989-07-27) entire text | 1-37 |
| A | JP 2021-24912 A (MITSUI CHEMICALS, INC.) 22 February 2021 (2021-02-22) entire text | 1-37 |
| A | JP 2010-106178 A (UMG ABS LTD) 13 May 2010 (2010-05-13) entire text | 1-37 |
| A | JP 2016-41793 A (MITSUI CHEMICALS, INC.) 31 March 2016 (2016-03-31) entire text | 1-37 |
| A | WO 2017/195828 A1 (SUMITOMO CHEMICAL COMPANY, LIMITED) 16 November 2017 (2017-11-16) entire text | 1-37 |
| A | JP 2021-25033 A (SANYO CHEMICAL IND LTD) 22 February 2021 (2021-02-22) entire text | 1-37 |
| A | JP 2011-12261 A (EVONIK DEGUSSA GMBH) 20 January 2011 (2011-01-20) entire text | 1-37 |
| P, X | WO 2022/075350 A1 (MITSUI CHEMICALS, INC.) 14 April 2022 (2022-04-14) claims, examples | 1-37 |

Form PCT/ISA/210 (second sheet) (January 2015)

**INTERNATIONAL SEARCH REPORT**
**Information on patent family members**

International application No.
**PCT/JP2022/021003**

| Patent document cited in search report | Publication date (day/month/year) | Patent family member(s) | Publication date (day/month/year) |
|---|---|---|---|
| JP 62-65738 A | 25 March 1987 | US 4749504 A<br>claims, column 3, example 3<br>EP 216615 A2 | |
| WO 2004/101679 A1 | 25 November 2004 | US 2007/0245929 A1<br>claims, pp. 11-12, examples<br>EP 1632532 A1<br>KR 10-2006-0015594 A<br>CN 1788049 A | |
| WO 2010/074118 A1 | 01 July 2010 | US 2011/0257325 A1<br>claims, examples<br>EP 2372018 A1<br>CN 102257209 A<br>KR 10-2011-0104977 A | |
| WO 2019/044626 A1 | 07 March 2019 | US 2021/0078901 A1<br>claims, paragraph [0055]<br>EP 3677639 A1<br>KR 10-2020-0037827 A<br>CN 111051602 A | |
| WO 2006/098452 A1 | 21 September 2006 | US 2008/0085977 A1<br>claims, pp. 8-23<br>EP 1860149 A1<br>CN 101142272 A<br>KR 10-2007-0112153 A | |
| JP 1-188550 A | 27 July 1989 | (Family: none) | |
| JP 2021-24912 A | 22 February 2021 | (Family: none) | |
| JP 2010-106178 A | 13 May 2010 | (Family: none) | |
| JP 2016-41793 A | 31 March 2016 | (Family: none) | |
| WO 2017/195828 A1 | 16 November 2017 | US 2019/0177568 A1<br>whole document<br>EP 3456780 A1<br>CN 109071913 A<br>KR 10-2019-0006971 A | |
| JP 2021-25033 A | 22 February 2021 | (Family: none) | |
| JP 2011-12261 A | 20 January 2011 | US 2011/0003916 A1<br>whole document<br>EP 2277931 A1 | |
| WO 2022/075350 A1 | 14 April 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3939464 B
- JP H31991160083 A
- JP H8199660121 A
- WO 01068785 A
- JP 5844891 B
- WO 2017183672 A
- WO 2019172355 A
- JP H219901163 B
- JP H219907998 B
- JP S611986221207 A
- JP H71995121969 B
- JP 2796376 B
- JP H2199078687 A
- JP H21990167305 A
- JP H2199024701 A
- JP H31991103407 A
- US 4960878 B
- US 5041584 B
- JP H11989501950 A
- JP H11989502036 A
- JP H31991179005 A
- JP H31991179006 A
- JP H31991207703 A
- JP H31991207704 A
- US 5321106 B
- JP 2004051676 A
- JP 2020097743 A
- WO 200487775 A
- JP 3733564 B

### Non-patent literature cited in the description

- Tosoh Research & Technology Review. Tosoh Finechem Corporation, 2003, vol. 47, 55
- Polymer Analysis Handbook. Asakura Publishing Co., Ltd, 2008, 184-211
- **J. C. RANDALL.** *Macromolecules,* 1982, vol. 15, 353
- **J. RAY et al.** *Macromolecules,* 1977, vol. 10, 773
- **OSAWA et al.** *Journal of the Society of Fiber Science and Technology,* 1977, vol. 33 (1